# EUROPÄISCHE PATENTSCHRIFT

(11) **EP 1 762 919 B1**
(45) Veröffentlichungstag und Bekanntmachung des Hinweises auf die Patenterteilung: **01.03.2017**
(21) Anmeldenummer: 06018827.3
(22) Anmeldetag: 08.09.2006
(51) Int. Cl.: G05B 19/4069

(54) **Simulationssystem**
Simulation system
Système de simulation

(30) Priorität: 12.09.2005 DE 102005045028
(43) Veröffentlichungstag der Anmeldung: 14.03.2007
(73) Patentinhaber: Index-Werke GmbH & Co. KG Hahn & Tessky, 73730 Esslingen (DE)
(72) Erfinder: Grossmann, Stefan, 73669 Lichtenwald (DE); Beck, Eberhard, 73773 Aichwald (DE)
(74) Vertreter: Hoeger, Stellrecht & Partner Patentanwälte mbB

(56) Entgegenhaltungen:
- DE-A1- 3 318 512
- DE-A1- 10 114 811
- DE-A1- 10 347 169
- DE-A1- 19 739 559
- US-A- 6 101 425
- "Bedienungsanleitung: SINUMERIK 840 C - Softwarestand 6 - OEM-Variante Windows" 20010101, Bd. 2001, Nr. 9, 1. Januar 2001 (2001-01-01), Seiten 1-302, XP009100494
- "CNC-Programmiersystem NC-Pilot" 20020101, 1. Januar 2002 (2002-01-01), Seiten 1-25, XP009100471
- DENKENA B ET AL: "Fertigungstechnik, Simulation Simulationsmodul für Maschinendynamik im Rahmen eines Fertigungssimulationssystems//Simulation module for machine tool dynamics within the scope of a production simulation system" WERKSTATTSTECHNIK, SPRINGER VERLAG. BERLIN, DE, Bd. 92, Nr. 5, 1. Januar 2002 (2002-01-01), Seiten 223-225, XP009100480 ISSN: 0340-4544
- YINGXUE YAO ET AL: "Web-based virtual machining and measuring cell" COMPUTER SUPPORTED COOPERATIVE WORK IN DESIGN, 2005. PROCEEDINGS OF TH E NINTH INTERNATIONAL CONFERENCE ON COVENTRY, UK MAY 24-26, 2005, PISCATAWAY, NJ, USA,IEEE, Bd. 2, 24. Mai 2005 (2005-05-24), Seiten 673-678, XP010832981 ISBN: 978-1-84600-002-7
- QIN S F ET AL: "Development of a novel 3D simulation modelling system for distributed manufacturing" COMPUTERS IN INDUSTRY, ELSEVIER SCIENCE PUBLISHERS. AMSTERDAM, NL, Bd. 54, Nr. 1, 1. Mai 2004 (2004-05-01), Seiten 69-81, XP004496451 ISSN: 0166-3615

## Beschreibung

Die Erfindung betrifft eine Fertigungseinrichtung für Werkstücke umfassend mindestens einen Fertigungsbereich, in welchem mehrere mit einer Maschinensteuerung versehene Werkzeugmaschinen angeordnet sind, eine Datenverarbeitungseinheit, welche mit den Maschinensteuerungen der Werkzeugmaschinen über einen Kommunikationspfad gekoppelt ist, und mit einem Programm, welches CNC-Bearbeitungsprogrammkomplexe für die Bearbeitung von Werkstücken den Werkzeugmaschinen zur Verfügung stellt.

Die US 6,101,425 offenbart eine Fertigungseinrichtung, mit einem Fertigungsbereich, in welchem mehrere mit einer Maschinensteuerung versehene Werkzeugmaschinen angeordnet sind, wobei außerdem noch Datenverarbeitungseinheiten vorgesehen sind, welche mit den Maschinensteuerungen der Werkzeugmaschinen über einen Kommunikationspfad gekoppelt sind und mit einem Programm versehen sind, welches CNC-Bearbeitungsprogrammkomplexe für die Bearbeitung von Werkstücken den Werkzeugmaschinen zur Verfügung stellt.

Eine erfindungsgemäße Fertigungseinrichtung weist sämtliche Merkmale des Anspruchs 1 auf.

Der Vorteil der erfindungsgemäßen Lösung ist darin zu sehen, dass diese es erlaubt, dem Maschinenbediener, der die Werkzeugmaschinen eines Fertigungsbereichs betreut, zusätzlich ein Simulationssystem an die Hand zu geben, in welchem er CNC-Bearbeitungsprogrammkomplexe erstellen oder prüfen kann oder sich auf ein Einfahren eines CNC-Bearbeitungsprogrammkomplexes auf einer realen Werkzeugmaschine vorbereiten kann, um den Zeitraum für das Einfahren des CNC-Bearbeitungsprogrammkomplexes auf der realen Werkzeugmaschine möglichst kurz zu halten.

Besonders günstig ist es dabei, wenn die Fertigungseinrichtung mehrere Fertigungsbereiche aufweist, die mit dem Fertigungsorganisationssystem gekoppelt sind, so dass mit dem Fertigungsorganisationssystem ein komplexer Fertigungsverbund organisiert werden kann und auch dann die in diesem komplexen Verbund eingesetzten CNC-Bearbeitungsprogrammkomplexe durch das Simulationssystem erstellt, geprüft oder zur Vorbereitung für das Anfahren herangezogen werden können.

Besonders vorteilhaft ist es, wenn dem Fertigungsorganisationssystem mehrere Simulationssysteme zugeordnet sind.

Da jeweils ein Maschinenbediener die Werkzeugmaschinen eines Fertigungsbereichs überwacht, ist es zur Ausnutzung der freien Kapazitäten dieses Maschinenbedieners günstig, wenn das Simulationssystem nicht generell im Zusammenhang mit der Fertigungseinrichtung zur Verfügung steht, sondern einem Fertigungsbereich zugeordnet ist.

Besonders günstig ist es dabei, insbesondere beim Vorsehen von mehreren Fertigungsbereichen, wenn den mehreren Fertigungsbereichen jeweils mindestens eines der Simulationssysteme mit den vorstehend beschriebenen Merkmalen zugeordnet ist.

Damit ist jedoch nicht ausgeschlossen, dass sogar einem Fertigungsbereich mehrere derartiger Simulationssysteme zugeordnet werden können.

Hinsichtlich der Kommunikationspfade wurden bislang keine näheren Angaben gemacht.

So ist es besonders günstig, wenn der Kommunikationspfad zwischen dem Fertigungsorganisationssystem und der mindestens einen Maschinensteuerung und der Kommunikationspfad zwischen dem Fertigungsorganisationssystem und dem jeweiligen Simulationssystem identisch ausgebildet sind, so dass die gleiche Art und Qualität der Kommunikation zwischen dem Fertigungsorganisationssystem und der mindestens einen Maschinensteuerung sowie dem mindestens einen Simulationssystem erreichbar ist.

Um mit dem Simulationssystem möglichst effizient im Zusammenhang mit der erfindungsgemäßen Fertigungseinrichtung arbeiten zu können, ist vorgesehen, dass das Fertigungsorganisationssystem dem Simulationssystem CNC-Bearbeitungsprogrammkomplexe für die Simulation von Aktionen von virtuellen Bearbeitungseinheiten auf einer virtuellen Werkzeugmaschine zur Verfügung stellt.

Damit besteht die Möglichkeit, dieselben CNC-Bearbeitungsprogrammkomplexe, wie sie bei der Bearbeitung von Werkstücken auf den realen Werkzeugmaschinen zum Einsatz kommen sollen, auch für die Simulation mit dem Simulationssystem einzusetzen und auch die mittels des Simulationssystems generierten und/oder geprüften CNC-Bearbeitungsprogrammkomplexe durch Vermittlung seitens des Fertigungsorganisationssystems in realen Maschinensteuerungen der realen Werkzeugmaschinen einzusetzen.

Die Hardwarerealisierung einer derartigen Fertigungseinrichtung sieht vor, dass das Fertigungsorganisationssystem eine Organisationskommunikationseinheit mit mindestens einer Kommunikationsschnittstelle aufweist, und dass die Maschinensteuerung mit der mindestens einen Kommunikationsschnittstelle gekoppelt ist.

Besonders günstig ist es hierbei, wenn die Organisationskommunikationseinheit eine weitere Kommunikationsschnittstelle aufweist, mit welcher das mindestens eine Simulationssystem gekoppelt ist.

Eine besonders günstige Lösung sieht vor, dass die Kommunikationsschnittstelle für das mindestens eine Simulationssystem und die mindestens eine Kommunikationsschnittstelle für die mindestens eine Maschinensteuerung im Wesentlichen identisch ausgebildet sind.

Diese Lösung hat den großen Vorteil, dass damit die Hardwarekonzeption der Fertigungseinheit kostengünstig aufgebaut werden kann, da dieselben Schnittstellen sowohl für die Kommunikation mit der mindestens einen Maschinensteuerung als auch für die Kommunikation mit dem mindestens einen Simulationssystem verwendet werden können.

Ferner ist zweckmäßigerweise vorgesehen, dass die Orgonisationskommunikationseinheit ein Organisationskommunikationsprogramm zur Kommunikation mit der mindestens einen Maschinensteuerung aufweist.

Außerdem ist bei einer zweckmäßigen Lösung vorgesehen, dass die Organisationskommunikationseinheit ein Organisationskommunikationsprogramm zur Kommunikation mit dem mindestens einen Simulationssystem aufweist.

Grundsätzlich könnten diese Kommunikationsprogramme unterschiedlich aufgebaut sein, um eine Anpassung an die unterschiedlichen Funktionalitäten durchzuführen.

Um jedoch die Verwendbarkeit von Informationen und Programmen sowie deren Transfer möglichst einfach zu gestalten, ist zweckmäßigerweise vorgesehen, dass das Organisationskommunikationsprogramm zur Kommunikation mit der mindestens einen Maschinensteuerung im Wesentlichen identisch ist mit dem Organisationskommunikationsprogramm zur Kommunikation mit dem mindestens einen Simulationssystem.

Vorzugsweise ist der jeweiligen Maschinensteuerung eine Kommunikationseinheit mit einem Kommunikationsprogramm zur Kommunikation mit dem Fertigungsorganisationssystem zugeordnet.

In gleicher Weise ist auch dem jeweiligen Simulationssystem eine Kommunikationseinheit mit einem Kommunikationsprogramm zur Kommunikation mit dem Fertigungsorganisationssystem zugeordnet.

Auch hinsichtlich der Kommunikationsprogramme wäre es denkbar, diese aufgrund der unterschiedlichen Anforderungen unterschiedlich zu gestalten. Als besonders vorteilhaft hat es sich jedoch erwiesen, wenn das Kommunikationsprogramm des jeweiligen Simulationssystems mit identischen Datenformaten und Datenspezifikation arbeitet, wie das der jeweiligen Maschinensteuerung zugeordnete Kommunikationsprogramm.

Als besonders günstig hat es sich dabei erwiesen, wenn das Kommunikationsprogramm des Simulationssystems im Wesentlichen identisch ist mit dem Kommunikationsprogramm der jeweiligen Maschinensteuerung.

Besonders günstig ist die erfindungsgemäße Lösung gestaltet, wenn auf das Fertigungsorganisationssystem von den Maschinensteuerung abgearbeitete CNC-Bearbeitungsprogrammkomplexe übertragbar sind, da in diesem Fall dann die Möglichkeit besteht, auf den jeweiligen Maschinensteuerungen gegebenenfalls berichtigte oder korrigierte CNC-Bearbeitungsprogrammkomplexe erneut zu verwenden, wobei diese CNC-Bearbeitungsprogrammkomplexe dann ohne weitere Maßnahmen und Korrekturen einsetzbar sind.

Ferner ist vorzugsweise vorgesehen, dass auf das Fertigungsorganisationssystem von dem jeweiligen Simulationssystem simulierte CNC-Bearbeitungsprogrammkomplexe übertragbar sind, so dass die Möglichkeit besteht, die an dem Simulationssystem generierten oder im Rahmen der Simulation geprüften oder korrigierten CNC-Bearbeitungsprogrammkomplexe unmittelbar für eine reale Maschinensteuerung einer realen Werkzeugmaschine einzusetzen.

Besonders einfach lässt sich die erfindungsgemäße Fertigungseinrichtung dann betreiben, wenn das Fertigungsorganisationssystem von dem jeweiligen Simulationssystem übertragene CNC-Bearbeitungsprogrammkomplexe in derselben Weise verwaltet wie von der mindestens einen Maschinensteuerung übertragene CNC-Bearbeitungsprogrammkomplexe, so dass auf der Ebene des Fertigungsorganisationssystems keine Differenzierung hinsichtlich der Handhabung der CNC-Bearbeitungsprogrammkomplexe erforderlich ist, unabhängig von ihrer Herkunft von Maschinensteuerungen oder Simulationssystemen der Fertigungseinrichtung.

Um das Fertigungsorganisationssystem optimal einsetzen zu können, ist vorzugsweise vorgesehen, dass das Fertigungsorganisationssystem von der mindestens einen Maschinensteuerung Rückmeldungen hinsichtlich der Abarbeitung des jeweiligen CNC-Bearbeitungsprogrammkomplexes in dieser erhält.

Mit derartigen Rückmeldungen kann das Fertigungsorganisationssystem optimal die weitere Fertigung organisieren.

Darüber hinaus ist es noch ebenfalls günstig, wenn das Fertigungsorganisationssystem von dem jeweiligen Simulationssystem Rückmeldungen hinsichtlich der Abarbeitung des jeweiligen CNC-Bearbeitungsprogrammkomplexes erhält, so dass dadurch auch bereits erfassbar ist, wie der CNC-Bearbeitungsprogrammkomplex von dem Simulationssystem abgearbeitet werden kann und ob bei dieser Abarbeitung beispielsweise Störungen oder Verzögerungen aufgrund von Programmfehlern und in diesem Zusammenhang erforderlichen Korrekturen auftreten.

Um die Rückmeldungen optimal in dem Fertigungsorganisationssystem verarbeiten zu können, ist vorzugsweise vorgesehen, dass die Rückmeldungen von der mindestens einen Maschinensteuerung und die Rückmeldungen von dem Simulationssystem eine im Wesentlichen identische Struktur aufweisen.

Darüber hinaus ist es im Rahmen der erfindungsgemäßen Fertigungseinrichtung günstig, wenn das Fertigungsorganisationssystem der mindestens einen Maschinensteuerung Steueranweisungen übermittelt. Mit derartigen Steueranweisungen kann beispielsweise mindestens ein CNC-Bearbeitungsprogrammkomplex von dem Fertigungsorganisationssystem auf die Maschinensteuerung übertragen oder rückübertragen oder ein Start des CNC-Bearbeitungsprogrammkomplexes auf der Maschinensteuerung initiiert werden.

Ferner ist es in diesem Zusammenhang ebenfalls günstig, wenn das Fertigungsorganisationssystem dem jeweiligen Simulationssystem Steueranweisungen übermittelt, die ebenfalls die Hin- und Rückübertragung von CNC-Bearbeitungsprogrammkomplexen zum Gegenstand haben können, oder zumindest die Vorbereitung des Starts von Simulationsvorgängen.

Besonders günstig ist es dabei, wenn die Steueranweisungen für die mindestens eine Maschinensteuerung und die Steueranweisungen für das jeweilige Simulationssystem eine im Wesentlichen identische Struktur aufweisen, so dass auch die Verarbeitung der Steueranweisungen in dem Fertigungsorganisationssystem einheitlich erfolgen können, unabhängig davon, ob sich diese Steueranweisungen an eine Maschinensteuerung oder an ein Simulationssystem wenden.

Zweckmäßigerweise ist bei der erfindungsgemäßen Lösung vorgesehen, dass das Fertigungsorganisationssystem einen Datenspeicher für die CNC-Bearbeitungsprogrammkomplexe aufweist, so dass die CNC-Bearbeitungsprogrammkomplexe in dem Fertigungsorganisationssystem zwischengespeichert und je nach Fertigungsplanung auf die einzelnen Werkzeugmaschinen oder Simulationssysteme transferiert werden können.

Um die Möglichkeit zu schaffen, bei den einzelnen CNC-Bearbeitungsprogrammkomplexen zu erkennen, inwieweit diese nur generiert, geprüft oder bereits in einem laufenden Produktionsprozess geprüft und gegebenenfalls korrigiert wurden, ist vorzugsweise vorgesehen, dass die CNC-Bearbeitungsprogrammkomplexe für das Fertigungsorganisationsprogramm durch ein Eigenschaftenfeld als ungeprüft oder simulationsgeprüft erkennbar sind, so dass die Fertigungseinrichtung die Möglichkeit hat, die nicht geprüften CNC-Bearbeitungsprogrammkomplexe zu erkennen und einem Simulationssystem zu einem gegebenen Zeitpunkt zur Überprüfung zuzuweisen.

In gleicher Weise ist das Fertigungsorganisationsprogramm in der Lage, einen simulationsgeprüften CNC-Bearbeitungsprogrammkomplex zu erkennen und diesen dann zum Einfahren auf einer realen Werkzeugmaschine der realen Maschinensteuerung dieser Werkzeugmaschine zuzuweisen.

Besonders zweckmäßig ist es auch, wenn die CNC-Bearbeitungsprogrammkomplexe für das Fertigungsorganisationsprogramm durch das Eigenschaftenfeld als produktionsgeprüft erkennbar sind, so dass das Fertigungsorganisationsprogramm in der Lage ist, diese Programme zum unmittelbaren Start einer Bearbeitung einer Maschinensteuerung zuzuweisen.

Ferner sieht ein vorteilhaftes Ausführungsbeispiel einer erfindungsgemäßen Fertigungseinrichtung vor, dass das Fertigungsorganisationssystem die CNC-Bearbeitungsprogrammkomplexe werkstückbezogen verwaltet und somit auch werkstückbezogen transferiert, wodurch die gesamte Handhabung der CNC-Bearbeitungsprogrammkomplexe vereinfacht erfolgen kann.

Ferner ist bei dem Simulationssystem der erfindungsgemäßen Fertigungseinrichtung vorgesehen, dass das Simulationssystem eine Bediensteuerung mit einer dritten Datenverarbeitungseinheit umfasst, welche mit einem Bedienprogramm die Aktionssteuerung betreibt und dass das Bedienprogramm eine Programmverwaltungsfunktion aufweist, welche von dem in einem Speicher der dritten Datenverarbeitungseinheit gespeicherten CNC-Bearbeitungsprogrammkomplex zur Ausführung desselben der Aktionssteuerung zumindest Programmteile desselben werkstückbezogen übergibt.

Der Vorteil der erfindungsgemäßen Lösung ist somit darin zu sehen, dass das Bedienprogramm einfacher bedienbar ist, da dieses mit der Programmverwaltungsfunktion die für die Durchführung einzelner Aktionen erforderlichen Programmteile werkstückbezogen oder auftragsbezogen übergibt, so dass der Bediener die Programmteile nicht selbstständig aufrufen, zusammenstellen und der Aktionssteuerung übermitteln muss, sondern dass diese werkstückbezogene Übergabe von der Programmverwaltungsfunktion des Bedienprogramms selbstständig durchgeführt wird.

Unter Bearbeitungseinheiten im Sinne dieser Patentanmeldung sind Einheiten einer Werkzeugmaschine zu verstehen, die auf einem Maschinenbett oder Maschinengestell angeordnet sind und für die Bearbeitung eines Werkstücks erforderlich sind, einschließlich der diesen Einheiten zugeordneten Systemen zur Erzeugung einer Relativbewegung gegenüber dem Maschinenbett oder Maschinengestell.

Derartige Bearbeitungseinheiten umfassen beispielsweise
eine Spindel (Werkstückspindel oder Werkzeugspindel), ein die Spindel lagerndes Gehäuse, einen Spindelantrieb sowie ein Schlittensystem zum Bewegen der Spindeln mit Spindelgehäuse und Spindelantrieb relativ zum Maschinenbett oder Maschinengestell
einen Werkzeugträger, wie zum Beispiel einen gegenüber einem Gehäuse verstellbaren Werkzeugträgerkopf mit einer oder mehreren Werkzeugaufnahmen mit einem gegebenenfalls vorgesehenen Schlittensystem zum Bewegen des Werkzeugträgers relativ zum Maschinenbett oder Maschinengestell
eine Werkstückabstützung, wie zum Beispiel einen Reitstock, mit einem gegebenenfalls zum Bewegen des Reitstocks relativ zum Maschinenbett oder Maschinengestell vorgesehenen Schlittensystem.

Die Darstellung von Aktionen der Bearbeitungseinheiten im Rahmen der erfindungsgemäßen Lösung erfolgt unter Darstellung einer durch das Maschinenmodell vorgegebenen Außenkontur der Bearbeitungseinheit, im Wesentlichen der gesamten Bearbeitungseinheit in Verbindung mit einer durch das Maschinengestell vorgegebenen Außenkontur desselben, gegebenenfalls ergänzt durch die Außenkontur weiterer peripherer Einheiten, wie beispielsweise Werkstückzuführ- und Abfuhreinrichtungen oder Werkstückerkennungs- oder Vermessungseinrichtungen.

Ferner erfolgt die Darstellung der virtuellen Bearbeitungseinheiten und des Maschinengestells oder Maschinenbetts im Wesentlichen dreidimensional, so dass sämtliche räumlichen Kollisionsmöglichkeiten erfassbar und erkennbar sind.

Um das erfindungsgemäße Bedienprogramm nicht wie ein übliches Computerprogramm bedienen zu müssen, sondern um einen erhöhten Bedienungskomfort für die Bedienungsperson zur Verfügung zu stellen, ist vorgesehen, dass der Bediensteuerung eine Maschinensteuertafel zugeordnet ist.

Eine derartige Maschinensteuertafel erlaubt der Bedienungsperson in einer von der Maschinensteuerung her bekannten Weise mit dem CNC-Bearbeitungsprogrammkomplex während der Simulation umzugehen.

Besonders zweckmäßig ist es dabei, wenn mit der Maschinensteuertafel die Bearbeitung des Bedienprogramms über aufrufbare Funktionen steuerbar ist, so dass auch der Umgang mit dem Bedienprogramm durch die zu Funktionen zusammengefassten Programmabläufe des Bedienprogramms vereinfacht ist.

Besonders günstig ist es dabei, wenn die Maschinensteuertafel manuelle Eingabeelemente, vorzugsweise Funktionstasten, mit denen sich die Funktionen aufrufen lassen, für eine Aktivierung einzelner Funktionen des Bedienprogramms aufweist.

Durch die manuelle Betätigung derartiger Eingabeelemente lässt sich die Arbeit mit dem Bedienprogramm insoweit erheblich vereinfachen, als keine Programmbefehle über ein Tastenfeld eingegeben werden müssen, sondern bereits die manuelle Betätigung der Eingabeelemente ausreicht, um über eine Bedienoberfläche des Bedienprogramms die einzelnen Programmbefehle für die einzelnen Funktionen des Bedienprogramms einzugeben.

Darüber hinaus sieht ein vorteilhaftes Ausführungsbeispiel einer erfindungsgemäßen Lösung vor, dass die Maschinensteuertafel manuelle Eingabeelemente zur Einwirkung auf den CNC-Bearbeitungsprogrammkomplex aufweist.

Ein Beispiel einer derartigen Einwirkung auf den CNC-Bearbeitungsprogrammkomplex wäre beispielsweise das Auslösen einer Verfahrbewegung einer ausgewählten Bearbeitungseinheit entsprechend einer manuellen Betätigung der Eingabeelemente, so dass beispielsweise die Bearbeitungseinheit ihre Position verändert.

Eine andere Einwirkung wäre eine Bewegung der Bearbeitungseinheit entsprechend der manuellen Betätigung der Eingabeelemente, beispielsweise das Drehen eines Revolverkopfes.

Eine weitere Möglichkeit der Einwirkung auf den CNC-Bearbeitungsprogrammkomplex wäre beispielsweise das Einschalten eines Antriebs für eine Spindel oder eines Antriebs für ein angetriebenes Werkzeug.

Bei allen diesen Einwirkungen auf den CNC-Bearbeitungsprogrammkomplex sind von dem Bedienprogramm komplexe Vorgänge auszuführen. Zunächst sind die entsprechenden Teileprogramme der Aktionssteuerung zu übergeben, dann sind diese zu starten und schließlich sind die Aktionen der Bearbeitungseinheiten entsprechend der vorgegebenen manuellen Betätigung der Eingabeelemente zu überwachen und dann die entsprechenden Teileprogramme wiederum zu stoppen.

Eine weitere vorteilhafte Lösung sieht vor, dass die Maschinensteuertafel manuelle Eingabeelemente zum Bedienen von Funktionen der Aktionssteuerung aufweist, wobei eine Betätigung dieser manuellen Eingabeelemente dazu führt, dass unmittelbar Funktionen der Aktionssteuerung aktiviert oder gestoppt werden. Ein Beispiel für derartige Funktionen der Aktionssteuerung wäre der unmittelbare Eingriff in den Ablauf eines oder mehrere Teileprogramme durch deren unmittelbaren Stopp oder auch deren unmittelbare Aktivierung in der Aktionssteuerung, wobei in diesem Fall auch die Einwirkung auf die Aktionssteuerung über entsprechende Funktionen des Bedienprogramms erfolgt, die bei Betätigung der manuellen Eingabeelemente direkt aktivierbar sind.

Eine weitere vorteilhafte Ausführungsform eines erfindungsgemäßen Simulationssystems sieht vor, dass die Bediensteuerung mit einem Anzeigefeld der Maschinensteuertafel gekoppelt ist und dass die Bediensteuerung von dem Bedienprogramm zur Anzeige für eine Bedienungsperson vorgesehene Informationen auf dem Anzeigefeld darstellt.

Auch mit einem derartigen Anzeigefeld wird die Bedienung des Simulationssystems weiter vereinfacht, da damit die Möglichkeit besteht, von dem Bedienprogramm ausgewählte Informationen zusätzlich zu der virtuellen Werkzeugmaschine mit den virtuellen Bearbeitungseinheiten darzustellen.

Die Maschinensteuertafel kann als Hardwarekomponente dem erfindungsgemäßen Visualisierungssystem zugeordnet sein.

Eine besonders vorteilhafte Lösung sieht jedoch vor, dass die Maschinensteuertafel eine virtuelle, auf einer Visualisierungseinheit dargestellte Maschinensteuertafel ist. Diese Lösung hat den großen Vorteil, dass sich das Aussehen und insbesondere die Anordnung der Eingabeelemente der Maschinensteuertafel durch Softwareänderungen jeweils den Anforderungen des CNC-Bearbeitungsprogrammkomplexes oder auch insbesondere den Anforderungen der Bedienungsperson hinsichtlich des Bedienungskomforts anpassen lassen.

Insbesondere besteht die Möglichkeit, das Simulationssystem so auszubilden, dass die virtuelle Maschinensteuertafel stets das Aussehen der realen an der Werkzeugmaschine vorgesehenen Maschinensteuertafel hat.

Somit lässt sich das erfindungsgemäße Simulationssystem je nach der für den CNC-Bearbeitungsprogrammkomplex vorgesehenen Werkzeugmaschine auch hinsichtlich der Bedienmöglichkeiten des Bedienprogramms und der vorgesehenen Funktionen, insbesondere der vorgesehenen Eingabeelemente, an die jeweiligen Bedingungen der Werkzeugmaschine anpassen, so dass die Möglichkeit besteht, der Bedienungsperson auf dem Simulationssystem stets die Maschinensteuertafel zur Verfügung zu stellen, die die Bedienungsperson auch an der Werkzeugmaschine vorfindet, für die der CNC-Bearbeitungsprogrammkomplex konzipiert ist oder konzipiert werden muss.

Um nun auch bei einer derartigen virtuellen Maschinensteuertafel die Möglichkeit manueller Eingaben vorzusehen, ist es besonders zweckmäßig, wenn die manuellen Eingabeelemente der virtuellen Maschinensteuertafel durch einen Cursor der Visualisierungseinheit manuell betätigbar sind.

Hinsichtlich der Arbeitsweise der Programmverwaltungsfunktion wurden bislang keine näheren Angaben gemacht.

So sieht ein vorteilhaftes Ausführungsbeispiel vor, dass die Programmverwaltungsfunktion des Bedienprogramms Teileprogramme des CNC-Bearbeitungsprogrammkomplexes werkstückbezogen verwaltet.

Diese Lösung hat den Vorteil, dass die Programmverwaltungsfunktion stets die Teileprogramme, die ein Werkstück oder einen Auftrag betreffen, gemeinsam verwaltet, so dass die Bedienungsperson nicht mehr die Notwendigkeit hat, die einzelnen, zu einem Werkstück gehörenden Teileprogramme aufzufinden und jeweils entsprechend zu verwalten.

Besonders günstig ist es, wenn die Programmverwaltungsfunktion des Bedienprogramms Teileprogramme des CNC-Bearbeitungsprogrammkomplexes werkstückbezogen speichert, so dass auch das Abspeichern und spätere Auffinden der Teileprogramme vereinfacht ist.

Ferner ist auch die Sicherung der Teileprogramme vereinfacht, wenn die Programmverwaltungsfunktion des Bedienprogramms Teileprogramme des CNC-Bearbeitungsprogrammkomplexes werkstückbezogen sichert, das heißt insbesondere auf einem externen Datenspeicher, sichert.

Ferner sieht eine vorteilhafte Lösung vor, dass die Programmverwaltungsfunktion des Bedienprogramms Teileprogramme des CNC-Bearbeitungsprogrammkomplexes werkstückbezogen der Aktionssteuerung übermittelt.

Besonders günstig ist es hierbei, wenn die Programmverwaltungsfunktion des Bedienprogramms Teileprogramme des CNC-Bearbeitungsprogrammkomplexes werkstückbezogen auf einzelne Kanäle der Aktionssteuerung verteilt und aktiviert.

Das heißt, dass in diesem Fall die Programmverwaltungsfunktion selbsttätig die einzelnen Kanäle des Steuerprogramms der Aktionssteuerung erkennt und diesen einzelnen Kanälen dann auch die entsprechenden Teileprogramme zuordnet.

Hinsichtlich der einzelnen weiteren Funktionen des Bedienprogramms wurden im Zusammenhang mit der bisherigen Erläuterung der einzelnen Ausführungsbeispiele keine näheren Angaben gemacht.

So sieht alternativ oder ergänzend zu den bislang beschriebenen Ausführungsformen des erfindungsgemäßen Simulationssystems ein vorteilhaftes Simulationssystem vor, dass das Bedienprogramm eine Programmbearbeitungsfunktion umfasst, mit welcher durch einen Zugriff zumindest auf Programmteile des CNC-Bearbeitungsprogrammkomplexes der CNC-Bearbeitungsprogrammkomplex veränderbar ist.

Eine derartige Ausbildung eines Simulationssystems eröffnet bislang im Zusammenhang mit Simulationssystemen nicht bekannte Möglichkeiten, da die bisher bekannten Simulationssysteme keine Möglichkeit hatten, den CNC-Bearbeitungsprogrammkomplex als Ganzes oder auch Programmteile desselben in irgendeiner Weise zu bearbeiten.

Damit erübrigt sich das gemäß dem Stand der Technik notwendige ständige Wechselspiel zwischen dem Programmierplatz und dem Simulationssystem, so dass eine erhebliche Steigerung der Bedienungsfreundlichkeit des Simulationssystems möglich ist.

Besonders günstig ist es, wenn die Programmbearbeitungsfunktion einen Programmerstellungsmodus umfasst.

Ein derartiger Programmerstellungsmodus bietet den Vorteil, bei dem erfindungsgemäßen Programmiersystem unmittelbar auf diesem Teile des CNC-Bearbeitungsprogrammkomplexes zu erstellen oder zu korrigieren, so dass beim Erkennen von nicht gewünschten Aktionen bei der Simulation in einfacher Weise die Möglichkeit besteht, die Aktionen zu ändern oder andere alternative Aktionen auszutesten.

Weiterhin ist es vorteilhaft, wenn die Programmbearbeitungsfunktion einen Eingabemodus für Korrekturwerte umfasst.

Derartige Korrekturwerte können beispielsweise Korrekturen für Positionen von Bearbeitungseinheiten oder auch für einzelne Funktionsweisen der Bearbeitungseinheiten, wie beispielsweise Drehzahlen sein.

Damit besteht die Möglichkeit, bereits im Verlauf der Simulation den CNC-Bearbeitungsprogrammkomplex weitgehend werkzeugmaschinennah zu vervollständigen.

Die Bearbeitung des CNC-Bearbeitungsprogrammkomplexes wird ferner noch dadurch erleichtert, wenn die Programmbearbeitungsfunktion eine Programmänderung selbstständig in den CNC-Bearbeitungsprogrammkomplex übernimmt, so dass die Bedienungsperson hierfür nicht ausdrücklich Sorge tragen muss.

Ferner ist es vorteilhaft, wenn die Programmbearbeitungsfunktion die in der Aktionssteuerung vorhandenen Teileprogramme selbstständig in die Bediensteuerung zur Änderung zurücklädt.

Diese Funktion hat den großen Vorteil, dass die Bedienungsperson nicht - wie bei bekannten Simulationssystemen - die einzelnen Teilprogramme aufrufen und an den Programmierplatz zurücktransferieren muss. Vielmehr wird unmittelbar bei Aufruf der Programmbearbeitungsfunktion dann, wenn das jeweilige Teileprogramm in der Aktionssteuerung geladen ist, das Teileprogramm aus der Aktionssteuerung in die Bediensteuerung zur Änderung zurückgeladen und dann gegebenenfalls wiederum in die Aktionssteuerung geladen.

Um mit dem erfindungsgemäßen Simulationssystem den CNC-Bearbeitungsprogrammkomplex möglichst werkzeugmaschinenlauffähig erstellen zu können, ist zweckmäßigerweise vorgesehen, dass die Programmbearbeitungsfunktion einen Eingabemodus für Werkzeuge umfasst.

Mit einem derartigen Eingabemodus für Werkzeuge lassen sich zusätzlich noch die verwendeten Werkzeuge definieren und dann auch in der Simulation als virtuelle Werkzeuge darstellen.

Damit wird auch die Qualität der Simulation und Funktionsbeurteilung im Rahmen der Simulation erheblich verbessert, da auch die räumlichen Auswirkungen der Werkzeuge auf die Bewegungen der einzelnen Bearbeitungseinheiten bereits im Rahmen der Simulation abgeprüft werden können.

Um den CNC-Bearbeitungsprogrammkomplex möglichst weitgehend maschinenlauffähig gestalten zu können, ist bei einer Ausführungsform des erfindungsgemäßen Simulationssystems vorgesehen, dass die Programmbearbeitungsfunktion einen Eingabemodus für Werkzeugkorrekturen umfasst, so dass auch bereits die durch die eingesetzten Werkzeuge erforderlichen Korrekturen ebenfalls in den CNC-Bearbeitungsprogrammkomplex aufgenommen werden können und auch bei der Simulation Berücksichtigung finden.

Um mit dem erfindungsgemäßen Simulationssystem eine hinsichtlich der Bedienung erleichterte Elimination von Fehlern im CNC-Bearbeitungsprogrammkomplex durchführen zu können, ist vorzugsweise vorgesehen, dass das Bedienprogramm eine Analysefunktion umfasst.

Mit einer derartigen Analysefunktion wird das Lokalisieren und Bestimmen von Fehlern im CNC-Bearbeitungsprogrammkomplex, insbesondere in Teileprogrammen desselben, erheblich erleichtert und somit auch zeitsparender durchführbar.

Vorzugsweise ist dabei vorgesehen, dass in einem Identifikationsmodus der Analysefunktion ein aktuell in der Aktionssteuerung bearbeiteter NC-Satz identifizierbar ist, so dass damit die Möglichkeit besteht, beim Erkennen eines Fehlers im Laufe der Simulation diesen NC-Satz, obwohl dieser aktuell in der Aktionssteuerung bearbeitet wird, zu markieren und damit diesen NC-Satz später wieder leichter auffinden zu können, um die einzelnen Abläufe im Detail überprüfen zu können.

Eine weitere vorteilhafte Lösung sieht vor, dass in einem Anzeigemodus der Analysefunktion der mindestens eine zur Zeit aktive Programmbefehl anzeigbar ist. Durch das Anzeigen des Programmbefehls besteht auch die Möglichkeit, den Fehler im Programm, der beispielsweise im Rahmen der Simulation erkannt wird, schneller zu lokalisieren und durch eine geeignete Korrektur zu eliminieren.

Eine weitere vorteilhafte Lösung sieht vor, dass in einem Parameteranzeigemodus der Analysefunktion mindestens ein Parameter mindestens einer der virtuellen Bearbeitungseinheiten anzeigbar ist.

Derartige Parameter der virtuellen Bearbeitungseinheiten sind beispielsweise Achspositionen derselben, es können derartige Parameter aber auch Drehzahlen, beispielsweise einer Werkstückspindel, oder Drehzahlen angetriebener Werkzeuge oder Stellungen von Revolvern der Bearbeitungseinheiten sein.

Im Zusammenhang mit der bisherigen Erläuterung der einzelnen Ausführungsbeispiele des erfindungsgemäßen Simulationssystems wurden hinsichtlich des erfindungsgemäß verwendeten Bedienprogramms keine näheren Angaben gemacht. Grundsätzlich besteht im Rahmen der erfindungsgemäßen Lösung die Möglichkeit, ein eigenständiges Bedienprogramm zu schreiben, das werkzeugmaschinenfremd ist und dieses Bedienprogramm mit einem oder mehreren der vorstehend beschriebenen Merkmale zu versehen.

So sieht eine besonders vorteilhafte Lösung vor, dass das Bedienprogramm dem Bedienprogramm der realen Werkzeugmaschine entspricht.

Diese Lösung hat den großen Vorteil, dass keinerlei Programmieraufwand zur Erstellung des Bedienprogramms erforderlich ist, sondern dass unmittelbar das Bedienprogramm von der realen Werkzeugmaschine übernommen werden kann.

Darüber hinaus hat die Verwendung eines derartigen Bedienprogramms den großen Vorteil, dass die Bedienungsperson keinerlei Umstellung benötigt, da diese üblicherweise mit dem Bedienprogramm der Werkzeugmaschine vertraut ist und somit auf dem Simulationssystem dasselbe Bedienprogramm mit denselben Funktionen vorfindet, so dass die Bedienungsperson in der Lage ist, aufgrund ihrer Kenntnis des Bedienprogramms der realen Werkzeugmaschine ohne weitere Schulung mit dem Simulationssystem zu arbeiten und dabei alle Bedienungserleichterungen, die das Bedienprogramm der realen Werkzeugmaschine gewährt, kennt und anwenden kann.

Um bei einem derartigen Bedienprogramm das Steuerungsprogramm betreiben zu können, ist es erforderlich, dass das Bedienprogramm zur Kommunikation mit dem Steuerungsprogramm mit einem Anpassprogramm zusammenwirkt, das jeweils die Wechselwirkung zwischen dem Bedienprogramm und dem Steuerungsprogramm sicherstellt.

Hinsichtlich der Ausbildung des Steuerungsprogramms der Aktionssteuerung wurden bislang ebenfalls keine näheren Angaben gemacht. So sieht eine vorteilhafte Lösung vor, dass das Steuerungsprogramm ein werkzeugmaschinenfremdes Steuerungsprogramm ist, so dass sich dieses Steuerungsprogramm entsprechend den Anforderungen des Simulationssystems erstellen lässt.

In diesem Fall ist vorgesehen, dass das Anpassprogramm das Bedienprogramm an das werkzeugmaschinenfremde Steuerungsprogramm anpasst.

Alternativ dazu sieht eine bevorzugte Lösung vor, dass das Steuerungsprogramm der Aktionssteuerung das Kernsteuerungsprogramm der realen Werkzeugmaschine zur Erzeugung der Steuerbefehle umfasst.

Diese Lösung hat einerseits den großen Vorteil, dass damit der Aufwand entfällt, das Kernsteuerungsprogramm als eigenständiges Programm zu erstellen. Vielmehr kann das Kernsteuerungsprogramm von der realen Werkzeugmaschine unmittelbar übernommen werden.

Ein derartiges Simulationssystem hat den Vorteil, dass damit die Möglichkeit besteht, die Simulation mit denselben Funktionsweisen und demselben Funktionsverhalten, wie sie durch das Kernsteuerungsprogramm der realen Werkzeugmaschine gegeben sind, durchzuführen und somit die Simulation des CNC-Bearbeitungsprogrammkomplexes werkzeugmaschinennah durchzuführen und somit einen möglichst weitgehend auf der realen Werkzeugmaschine lauffähigen CNC-Bearbeitungsprogrammkomplex zu erstellen.

Besonders günstig ist es hierbei, wenn die erste Datenverarbeitungseinheit eine Programmumgebung aufweist, auf welcher das Kernsteuerungsprogramm der realen Werkzeugmaschine arbeitet und Steuerbefehle erzeugt, die Steuerbefehlen der realen Werkzeugmaschine entsprechen, so dass auch die virtuellen Bearbeitungseinheiten sich weitgehend entsprechend den realen Bearbeitungseinheiten verhalten und sich insbesondere auch dynamische Vorgänge bei der Bewegung der Bearbeitungseinheiten relativ zueinander bei der Simulation austesten lassen.

In diesem Fall ist zweckmäßigerweise vorgesehen, dass das Anpassprogramm, insbesondere wenn das Bedienprogramm dem der realen Werkzeugmaschine entspricht, dem Kommunikationsprogramm der realen Bediensteuerung der Werkzeugmaschine entspricht, so dass auch dieses Anpassprogramm identisch von der realen Werkzeugmaschine übernommen werden kann.

Hinsichtlich der Datenverarbeitungseinheiten wurden bislang keine näheren Angaben gemacht.

Prinzipiell ist es denkbar, das Simulationssystem mit drei voneinander getrennten Datenverarbeitungseinheiten zu betreiben.

Besonders günstig ist es jedoch, wenn die erste Datenverarbeitungseinheit und die zweite Datenverarbeitungseinheit mit demselben Prozessor arbeiten, so dass sich die Zahl der einzusetzenden Prozessoren verringern lässt.

Noch vorteilhafter ist es, wenn die erste, zweite und dritte Datenverarbeitungseinheit mit demselben Prozessor arbeiten.

Ferner lässt sich das erfindungsgemäße Simulationssystem werkzeugmaschinenfremd aufbauen und einsetzen, das heißt, dass die erste Datenverarbeitungseinheit, und/oder die zweite Datenverarbeitungseinheit und/oder die dritte Datenverarbeitungseinheit werkzeugmaschinenfremde Datenverarbeitungseinheiten sind.

Eine weitere günstige Lösung sieht jedoch vor, dass die dritte Datenverarbeitungseinheit den der Bediensteuerung der realen Werkzeugmaschine zugeordneten Prozessor einsetzt.

Das heißt, dass in diesem Fall das Simulationssystem den Prozessor der Bediensteuerung der realen Werkzeugmaschine mit verwendet und somit die dritte Datenverarbeitungseinheit über die Bediensteuerung der realen Werkzeugmaschine betrieben werden kann.

Die anderen Datenverarbeitungseinheiten können dabei werkzeugmaschinenfremde Prozessoren einsetzen.

Noch vorteilhafter ist es bei dieser Lösung, wenn die zweite Datenverarbeitungseinheit den der Bediensteuerung der realen Werkzeugmaschine zugeordneten Prozessor einsetzt.

Eine noch günstigere Lösung sieht vor, dass die erste Datenverarbeitungseinheit den der Bediensteuerung der realen Werkzeugmaschine zugeordneten Prozessor einsetzt.

In diesem Fall läuft das erfindungsgemäße Simulationssystem vollständig auf der Bediensteuerung der realen Werkzeugmaschine, so dass mit der Bediensteuerung der realen Werkzeugmaschine gleichzeitig eine Simulation des CNC-Bearbeitungsprogrammkomplexes durchgeführt werden kann.

Hinsichtlich der Visualisierungseinheiten wurden bislang ebenfalls keine näheren Angaben gemacht.

So sieht beispielsweise eine Ausführungsform der erfindungsgemäßen Lösung vor, dass die Visualisierungseinheit für die Darstellung der virtuellen Bearbeitungseinheiten und die Visualisierungseinheit für die Darstellung der virtuellen Maschinensteuertafel getrennte Einheiten sind.

Diese Lösung hat den Vorteil, dass damit für die virtuelle Maschinensteuertafel eine separate Visualisierungseinheit zur Verfügung steht, insbesondere um die einzelnen Elemente der virtuellen Maschinensteuertafel im geeigneten Maßstab darstellen zu können.

Eine alternative Lösung hierzu sieht vor, dass die Visualisierungseinheit für die Darstellung der virtuellen Bearbeitungseinheiten und die Visualisierungseinheit für die Darstellung der virtuellen Maschinensteuertafel identisch sind. Bei dieser Lösung besteht die Möglichkeit, insbesondere bereits vorhandenen Systeme mit einer einzigen Virtualisierungseinheit vorzusehen.

Zweckmäßigerweise ist dabei vorgesehen, dass die Darstellung der Aktionen der virtuellen Bearbeitungseinheiten und die Darstellung der virtuellen Maschinensteuertafel zumindest teilweise überlagert erfolgt, wobei die beiden Darstellungen zweckmäßigerweise gegeneinander verschoben sind, so dass insbesondere die Darstellung der virtuellen Maschinensteuertafel nicht den Blick auf die Aktionen der virtuellen Bearbeitungseinheiten verdeckt.

Die Erfindung betrifft ferner ein Verfahren zum Betreiben einer Fertigungseinrichtung für Werkstücke, umfassend die Merkmale des Anspruchs 72.

Weitere vorteilhafte Weiterbildungen dieses Verfahrens sind Gegenstand der Ansprüche 71 bis 130.

Das erfindungsgemäße Verfahren hat somit dieselben Vorteile wie die vorstehend beschriebene erfindungsgemäße Fertigungseinrichtung.

Darüber hinaus lässt sich das erfindungsgemäße Verfahren in derselben Weise weiterbilden, wie die vorstehend beschriebene und im Einzelnen erläuterte Fertigungseinrichtung.

Weitere Merkmale und Vorteile der erfindungsgemäßen Lösung sind ferner Gegenstand der nachfolgenden Beschreibung sowie der zeichnerischen Darstellung einiger Ausführungsbeispiele.

In der Zeichnung zeigen:
- Figur 1: eine schematische Darstellung einer Gerätekonfiguration eines ersten Ausführungsbeispiels eines erfindungsgemäßen Simulationssystems;
- Figur 2: eine schematische Darstellung einer Programmkonfiguration des ersten Ausführungsbeispiels des erfindungsgemäßen Simulationssystems;
- Figur 3: eine schematische Darstellung der Gerätekonfiguration entsprechend Figur 1 bei einem zweiten Ausführungsbeispiel eines erfindungsgemäßen Simulationssystems;
- Figur 4: eine schematische Darstellung der Programmkonfiguration entsprechend Figur 2 bei dem zweiten Ausführungsbeispiel des erfindungsgemäßen Simulationssystems;
- Figur 5: eine schematische Darstellung der Gerätekonfiguration entsprechend Figur 1 bei einem dritten Ausführungsbeispiel eines erfindungsgemäßen Simulationssystems;
- Figur 6: eine schematische Darstellung der Gerätekonfiguration entsprechend Figur 1 bei einem vierten Ausführungsbeispiel eines erfindungsgemäßen Simulationssystems und
- Figur 7: eine schematische Darstellung eines Ausführungsbeispiels einer erfindungsgemäßen Fertigungseinrichtung.

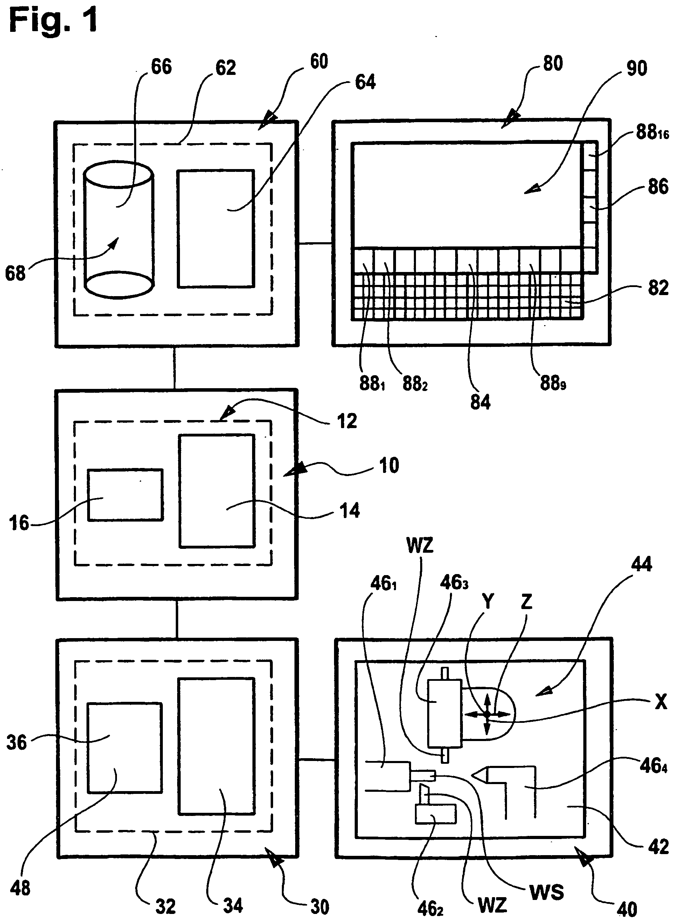

Ein in Figur 1 dargestelltes erstes Ausführungsbeispiel eines erfindungsgemäßen Simulationssystems umfasst, wie in Figur 1 dargestellt, eine als Ganzes mit 10 bezeichnete Aktionssteuerung, mit einer ersten Datenverarbeitungseinheit 12, welche beispielsweise einen Prozessor 14 und einen Speicher 16 aufweist, wobei der Speicher 16 als Speicher mit schnellem Zugriff ausgebildet ist, das heißt beispielsweise ein RAM-Speicher ist.

Auf der Datenverarbeitungseinheit 12 läuft ein Steuerungsprogramm 18, welches in der Lage ist, CNC-Sätze von einem oder mehreren Teileprogrammen 20, beispielsweise von den Teileprogrammen 20₁ bis 20₄ abzuarbeiten, wobei die Teileprogramme 20₁ bis 20₄ einzelnen Kanälen 22₁ bis 22₄ des Steuerungsprogramms 18 zugeordnet sind und die parallele Abarbeitung der einzelnen Programme 20₁ bis 20₄ erlauben, die entweder unabhängig voneinander erfolgt oder durch Synchronisierbefehle synchronisiert werden kann.

In jedem der Kanäle 22₁ bis 22₄ werden Steuerbefehle 24₁ bis 24₄ ermittelt, die dazu dienen, Aktionen von Bearbeitungseinheiten zu veranlassen und gegebenenfalls zu steuern. Beispielsweise ist jeweils ein Kanal einer Funktionsweise einer Bearbeitungseinheit, beispielsweise einer Bewegungsachse der Bearbeitungseinheit oder einer Drehposition einer Werkstückspindel, zugeordnet.

Da das erfindungsgemäße Simulationssystem nicht mit einer realen Werkzeugmaschine und somit realen Bearbeitungseinheiten arbeitet, ist eine als Ganzes mit 30 bezeichnete Visualisierungssteuerung vorgesehen, welche eine zweite Datenverarbeitungseinheit 32 aufweist, welche beispielsweise ebenfalls einen Prozessor 34 umfasst, der aufgrund eines in einem Speicher 36 durch Konfigurationsdaten gespeicherten Maschinenmodells 48 in der Lage ist, eine erste Visualisierungseinheit 40 derart anzusteuern, dass diese auf einem Bildschirm 42 eine virtuelle Werkzeugmaschine 44 zeigt, welche virtuelle Bearbeitungseinheiten 46₁ bis 46₄ umfasst.

Beispielsweise ist die virtuelle Bearbeitungseinheit 46₁ eine Werkstückspindel, in welcher ein Werkstück WS aufnehmbar ist.

Beispielsweise sind die Bearbeitungseinheiten 46₂ und 46₃ jeweils selbstständig bewegbare Werkzeugträger mit einer Vielzahl virtueller Werkzeuge WZ, die durch Bewegungen der Werkzeugträger längs von für diese vorgesehenen Bewegungsachsen X, Y, Z in eine Arbeitsposition bringbar sind.

Schließlich kann eine weitere Bearbeitungseinheit 46₄ ein Reitstock sein.

Es ist aber auch denkbar, anstelle des Reitstocks als Bearbeitungseinheit 46₄ eine Gegenspindel zur Werkstückspindel 46₁ vorzusehen.

Beispielsweise ist dabei das Steuerprogramm 18 mit den Kanälen 22₁ bis 22₄ so konfiguriert, dass jeder der Kanäle 22₁ bis 22₄ das ihm zugeordnete Teileprogramm 20₁ bis 20₄ abarbeitet, wobei die dadurch generierten Steuerbefehle 24₁ bis 24₄ jeweils zur Steuerung einer der Bearbeitungseinheiten 46₁ bis 46₄ vorgesehen sind.

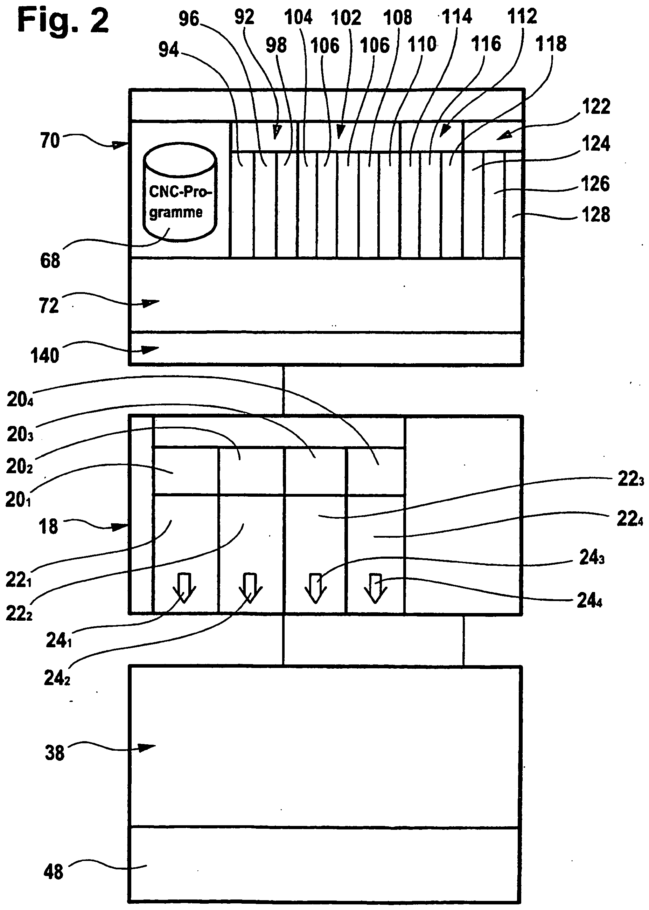

Die Visualisierungssteuerung 30 generiert nun mit einem in Figur 2 dargestellten Visualisierungsprogramm 38 auf der Basis des in dem Speicher 36 in Form von Konfigurationsdaten gespeicherten Maschinenmodells 48 die virtuellen Bearbeitungseinheiten 46₁ bis 46₄ auf dem Bildschirm 42 als solche mitsamt den durch die Steuerbefehle 24₁ bis 24₄ vorgegebenen Aktionen, beispielsweise in Form von Relativbewegungen der Bearbeitungseinheiten 46₁ bis 46₄ oder Eigenbewegungen der Bearbeitungseinheiten 46₁ bis 46₄, die beispielsweise ein rotierendes Antreiben des Werkstücks WS in der Werkstückspindel 46₁ oder ein Antreiben eines der Werkzeuge WZ oder ein Bewegen eines Revolverkopfes der Bearbeitungseinheit 46₃ umfassen können.

Die Aktionssteuerung 10 ist, wie in Figur 1 dargestellt, durch eine Bediensteuerung 60 steuerbar, welche eine dritte Datenverarbeitungseinheit 62 aufweist, die ihrerseits beispielsweise einen Prozessor 64 und einen Speicher 66 für einen oder mehrere CNC-Bearbeitungsprogrammkomplexe 68 umfasst. In dem Speicher 66 ist daher der gesamte für die Simulation vorgesehene CNC-Bearbeitungsprogrammkomplex 68 gespeichert.

Auf der dritten Datenverarbeitungseinheit 62 läuft ein als Ganzes mit 70 bezeichnetes und in Figur 2 schematisch dargestelltes Bedienprogramm, welches eine Bedienoberfläche 72 aufweist, die mit einer als Ganzes mit 80 bezeichneten Maschinensteuertafel zusammenwirkt, die beispielsweise ein übliches Tastenfeld 82 sowie Reihen 84 und 86 von Funktionstasten 88₁ bis 88₁₆ umfasst.

Sowohl über das Tastenfeld 82 als auch über die Funktionstasten 88 besteht die Möglichkeit, über die Bedienoberfläche 72 einzelne Funktionsabläufe oder Modi des Bedienprogramms 70 aufzurufen und/oder zu aktivieren.

Ferner ist der Maschinensteuertafel 80 vorzugsweise noch ein Anzeigefeld 90 zugeordnet, welches die Anzeige von von dem Bedienprogramm 70 ermittelten Informationen ermöglicht.

Vorzugsweise ist dabei das Anzeigefeld 90 von der Bedienoberfläche 72 ansteuerbar.

Das Bedienprogramm 70 umfasst beispielsweise eine in Figur 2 als Ganzes mit 92 bezeichnete Programmverwaltungsfunktion, welche in der Lage ist, den im Speicher 66 gespeicherten CNC-Bearbeitungsprogrammkomplex 68 werkstückbezogen zu verwalten, das heißt, dass die Programmverwaltungsfunktion 92 die einzelnen Teileprogramme 20 des CNC-Bearbeitungsprogrammkomplexes 68 derart verwaltet, dass die zu einem Werkstück WS gehörenden Teileprogramme 20 entsprechend ihrer funktionalen Zusammengehörigkeit verarbeitet werden.

So sieht beispielsweise ein Transfermodus 94 der Programmverwaltungsfunktion 92 vor, dass die zu demselben Werkstück gehörenden Teileprogramme 20 zur Simulation der Bearbeitung dieses Werkstücks WS in ihrem funktionalen Zusammenhang von der Bediensteuerung 60 zur Aktionssteuerung 10 transferiert werden und dabei werkstückbezogen dem Steuerungsprogramm 18 übergeben werden, also beispielsweise den einzelnen Kanälen 22 des Steuerungsprogramms 18 funktionsrichtig zugeordnet und entsprechend aktiviert werden.

In gleicher Weise ist die Transferfunktion 94 auch in der Lage, beispielsweise nach Beendigung der Simulation einer Bearbeitung, die dem einzelnen Werkstück WS zugeordneten Teileprogramme 20 wiederum von der Aktionssteuerung 10 auf die Bediensteuerung 60 zurück zu transferieren und im Zusammenhang mit dem jeweiligen Werkstück WS in dem Speicher 66 abzulegen.

Die Programmverwaltungsfunktion 92 umfasst beispielsweise zusätzlich noch einen Sicherungsmodus 96, welcher beispielsweise in der Lage ist, eine externe Sicherung der werkstückbezogenen Teileprogramme zu veranlassen.

Ein weiterer Modus der Programmverwaltungsfunktion 92 ist beispielsweise noch ein Start/Stopp-Modus 98, in welchem die Programmverwaltungsfunktion 92 des Bedienprogramms 70 direkt in die Aktionssteuerung 10 eingreift, um die einzelnen Teileprogramme 20 zur Abarbeitung nach einem vordefinierten Schlüssel zu starten oder zu stoppen.

Der Start/Stopp-Modus 98 kann aber auch unmittelbar dazu eingesetzt werden, einzelne Teileprogramme 20 unabhängig von dem vordefinierten Schlüssel für die Abarbeitung zu starten und zu stoppen, beispielsweise aufgrund des Betätigens einer der Funktionstasten 88 der Maschinensteuertafel 80. So kann beispielsweise die Funktionstaste 88₁ dazu eingesetzt werden, ein angewähltes Teileprogramm zu starten und die Funktionstaste 88₂ dazu eingesetzt werden, ein ausgewähltes Teileprogramm zu stoppen.

Außerdem umfasst das Bedienprogramm 70 beispielsweise noch eine Programmbearbeitungsfunktion 102, mit welcher vielfältige Eingriffe in den CNC-Bearbeitungsprogrammkomplex 68 möglich sind.

So sieht beispielsweise ein Programmerstellungsmodus 104 vor, dass über die Maschinensteuertafel 80, beispielsweise das Tastenfeld 82 eine Programmerstellung durch Eingabe von CNC-Sätzen oder eine Programmkorrektur durch Einfügung oder Löschung von CNC-Sätzen möglich ist.

Ferner umfasst die Programmbearbeitungsfunktion 102 beispielsweise noch einen Eingabemodus 106 zur Eingabe von Korrekturwerten, beispielsweise für Betriebsparameter oder Positionen der Bearbeitungseinheiten 46.

Ein weiterer Modus der Programmbearbeitungsfunktion 102 ist beispielsweise ein Eingabemodus 108 für Werkzeuge, der es erlaubt, den einzelnen Bearbeitungseinheiten 46 Werkzeuge WZ zuzuordnen, wobei mit der Zuordnung gleichzeitig dem CNC-Bearbeitungsprogrammkomplex 68 Werkzeugparameter für diese Werkzeuge WZ übergeben werden.

Schließlich sieht ein Eingabemodus 110 noch die Möglichkeit der Eingabe von Korrekturwerten für ausgewählte Werkzeuge WZ vor.

Mit der Programmbearbeitungsfunktion 102 besteht die Möglichkeit, den CNC-Bearbeitungsprogrammkomplex im Zusammenhang mit der Simulation weitgehend werkzeugmaschinenlauffähig zu erstellen, so dass sich der CNC-Bearbeitungsprogrammkomplex direkt auf die Werkzeugmaschine zur Bearbeitung übernehmen lässt.

Darüber hinaus umfasst eine vorteilhafte Ausführungsform des erfindungsgemäßen Bedienprogramms 70 noch eine Analysefunktion 112, welche dazu dient, Fehler im CNC-Bearbeitungsprogrammkomplex zu erkennen.

Die Analysefunktion 112 schafft eine Vielzahl von Möglichkeiten, die das Auffinden von Programmfehlern, insbesondere im Verlauf der Simulation, erleichtern.

So umfasst die Analysefunktion 112 vorzugsweise einen Identifikationsmodus 114 für einen aktuell bearbeiteten NC-Satz, mit welchem dieser aktuell von der Aktionssteuerung in einem der Kanäle 22 bearbeitete NC-Satz markierbar ist, um diesen später erkennen zu können.

Ferner umfasst die Analysefunktion 112 vorzugsweise einen Anzeigemodus 116, mit welchem diese in der Lage ist, den mindestens einen zur Zeit aktiven Programmbefehl anzuzeigen. Das heißt, dass in diesem Fall die Analysefunktion 112 in der Lage ist, festzustellen, welcher Programmbefehl eines der Teileprogramme 20 in der Aktionssteuerung 10 aktiv ist und zu einer Aktion einer der Bearbeitungseinheiten 46 führt.

Schließlich ist ein Positionsanzeigemodus 118 der Analysefunktion 112 vorgesehen, welcher es erlaubt, eine Achsposition mindestens einer der Bearbeitungseinheiten 46 anzuzeigen, das heißt die Position, in welcher diese mindestens eine der virtuellen Bearbeitungseinheiten 46 relativ zu den übrigen virtuellen Bearbeitungseinheiten steht.

Mit dem erfindungsgemäßen Bedienprogramm 70 besteht nun eine Vielzahl von Möglichkeiten einer komfortablen Bedienung des erfindungsgemäßen Simulationssystems.

Zunächst ist der Vorteil des erfindungsgemäßen Bedienprogramms 70 darin zu sehen, dass dieses aufgrund der werkstückbezogen arbeitenden Programmverwaltungsfunktion 92 nicht einzelne Teileprogramme verwaltet, das heißt speichert, transferiert oder sichert, sondern stets alle zu einem Werkstück WS gehörenden Teileprogramme, insbesondere mit Werkzeugdaten, Nullpunktsverschiebungen und sonstigen zur Fertigung eines Werkstücks WS relevanten Parametern, verwaltet, so dass im Gegensatz zu den bislang bekannten Simulationssystemen die Teileprogramme von der Bedienungsperson nicht einzeln transferiert, geladen und verwaltet werden müssen.

Besonders vorteilhaft ist dabei das werkstückbezogene Transferieren der Teileprogramme zu der Aktionssteuerung 10 und auch das werkstückbezogene Laden der Teileprogramme in der Aktionssteuerung 10, insbesondere die automatische Verteilung und Zuordnung der Teileprogramme zu den einzelnen Kanälen 22 des Steuerungsprogramms 18 im Transfermodus 94.

Schließlich schafft auch der durch manuelle Betätigung einer der Funktionstasten 88 aktivierbare Start/Stopp-Modus 98 die Möglichkeit, die Teileprogramme zur Abarbeitung nach einem vordefinierten Schlüssel zu starten oder zu stoppen oder auch Teileprogramme 20 durch manuelle Betätigung einer der Funktionstasten 88 auszuwählen und zu aktivieren.

Ein weiterer Vorteil gegenüber bekannten Simulationssystemen besteht darin, dass das erfindungsgemäße Simulationssystem mit der Programmbearbeitungsfunktion 102 im Programmerstellungsmodus 104 die Erstellung von Elementen von Teileprogrammen oder von gesamten Teileprogrammen erlaubt.

In diesem Programmerstellungsmodus 104 besteht auch noch die Möglichkeit, eine Programmierunterstützung durch Parametriermasken und vordefinierte Unterprogrammaufrufe vorzusehen.

Darüber hinaus schafft der Eingabemodus 106 für Korrekturwerte noch die Möglichkeit, beispielsweise Parameter der virtuellen Bearbeitungseinheiten 46 einzugeben und zu korrigieren.

Schließlich besteht die Möglichkeit, im Zuge der Simulation auch Werkzeuge WZ vorzugeben, die später auch an der Maschine verwendet werden sollen und über den Eingabemodus 108 für die Werkzeuge WZ deren Geometrie gleich in der Simulation zu berücksichtigen, so dass die Teileprogramme später ohne jede Änderung auf der realen Werkzeugmaschine eingesetzt werden können oder umgekehrt von der Werkzeugmaschine Teileprogramme unmittelbar in das Simulationssystem zur Simulation und Überprüfung und/oder Korrektur übernommen werden können.

Schließlich schafft der Eingabemodus 110 für Werkzeugkorrekturen noch die zusätzliche Möglichkeit, auch Werkzeugabmessungen bereits im Simulationssystem zu korrigieren und somit unmittelbar später auf der Werkzeugmaschine lauffähige Teileprogramme bereits im Simulationssystem zu generieren oder auch umgekehrt in der Werkzeugmaschine laufende Teileprogramme auf das Simulationssystem zu übernehmen und in diesem zu überprüfen und gegebenenfalls zu ändern.

Schließlich schafft die Analysefunktion 112 noch die Möglichkeit, nicht nur den CNC-Bearbeitungsprogrammkomplex 68 in dem Simulationssystem zu simulieren, sondern bei eventuell auftretenden Fehlern diese mit möglichst großer Unterstützung für die Bedienungsperson zu analysieren.

Eine derartige Analyse von Fehlern wird dadurch erleichtert, dass durch den Identifikationsmodus 114 die Möglichkeit besteht, bei der visuellen Analyse der Simulation der Bearbeitung des Werkstücks WS bei Erkennen eines Fehlers den aktuell bearbeiteten NC-Satz durch Kennzeichnung oder Markierung später zu identifizieren und somit sehr schnell den Fehler im jeweiligen Teileprogramm aufzufinden.

Weiterhin besteht die Möglichkeit, mit dem Anzeigemodus 116 der Analysefunktion 112 auch den mindestens einen zur Zeit aktiven Programmbefehl oder mehrere zur Zeit aktive Programmbefehle gleichzeitig mit der Abarbeitung derselben im Anzeigefeld 90 anzuzeigen, so dass der Benutzer der Simulationsvorrichtung in der Lage ist, zu erkennen, welche Programmbefehle gegebenenfalls fehlerhaft sein können.

Schließlich wird eine Fehleranzeige weiter durch den Parameteranzeigemodus 118 erleichtert, welcher die mindestens eine aktuelle Achsposition mindestens einer der virtuellen Bearbeitungseinheiten 46 anzeigt und somit eine Fehleranalyse oder Fehlersuche erleichtert.

Ein weiterer möglicher, durch den Parameteranzeigemodus 118 anzeigbarer Parameter wäre auch eine Drehzahl einer virtuellen Werkstückspindel.

Neben den bislang direkt mit der virtuellen Bearbeitung eines Werkstücks zusammenhängenden Funktionen besteht aber auch noch die Möglichkeit, in dem Bedienprogramm 70 weitere Funktionen vorzusehen, beispielsweise Sonderfunktionen 122, welche beispielsweise über die Maschinensteuertafel 80 durch Betätigen einer der Funktionstasten 88 aktiviert werden können, und sowohl bei der Bearbeitung eines realen Werkstücks hilfreich sein können, als auch bei der Analyse der Simulation.

Eine derartige Sonderfunktion 122 kann beispielsweise einen Fahrmodus 124 umfassen, bei welchem die virtuellen Bearbeitungseinheiten 46 durch Betätigen von Eingabetasten 88 entlang ihrer Bewegungsachsen verfahren werden können.

Eine andere Möglichkeit besteht darin, einen Verfahrmodus oder auch einen Anfahrmodus 126 vorzusehen, welcher es erlaubt, die virtuelle Werkzeugmaschine 44 leerzufahren, das heißt das Werkstück WS zu entfernen, oder die leere virtuelle Werkzeugmaschine 44 mit einem Werkstück WS anzufahren, das heißt eine virtuelle Bearbeitung zu beginnen oder fortzusetzen.

Schließlich besteht auch noch die Möglichkeit, beispielsweise einen Umrüstmodus 128 vorzusehen, welcher ein Umrüsten von Werkzeugen vorsieht.

Die erfindungsgemäße Lösung erlaubt es somit, nicht nur eine derartige Sonderfunktion 122 zu simulieren, sondern auch diese im Zusammenhang mit der Simulation zu programmieren und im Zusammenhang mit der Simulation auf mögliche Fehler zu untersuchen.

Das erfindungsgemäße Bedienprogramm ist insbesondere dann in hohem Maße benutzerfreundlich, wenn dieses dem Bedienprogramm der realen Werkzeugmaschine entspricht, auf dem der CNC-Bearbeitungsprogrammkomplex 68 eingesetzt werden soll. In diesem Fall besteht für den Benutzer oder die Bedienungsperson des Simulationssystems keinerlei Umstellungsproblem, da das Bedienprogramm 70 des Simulationssystems genau dieselben Funktionen aufweist, wie das Bedienprogramm seiner realen Werkzeugmaschine.

Ein weiterer erheblicher Vorteil besteht darin, dass das Bedienprogramm 70 für das erfindungsgemäße Simulationssystem nicht eigens generiert werden muss, sondern dass das Bedienprogramm der realen Werkzeugmaschine unmittelbar übernommen werden kann.

Ein besonderer Vorteil hinsichtlich der Benutzerfreundlichkeit besteht auch dann, wenn die Maschinensteuertafel 80 des erfindungsgemäßen Simulationssystems im Wesentlichen der Maschinensteuertafel 80 der realen Werkzeugmaschine entspricht.

Insbesondere ist es dabei vorteilhaft, wenn die Funktionstasten 88 der Maschinensteuertafel 80 denselben Funktionen des Bedienprogramms 70 zugeordnet sind.

Dabei muss die lokale Zuordnung der einzelnen Funktionen des Bedienprogramms 70 zu den einzelnen Funktionstasten 88 nicht zwangsläufig der Zuordnung der realen Werkzeugmaschine entsprechen. Die Bedienerfreundlichkeit wird jedoch weiter dadurch erleichtert, dass die Zuordnung der Funktionen des Bedienprogramms 70 zu den einzelnen Funktionstasten 88 im Wesentlichen mit denen der realen Werkzeugmaschine identisch ist.

In gleicher Weise ist auch vorteilhafterweise vorgesehen, dass das Anzeigefeld 90 die von dem Bedienprogramm 70 über die Bedienoberfläche 72 zur Anzeige gebrachten Informationen im Wesentlichen in gleicher Weise anzeigt, wie das Anzeigefeld 90 der Maschinensteuertafel 80 der realen Werkzeugmaschine.

Bei dem ersten Ausführungsbeispiel des erfindungsgemäßen Simulationssystems, dargestellt in Figur 1 und 2, ist nun beispielsweise vorgesehen, dass das Steuerungsprogramm 18 ein eigenständiges Programm, beispielsweise ein nachgebildetes CNC-Steuerungsprogramm, ist, das werkzeugmaschinenfremd ist.

In diesem Fall ist dem Bedienprogramm 70 ein Anpassprogramm 140 zuzuordnen, welches die Kommunikation zwischen dem Bedienprogramm 70 und dem eine CNC-Nachbildung darstellenden Steuerungsprogramm 18 sicherstellt.

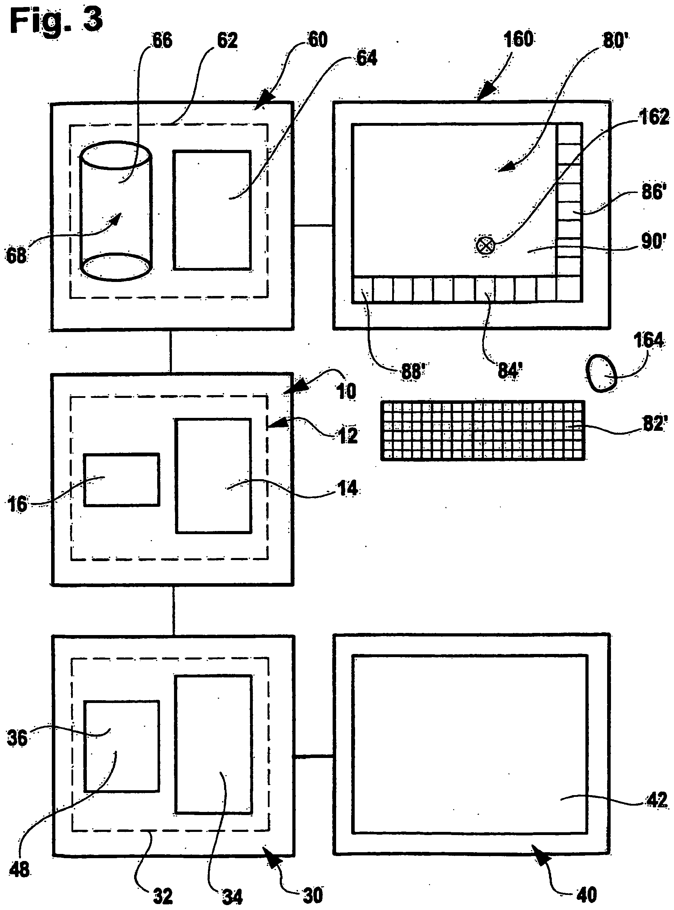

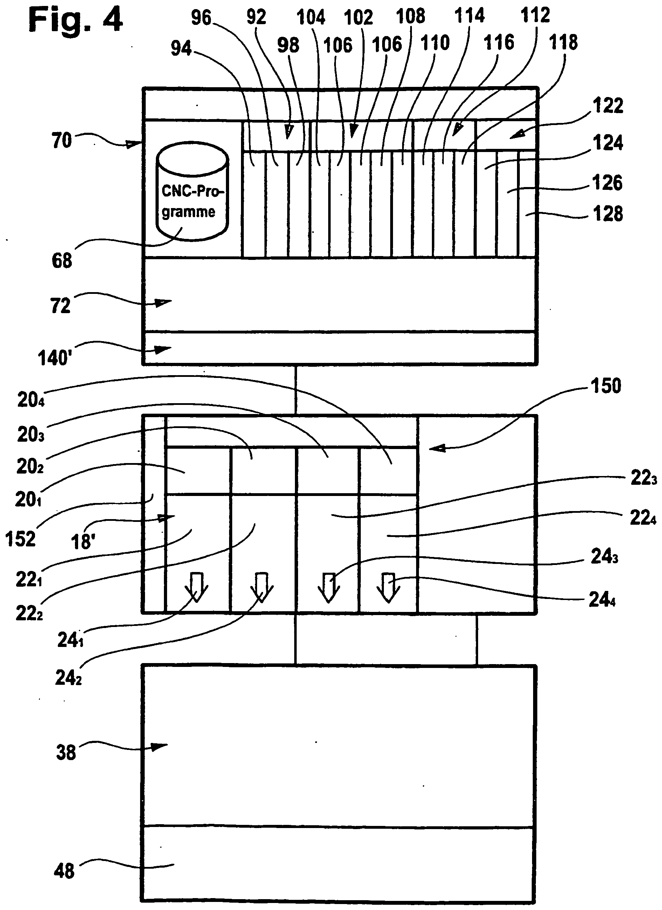

Bei einem zweiten Ausführungsbeispiel eines erfindungsgemäßen Simulationssystems, dargestellt in Figur 3 und 4, sind diejenigen Komponenten, die mit denen des ersten Ausführungsbeispiels identisch sind, mit denselben Bezugszeichen versehen, so dass hinsichtlich deren Beschreibung vollinhaltlich auf die Ausführungen zum ersten Ausführungsbeispiel Bezug genommen wird.

Im Gegensatz zum ersten Ausführungsbeispiel ist bei dem zweiten Ausführungsbeispiel, wie in Figur 4 dargestellt, das Steuerungsprogramm 18' keine CNC-Nachbildung, sondern umfasst das Kernsteuerungsprogramm 150 der realen Werkzeugmaschine, welches als Steuerbefehle 24 dieselben Steuerbefehle wie bei der realen Werkzeugmaschine generiert.

Um das Kernsteuerungsprogramm 150 als Teil des Steuerungsprogramms 18' der Aktionssteuerung 10 betreiben zu können, ist eine Programmumgebung 152 für das Steuerungsprogramm 150 vorgesehen und auf der ersten Datenverarbeitungseinheit 12 installiert, welche dem Kernsteuerungsprogramm 150 der realen Werkzeugmaschine dieselbe Programmumgebung zur Verfügung stellt, wie dies auf der realen Werkzeugmaschine der Fall ist.

Ferner ist bei dem zweiten Ausführungsbeispiel der Bediensteuerung 60 eine zweite Visualisierungseinheit 160 zugeordnet, welche ähnlich einem üblichen Rechner oder PC noch mit einem separaten Tastenfeld 82' versehen ist, das üblichen Eingabetasten entspricht.

Auf der Visualisierungseinheit wird nun die Maschinentafel 80' mitsamt ihrem Anzeigefeld 90' und den Reihen 84' und 86' der Funktionstasten 88' als virtuelle Maschinensteuertafel 80' dargestellt, wobei die Funktionstasten 88 durch einen Cursor 162 betätigbar sind, der seinerseits entweder durch das Tastenfeld 82' oder eine Maus 164 auf dem dargestellten Bild verfahrbar ist.

Damit entfällt die Notwendigkeit, bei dem zweiten Ausführungsbeispiel des erfindungsgemäßen Simulationssystems eine reale Ausführung der Maschinensteuertafel 80 vorzusehen. Dies hat insbesondere den Vorteil, dass die Maschinensteuertafel 80' in einfacher Weise durch Software generiert und auch hinsichtlich der Lage und Zuordnung der Funktionstasten 88' den jeweils gewünschten Verhältnissen angepasst werden kann.

Wenn das Steuerungsprogramm 18' beim zweiten Ausführungsbeispiel das Kernsteuerungsprogramm 150 der realen Werkzeugmaschine umfasst und das Bedienprogramm 70 dem der realen Werkzeugmaschine entspricht, besteht keine Notwendigkeit mehr, ein separates Anpassprogramm zur Kommunikation zwischen dem Bedienprogramm 70 und dem Steuerungsprogramm 18 vorzusehen, sondern das Anpassprogramm 140' ist das bei der realen Werkzeugmaschine verwendete Kommunikationsprogramm für die Wechselwirkung zwischen dem Bedienprogramm70 und dem Kernsteuerungsprogramm 150 der realen Werkzeugmaschine.

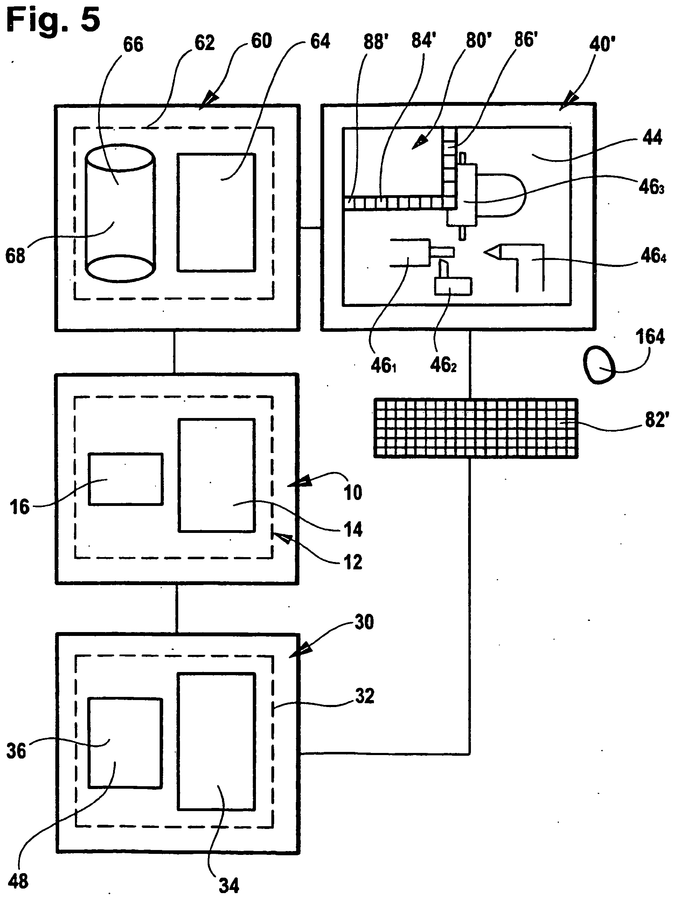

Bei einem dritten Ausführungsbeispiel, dargestellt in Figur 5, ist die Programmstruktur mit der des zweiten Ausführungsbeispiels identisch.

In Abwandlung gegenüber dem zweiten Ausführungsbeispiel sieht das dritte Ausführungsbeispiel gemäß Figur 5 vor, dass nur eine Visualisierungseinheit, nämlich die Visualisierungseinheit 40', Verwendung findet, auf der sowohl die virtuelle Werkzeugmaschine 44 mit den Bearbeitungseinheiten 46 dargestellt ist, als auch überlagert zu der virtuellen Werkzeugmaschine 44 die virtuelle Maschinensteuertafel 80', so dass die Bedienungsperson auf derselben Visualisierungseinheit 40' sowohl die virtuelle Werkzeugmaschine 44 als auch die virtuelle Maschinensteuertafel 80' zur Verfügung hat, um die Simulation ablaufen zu lassen und über das Bedienprogramm 70 in der im Zusammenhang mit dem ersten Ausführungsbeispiel bereits beschriebenen Art und Weise einzuwirken.

Sowohl beim ersten als auch beim zweiten und dritten Ausführungsbeispiel ist das Simulationssystem ein werkzeugmaschinenfremdes Simulationssystem, welches völlig unabhängig von der Werkzeugmaschine arbeitet.

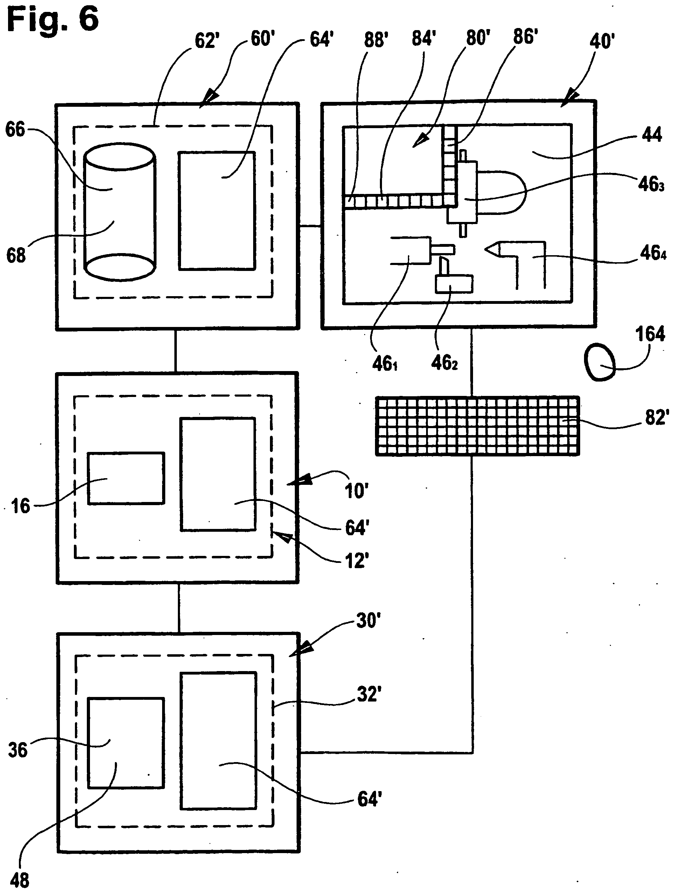

Bei einem vierten Ausführungsbeispiel, dargestellt in Figur 6, ist das erfindungsgemäße Simulationssystem in die Bediensteuerung 60' einer realen Werkzeugmaschine integriert und der Prozessor 64' wird nicht nur von der Bediensteuerung 60' benutzt, sondern auch von der Aktionssteuerung 10' und der Visualisierungssteuerung 30', wobei allerdings dem Prozessor 64' noch die Speicher 66, 16 und 36 zugeordnet sind, die in der bereits beschriebenen Art und Weise zur Speicherung des CNC-Bearbeitungsprogrammkomplexes 68, bzw. der Teileprogramme 20 bzw. des Maschinenmodells 48 dienen.

Da das vierte Ausführungsbeispiel des erfindungsgemäßen Simulationssystems sowohl das Bedienprogramm 70 der realen Werkzeugmaschine als auch das Kernsteuerungsprogramm 150 der realen Werkzeugmaschine einsetzt, besteht die Möglichkeit, unmittelbar an der realen Werkzeugmaschine eine Simulation ablaufen zu lassen und mit dem Bedienprogramm 70 der beschriebenen Art und Weise die Teileprogramme des CNC-Bearbeitungsprogrammkomplexes 68 zu verwalten oder diese zu bearbeiten oder zu analysieren.

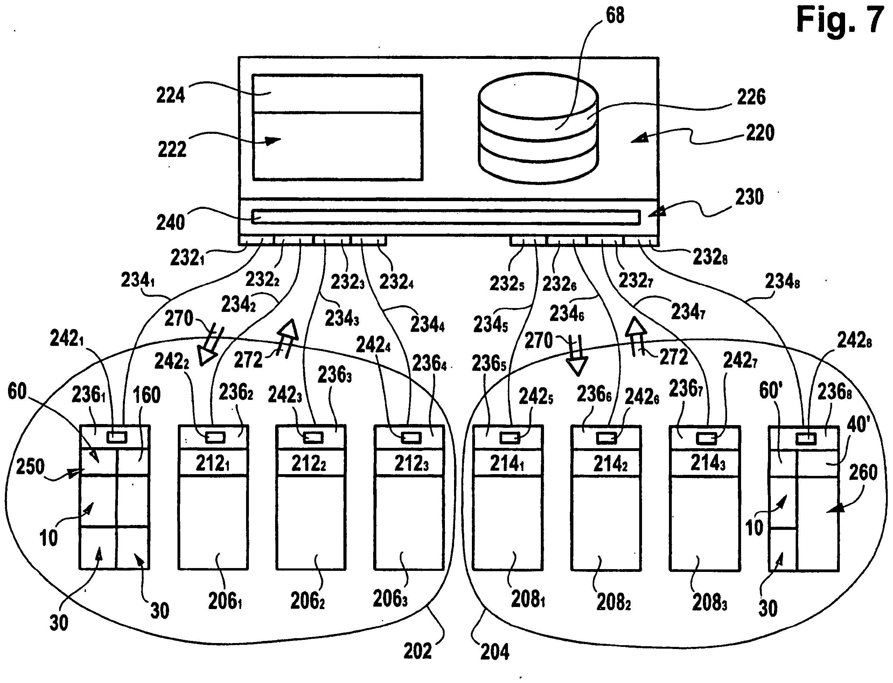

Ein Ausführungsbeispiel einer in Figur 7 dargestellten Fertigungseinrichtung umfasst zwei Fertigungsbereiche 202, 204, wobei im Fertigungsbereich 202 Werkzeugmaschinen 206₁, 206₂ und 206₃ eingesetzt sind, während im Fertigungsbereich 204 Werkzeugmaschinen 208₁, 208₂ und 208₃ eingesetzt sind, die jeweils gesteuert durch Maschinensteuerungen 212₁, 212₂ und 212₃ sowie 214₁, 214₂ und 214₃ zur tatsächlichen Bearbeitung von Werkstücken eingesetzt sind.

Die Bearbeitung von Werkstücken auf diesen Werkzeugmaschinen 206₁ bis 206₃ sowie 208₁ bis 208₃ in den Fertigungsbereichen 202 bzw. 204 wird dabei organisiert, das heißt geplant und geleitet, durch ein Fertigungsorganisationssystem 220, welches eine Datenverarbeitungseinheit 222 aufweist, die mit einem Fertigungsorganisationsprogramm 224 arbeitet, wobei mit dem Fertigungsorganisationsprogramm 224 beispielsweise die Planung einer optimalen Auslastung der Werkzeugmaschinen 206₁ bis 206₃ in dem Fertigungsbereich 202 und der Werkzeugmaschinen 208₁ bis 208₃ in dem Fertigungsbereich 204 erfolgt. Hierzu werden von dem Fertigungsorganisationsprogramm 224 auch werkstückbezogen CNC-Bearbeitungsprogrammkomplexe 68 verwaltet, die in einem Datenspeicher 226 des Fertigungsorganisationssystems 220 gespeichert sind, wobei in dem Datenspeicher 226 die CNC-Bearbeitungsprogrammkomplexe 68 sämtlicher zur Fertigung vorgesehener Werkstücke speicherbar sind, so lange, bis der jeweilige für das Werkstück vorgesehene CNC-Bearbeitungsprogrammkomplex 68 in einer Maschinensteuerung 212₁ bis 212₃ oder 214₁ bis 214₃ der Werkzeugmaschinen 206₁ bis 206₃ oder 208₁ bis 208₃ benötigt wird.

Das Fertigungsorganisationssystem 220 weist außerdem eine Organisationskommunikationseinheit 230 auf, die mit einer Reihe von Kommunikationsschnittstellen 232₁ bis 232₈ versehen ist, wobei die Kommunikationsschnittstellen 232₁ bis 232₈ über Kommunikationspfade 234₁ bis 234₈ mit Kommunikationseinheiten 236₁ bis 236₈ verbunden sind, wobei die Kommunikationseinheiten 236₂ bis 236₇ den Maschinensteuerungen 212₁ bis 212₃ sowie 214₁ bis 214₃ zugeordnet sind.

Zur Abwicklung der Kommunikation zwischen der Organisationskommunikationseinheit 230 und den einzelnen Kommunikationseinheiten 236₁ bis 236₈ arbeitet die Organisationskommunikationseinheit 230 mit einem Organisationskommunikationsprogramm 240, und die Kommunikationseinheiten 236₁ bis 236₈ arbeiten mit Kommunikationsprogrammen 242₁ bis 242₈, wobei das Organisationskommunikationsprogramm 240 und die Kommunikationsprogramme 242 aufeinander abgestimmt sind. Bei einem Ausführungsbeispiel sind die Kommunikationsprogramme 242 in allen Kommunikationseinheiten 236₁ bis 236₈ vorzugsweise identisch, um einen möglichst geringen Programmieraufwand zu haben.

Ferner sind bei diesem Ausführungsbeispiel auch die Kommunikationseinheiten 236₁ bis 236₈ sowie die Kommunikationsschnittstellen 232₁ bis 232₈ im Wesentlichen identisch aufgebaut, um auch hinsichtlich der Hardwarekomponenten den Aufwand zu minimieren.

Bei der erfindungsgemäßen Fertigungseinrichtung sind den Kommunikationseinheiten 236₁ und 236₈ keine Maschinensteuerungen zugeordnet, sondern jeweils ein Simulationssystem 250 bzw. 260, wobei beispielsweise das Simulationssystem 250 entsprechend dem vorstehend beschriebenen zweiten Ausführungsbeispiel, dargestellt in Fig. 3 und 4 ausgebildet ist, während das Simulationssystem 260 entsprechend dem vorstehend beschriebenen, in Fig. 6 dargestellten vierten Ausführungsbeispiel des Simulationssystems ausgebildet ist.

Bei beiden Simulationssystemen 250, 260 ist vorzugsweise das Bedienprogramm 70 identisch mit dem der Maschinensteuerungen 212 oder 214 der realen Werkzeugmaschinen 206 bzw. 208, so dass auch keinerlei weitere Anpassung zwischen den Kommunikationsprogrammen 242₁ und 242₈ und den Bedienprogrammen 70 erforderlich ist und auch die Kommunikationseinheiten 236₁ und 236₈ mit den für die Maschinensteuerungen 212₁ bis 212₃ und 214₁ bis 214₃ verwendeten Kommunikationseinheiten 236₂ bis 236₇ identisch sein können, wenn auch die Bediensteuerungen 60 und 60' denen der realen Maschinensteuerungen 212₁ bis 212₃ und 214₁ bis 214₃ der realen Werkzeugmaschinen 206₁ bis 206₃ und 208₁ bis 208₃ entsprechen.

Mit dem Fertigungsorganisationssystem 220 steht somit eine Fertigungsplanungsebene und Fertigungsleitebene zur Verfügung, um die Bearbeitung von Werkstücken auf den Werkzeugmaschinen 206₁ bis 206₃ sowie 208₁ bis 208₃ in den Fertigungsbereichen 202 bzw. 204 unter möglichst optimaler Ausnutzung der Werkzeugmaschinen 206₁ bis 206₃ bzw. 208₁ bis 208₃ zu organisieren.

Hierzu werden von dem Fertigungsorganisationsprogramm 224 in dem Datenspeicher 226 die CNC-Bearbeitungsprogrammkomplexe 68 für die jeweiligen Werkstücke werkstückorientiert verwaltet, so dass bei einer auf einer der Werkzeugmaschinen 206₁ bis 206₃ und 208₁ bis 208₃ vorgesehenen Bearbeitung eines Werkstücks die jeweilige Maschinensteuerung 212₁ bis 212₃ oder 214₁ bis 214₃ den entsprechenden CNC-Bearbeitungsprogrammkomplex 68 übermittelt bekommt, und zwar über die Organisationskommunikationseinheit 230, deren Organisationskommunikationsprogramm 240 den entsprechenden CNC-Bearbeitungsprogrammkomplex 68 der entsprechenden Kommunikationsschnittstelle 232 zuordnet und über diese sowie den Kommunikationspfad 234 den CNC-Bearbeitungsprogrammkomplex 68 der entsprechenden Kommunikationseinheit 236, die der jeweiligen Maschinensteuerung 212 oder 214 zugeordnet ist, übermittelt, so dass die jeweilige Maschinensteuerung 212 oder 214 den jeweiligen CNC-Bearbeitungsprogrammkomplex 68 zur Verfügung hat, um die jeweilige Werkzeugmaschine 206 oder 208 zur Bearbeitung des Werkstücks zu betreiben.

Dabei beschränkt sich vorzugsweise das Fertigungsorganisationssystem 220 nicht nur darauf, den CNC-Bearbeitungsprogrammkomplex 68 der jeweiligen Maschinensteuerung 212 oder 214 zu übermitteln, sondern es besteht auch die Möglichkeit, zusätzliche Steueranweisungen 270 über die Organisationskommunikationseinheit 230 mit dem Organisationskommunikationsprogramm 240 der jeweiligen Maschinensteuerung 212 der 214 zu übermitteln.

In gleicher Weise besteht die Möglichkeit, über die Organisationskommunikationseinheit 230 mit dem Organisationskommunikationsprogramm 240 Rückmeldungen 272 von den einzelnen Maschinensteuerungen 212 oder 214 zu empfangen.

Derartige Steueranweisungen 270 sind beispielsweise Steueranweisungen betreffend dem Programmstart des CNC-Bearbeitungsprogrammkomplexes 68 auf der jeweiligen Maschinensteuerung oder betreffend die Zahl der abzuarbeitenden Werkstücke, oder auch den Programmstopp des CNC-Bearbeitungsprogrammkomplexes 68.

Darüber hinaus können die Steueranweisungen 270 auch die Anweisung enthalten, den CNC-Bearbeitungsprogrammkomplex 68 nach Abarbeiten der vorgesehenen Bearbeitung wieder zum Fertigungsorganisationssystem 220 zurückzuladen, um den jeweiligen CNC-Bearbeitungsprogrammkomplex 68 in diesem Fertigungsorganisationssystem im Datenspeicher 226 zu speichern.

Die Rückmeldungen 272 sind beispielsweise Rückmeldungen betreffend Bearbeitungszeiten oder Stillstandzeiten der jeweiligen Werkzeugmaschine 212 oder 214 sowie Rückmeldungen betreffend die Zahl der bearbeiteten Werkstücke und die hierzu benötigte Zeit.

Die Rückmeldungen 272 können aber auch noch weitergehende Informationen über die Werkstückbearbeitung auf der jeweiligen Werkzeugmaschine 206 oder 208 umfassen, diese Informationen können beispielsweise auch Informationen über die Leistung der einzelnen Werkzeugmaschinen 206 oder 208 sein.

Wesentlich bei dem erfindungsgemäßen Fertigungsorganisationssystems 220 ist, dass die Datenstruktur aller CNC-Bearbeitungsprogrammkomplexe 68, die jeder der Maschinensteuerungen 212 oder 214 übermittelt werden können, dieselbe ist und auch die Datenstruktur der Steueranweisungen 270 und der Rückmeldungen 272 identisch ist, so dass das Fertigungsorganisationsprogramm 224 sowohl die CNC-Bearbeitungsprogrammkomplexe 68 als auch die Steueranweisungen 270 und die Rückmeldungen 272 in gleicher Weise bearbeiten kann, unabhängig davon, von welcher der Maschinensteuerungen 212 oder 214 der Werkzeugmaschinen 206 oder 208 diese kommen.

Üblicherweise ist jedem der Fertigungsbereiche 202 und 204 ein Maschinenbediener zugeordnet, der bei werkzeugmaschinenlauffähigen CNC-Bearbeitungsprogrammkomplexen lediglich die Funktion der Werkzeugmaschinen 206, 208 überwachen muss, im Hinblick auf potentiell auftretende Störungen oder im Hinblick auf bei manchen Teilen notwendige Eingriffe in den Fertigungsablauf.

Üblicherweise hat jedoch der Maschinenbediener in den Fertigungsbereichen 202 und 204 noch während der auf den ihm zugeordneten Werkzeugmaschinen 206 oder 208 laufenden Bearbeitung der Werkstücke, die im Wesentlichen über das Fertigungsorganisationssystem 220 geplant und geleitet wird, noch Zeit zur Verfügung, die möglichst effektiv genutzt werden sollte.

Aus diesem Grund sind den Fertigungsbereichen 202 und 204 mindestens ein Simulationssystem 250 bzw. 260 zugeordnet, welche weitere Betätigungsmöglichkeiten für den Maschinenbediener dann eröffnen, wenn dieser für den Ablauf der Fertigung auf den Werkzeugmaschinen 206 bzw. 208 des jeweiligen Fertigungsbereichs 202 bzw. 204 nicht benötigt wird.

Beispielsweise kann der Maschinenbediener des Fertigungsbereichs 202 mit dem Simulationssystem 250 CNC-Bearbeitungsprogrammkomplexe 68 erstellen und simulieren oder solche Bearbeitungsprogrammkomplexe 68 simulieren, die diesem von dem Fertigungsorganisationssystem 220 zur Verfügung gestellt werden, um deren Funktionsfähigkeit zu überprüfen, oder um sich darüber zu orientieren, welche Aktionen der einzelnen Bearbeitungseinheiten durch diesen CNC-Bearbeitungsprogrammkomplex vorgesehen sind, um beispielsweise den Einfahrvorgang eines derartigen CNC-Bearbeitungsprogrammkomplexes 68 auf einer der Werkzeugmaschinen 206 vorzubereiten und dadurch zu beschleunigen und somit Maschinenzeiten bei den Werkzeugmaschinen 206 einzusparen.

Es ist aber auch denkbar, den Maschinenbediener dazu einzusetzen, einen erstellten CNC-Bearbeitungsprogrammkomplex 68 zunächst durch das Simulationssystem 250 im Hinblick auf mögliche Kollisionen oder sonstige problematischen Aktionen der Bearbeitungseinheiten zu testen und gegebenenfalls zu korrigieren und zwar mit dem Simulationssystem 250, wie es bereits voranstehend ausführlich beschrieben wurde.

Damit lassen sich mit dem Simulationssystem 250 sämtliche in der Simulationsdarstellung der virtuellen Bearbeitungseinheiten 46 auf der virtuellen Werkzeugmaschine 44 erkennbaren Probleme des CNC-Bearbeitungsprogrammkomplexes 68 beheben, so dass nach Durchführung der gesamten Simulation und gegebenenfalls erforderlichen Korrektur im Simulationssystem 250 der CNC-Bearbeitungsprogrammkomplex 68 wiederum in das Fertigungsorganisationssystem 220, insbesondere in den Datenspeicher 226 desselben zurückgeladen werden kann.

Um dem Fertigungsorganisationssystem 220, insbesondere dem Fertigungsorganisationsprogramm 224 die Möglichkeit zu eröffnen, zu erkennen, ob ein lediglich erstellter CNC-Bearbeitungsprogrammkomplex 68 oder ein beispielsweise mit dem Simulationssystem 250 geprüfter CNC-Bearbeitungsprogrammkomplex 68 oder ein bereits erfolgreich auf einer der Werkzeugmaschinen 206 und 208 eingesetzter und fehlerfrei laufender CNC-Bearbeitungsprogrammkomplex 68 zur Verfügung steht, sind die CNC-Bearbeitungsprogrammkomplexe 68 mit einem Eigenschaftenfeld versehen, welches von der Fertigungsorganisationsprogramm 224 gelesen werden kann.

Das Fertigungsorganisationsprogramm 224 ist somit in der Lage, bei den einzelnen CNC-Bearbeitungsprogrammkomplexen 68 zwischen lediglich programmierten CNC-Bearbeitungsprogrammkomplexen 68, simulationsgeprüften CNC-Bearbeitungsprogrammkomplexen 68 oder bereits erfolgreich in der Produktion bei der Bearbeitung eines Werkstücks eingesetzten CNC-Bearbeitungsprogrammkomplexen 68 zu unterscheiden und somit beispielsweise vor Einsatz eines derartigen CNC-Bearbeitungsprogrammkomplexes 68 zur Fertigung auf einer der Werkzeugmaschinen 206 oder 208 diesen CNC-Bearbeitungsprogrammkomplex 68 einem der Maschinenbediener in den Fertigungsbereichen 202 und 204 auf einem der Simulationssysteme 250 oder 260 zur Verfügung zu stellen, mit der Aufgabe, durch Simulation diesen CNC-Bearbeitungsprogrammkomplex 68 zu überprüfen und gegebenenfalls zu korrigieren.

Bei der erfindungsgemäßen Fertigungseinrichtung gemäß Fig. 7 kann somit ein geprüfter und gegebenenfalls korrigierter CNC-Bearbeitungsprogrammkomplex 68 wiederum von dem Fertigungsorganisationssystem 220 in den Datenspeicher 226 übernommen und dann ebenfalls einem Maschinenbediener, möglichst dem Maschinenbediener des Fertigungsbereichs 202 oder 204, der auch die Simulation durchgeführt hat, zum Einfahren auf einer der zur Verfügung stehenden Werkzeugmaschinen 206 oder 208 zur Verfügung zu stellen.

Dadurch, dass der Maschinenbediener, der den CNC-Bearbeitungsprogrammkomplex 68 auf dem Simulationssystem 250 oder 260 simuliert hat, bereits mit dem CNC-Bearbeitungsprogrammkomplex 68 vertraut ist, wird Zeit beim Einfahren dieses CNC-Bearbeitungsprogrammkomplexes 68 auf der realen Werkzeugmaschine 206 oder 208 eingespart. Und die für das Einfahren dieses CNC-Bearbeitungsprogrammkomplexes 68 benötigte Zeit erheblich reduziert, zumal die gröbsten Fehler, insbesondere gröbsten Fehlprogrammierungen, die zu Kollisionen der Bearbeitungseinheiten 46 führen könnten, bereits beseitigt sind.

Außerdem wird in erheblichem Maße Zeit dadurch eingespart, dass sich ein CNC-Bearbeitungsprogrammkomplex 68 bereits mit den Möglichkeiten der Fertigungseinrichtung, nämlich den Simulationssystemen 250 oder 260 durch einen Maschinenbediener während für die tatsächlich bearbeitenden Werkzeugmaschinen 206 oder 208 nicht benötigter Zeit erstellen und/oder simulieren lässt und danach unmittelbar zur Steuerung einer der realen Werkzeugmaschinen 206 oder 208, und zwar verwaltet vom Fertigungsorganisationsprogramm 224 einsetzen lässt, ohne dass weitere Schritte erforderlich sind.

Dabei ist ein wesentlicher Vorteil der erfindungsgemäßen Fertigungseinrichtung dann erreichbar, wenn die Kommunikation zwischen dem Fertigungsorganisationssystem 220 und dem jeweiligen Simulationssystem 250 oder 260 in genau derselben Weise erfolgt, wie mit den Maschinensteuerungen 212 oder 214, so dass auf seiten des Fertigungsorganisationsprogramms 224 und des Organisationskommunikationsprogramms 240 sowie auf seiten der Kommunikationsprogramme 242₁ und 242₈ die für die Simulationssysteme 250 und 260 verwendet werden, keinerlei Änderungen erforderlich sind und damit die ohnehin für die Kommunikation mit den Maschinensteuerungen 212 und 214 verwendete Hard- und Software eingesetzt werden kann, so dass die gesamte Kommunikation zwischen dem Fertigungsorganisationssystem 220 und dem Simulationssystem 250 oder 260 identisch ist mit der Kommunikation mit den Maschinensteuerungen 212 oder 214, und somit jeglicher Anpassungsbedarf entfällt.

## Patentansprüche

1. Fertigungseinrichtung für Werkstücke umfassend
mindestens einen Fertigungsbereich (202, 204), in welchem mehrere mit einer Maschinensteuerung (212, 214) versehene Werkzeugmaschinen (206, 208) angeordnet sind,
eine Datenverarbeitungseinheit (222), welche mit den Maschinensteuerungen (212, 214) der Werkzeugmaschinen (206, 208) über einen Kommunikationspfad (234) gekoppelt ist, und mit einem Programm (224), welches CNC-Bearbeitungsprogrammkomplexe (68) für die Bearbeitung von Werkstücken den Werkzeugmaschinen (206, 208) zur Verfügung stellt, **dadurch gekennzeichnet, dass** die Datenverarbeitungseinheit (222) von einem Fertigungsorganisationssystem (220) umfasst ist, welches die Bearbeitung von Werkstücken auf den Werkzeugmaschinen (206, 208) des mindestens einen Fertigungsbereichs (202, 204) organisiert, dass das Programm ein Fertigungsorganisationsprogramm (224) ist, dass der Fertigungseinrichtung mindestens ein Simulationssystem (250,260) zugeordnet ist, welches mit dem Fertigungsorganisationssystem (220) gekoppelt ist, dass das Simulationssystem (250, 260) Aktionen von Bearbeitungseinheiten einer der Werkzeugmaschinen, insbesondere Aktionen bei der Bearbeitung eines Werkstücks, entsprechend einem CNC-Bearbeitungsprogrammkomplex (68) mittels mindestens einer ersten Visualisierungseinheit (40) in Form von Aktionen virtueller Bearbeitungseinheiten (46) einer virtuellen Werkzeugmaschine (44) darstellt, dass das Simulationssystem (250, 260) eine Aktionssteuerung (10) umfasst, die mindestens eine erste Datenverarbeitungseinheit (12) aufweist, welche mit einem CNC-Sätze des CNC-Bearbeitungsprogrammkomplexes (68) verarbeitenden Steuerungsprogramm (18) Steuerbefehle (24) für Aktionen der virtuellen Bearbeitungseinheiten (46) ermittelt, dass das Simulationssystem (250, 260) eine Visualisierungssteuerung (30) umfasst, die mindestens eine zweite Datenverarbeitungseinheit (32) aufweist, welche mit einem Visualisierungsprogramm (38) anhand von Konfigurationsdaten eines gespeicherten Maschinenmodells (48) und den von der Aktionssteuerung (10) ermittelten Steuerbefehlen (24) Aktionen der virtuellen Bearbeitungseinheiten (46) auf der ersten Visualisierungseinheit (40) darstellt, dass das Simulationssystem eine Bediensteuerung (60) mit einer dritten Datenverarbeitungseinheit (62) umfasst, welche mit einem Bedienprogramm (70) die Aktionssteuerung (10) betreibt, und dass das Bedienprogramm (70) eine Programmverwaltungsfunktion (92) aufweist, welche von dem in einem Speicher (66) der dritten Datenverarbeitungseinheit (62) gespeicherten CNC-Bearbeitungsprogrammkomplex (68) zur Ausführung desselben der Aktionssteuerung (10) zumindest Programmteile (20) desselben werkstückbezogen übergibt.

2. Fertigungseinrichtung nach Anspruch 1, **dadurch gekennzeichnet, dass** die Fertigungseinrichtung mehrere Fertigungsbereiche (202, 204) aufweist, die mit dem Fertigungsorganisationssystem (220) gekoppelt sind.

3. Fertigungseinrichtung nach Anspruch 1 oder 2, **dadurch gekennzeichnet, dass** dem Fertigungsorganisationssystem (220) mehrere Simulationssysteme (250, 260) zugeordnet sind.

4. Fertigungseinrichtung nach einem der Ansprüche 1 bis 3, **dadurch gekennzeichnet, dass** das Simulationssystem (250, 260) einem Fertigungsbereich (202, 204) zugeordnet ist.

5. Fertigungseinrichtung nach einem der voranstehenden Ansprüche, **dadurch gekennzeichnet, dass** mehreren Fertigungsbereichen (202, 204) jeweils mindestens eines der Simulationssysteme (250, 260) nach einem der voranstehenden Ansprüche zugeordnet ist.

6. Fertigungseinrichtung nach einem der voranstehenden Ansprüche, **dadurch gekennzeichnet dass** der Kommunikationspfad (234) zwischen dem Fertigungsorganisationssystem (220) und der mindestens einen Maschinensteuerung (212, 214) und der Kommunikationspfad (234) zwischen dem Fertigungsorganisationssystem (220) und dem jeweiligen Simulationssystem (250, 260) identisch ausgebildet sind.

7. Fertigungseinrichtung nach einem der voranstehenden Ansprüche, **dadurch gekennzeichnet, dass** das Fertigungsorganisationssystem (220) dem Simulationssystem (250, 260) CNC-Bearbeitungsprogrammkomplexe (68) für die Simulation von Aktionen von virtuellen Bearbeitungseinheiten (46) auf einer virtuellen Werkzeugmaschine (44) zur Verfügung stellt.

8. Fertigungseinrichtung nach einem der voranstehenden Ansprüche, **dadurch gekennzeichnet, dass** das Fertigungsorganisationssystem (220) eine Organisationskommunikationseinheit (230) mit mindestens einer Kommunikationsschnittstelle (232) aufweist und dass die Maschinensteuerung (212, 214) mit der mindestens einen Kommunikationsschnittstelle (232) gekoppelt ist.

9. Fertigungseinrichtung nach Anspruch 7, **dadurch gekennzeichnet, dass** die Organisationskommunikationseinheit (230) eine weitere Kommunikationsschnittstelle (232) aufweist, mit welcher das mindestens eine Simulationssystem (250, 260) gekoppelt ist.

10. Fertigungseinrichtung nach Anspruch 9, **dadurch gekennzeichnet, dass** die Kommunikationsschnittstelle (232) für das mindestens eine Simulationssystem (250, 260) und die mindestens eine Kommunikationsschnittstelle (232) für die mindestens eine Maschinensteuerung (212, 214) im Wesentlichen identisch ausgebildet sind.

11. Fertigungseinrichtung nach einem der voranstehenden Ansprüche, **dadurch gekennzeichnet, dass** die Organisationskommunikationseinheit (230) ein Organisationskommunikationsprogramm (240) zur Kommunikation mit der mindestens einen Maschinensteuerung (212, 214) aufweist.

12. Fertigungseinrichtung nach einem der voranstehenden Ansprüche, **dadurch gekennzeichnet, dass** die Organisationskommunikationseinheit (230) ein Organisationskommunikationsprogramm (240) zur Kommunikation mit dem Simulationssystem (250, 260) aufweist.

13. Fertigungseinrichtung nach Anspruch 11 oder 12, **dadurch gekennzeichnet, dass** das Organisationskommunikationsprogramm (240) zur Kommunikation mit der mindestens einen Maschinensteuerung (212, 214) im Wesentlichen identisch ist mit dem Organisationskommunikationsprogramm (240) zur Kommunikation mit dem mindestens einem Simulationssystem (250, 260).

14. Fertigungseinrichtung nach einem der voranstehenden Ansprüche, **dadurch gekennzeichnet, dass** der jeweiligen Maschinensteuerung (212, 214) eine Kommunikationseinheit (236) mit einem Kommunikationsprogramm (242) zur Kommunikation mit dem Fertigungsorganisationssystem (220) zugeordnet ist.

15. Fertigungseinrichtung nach einem der voranstehenden Ansprüche, **dadurch gekennzeichnet, dass** dem Simulationssystem (250, 260) eine Kommunikationseinheit (236) mit einem Kommunikationsprogramm (242) zur Kommunikation mit dem Fertigungsorganisationssystem (220) zugeordnet ist.

16. Fertigungseinrichtung nach Anspruch 14 oder 15, **dadurch gekennzeichnet, dass** das Kommunikationsprogramm (242) des jeweiligen Simulationssystems (250, 260) mit identischen Datenformaten und Datenspezifikationen arbeitet wie das Kommunikationsprogramm (242) der jeweiligen Maschinensteuerung (212, 214).

17. Fertigungseinrichtung nach Anspruch 16, **dadurch gekennzeichnet, dass** das Kommunikationsprogramm (242) des Simulationssystems (250, 260) im Wesentlichen identisch ist mit dem Kommunikationsprogramm (242) der jeweiligen Maschinensteuerung (212, 214).

18. Fertigungseinrichtung nach einem der voranstehenden Ansprüche, **dadurch gekennzeichnet, dass** auf das Fertigungsorganisationssystem (220) von den Maschinensteuerungen (212, 214) abgearbeitete CNC-Bearbeitungsprogrammkomplexe (68) übertragbar sind.

19. Fertigungseinrichtung nach einem der voranstehenden Ansprüche, **dadurch gekennzeichnet, dass** auf das Fertigungsorganisationssystem (220) von dem jeweiligen Simulationssystem (250, 260) simulierte CNC-Bearbeitungsprogrammkomplexe (68) übertragbar sind.

20. Fertigungseinrichtung nach Anspruch 18 oder 19, **dadurch gekennzeichnet, dass** das Fertigungsorganisationssystem (220) von dem jeweiligen Simulationssystem (250, 260) übertragene CNC-Bearbeitungsprogrammkomplexe (68) in derselben Weise verwaltet wie von der mindestens einen Maschinensteuerung (214, 216) übertragene CNC-Bearbeitungsprogrammkomplexe (68).

21. Fertigungseinrichtung nach einem der voranstehenden Ansprüche, **dadurch gekennzeichnet, dass** das Fertigungsorganisationssystem (220) von der mindestens einen Maschinensteuerung (212, 214) Rückmeldungen (272) hinsichtlich der Abarbeitung des jeweiligen CNC-Bearbeitungsprogrammkomplexes (68) in dieser erhält.

22. Fertigungseinrichtung nach einem der voranstehenden Ansprüche, **dadurch gekennzeichnet, dass** das Fertigungsorganisationssystem (220) von dem jeweiligen Simulationssystem (250, 260) Rückmeldungen (272) hinsichtlich der Abarbeitung des jeweiligen CNC-Bearbeitungsprogrammkomplexes (68) erhält.

23. Fertigungseinrichtung nach Anspruch 21 oder 22, **dadurch gekennzeichnet, dass** die Rückmeldungen (272) von der mindestens einen Maschinensteuerung (212, 214) und die Rückmeldungen von dem jeweiligen Simulationssystem (250, 260) eine im Wesentlichen identische Struktur aufweisen.

24. Fertigungseinrichtung nach einem der voranstehenden Ansprüche, **dadurch gekennzeichnet, dass** das Fertigungsorganisationssystem (220) der mindestens einen Maschinensteuerung (212, 214) Steueranweisungen (270) übermittelt.

25. Fertigungseinrichtung nach einem der voranstehenden Ansprüche, **dadurch gekennzeichnet, dass** das Fertigungsorganisationssystem (220) dem jeweiligen Simulationssystem (250, 260) Steueranweisungen (270) übermittelt.

26. Fertigungseinrichtung nach Anspruch 24 oder 25, **dadurch gekennzeichnet, dass** die Steueranweisungen (270) für die mindestens eine Maschinensteuerung (212, 214) und die Steueranweisungen (270) für das jeweilige Simulationssystem (250, 260) eine im Wesentlichen identische Struktur aufweisen.

27. Fertigungseinrichtung nach einem der voranstehenden Ansprüche, **dadurch gekennzeichnet, dass** das Fertigungsorganisationssystem (220) einen Datenspeicher (226) für die CNC-Bearbeitungsprogrammkomplexe (68) aufweist.

28. Fertigungseinrichtung nach einem der voranstehenden Ansprüche, **dadurch gekennzeichnet, dass** die CNC-Bearbeitungsprogrammkomplexe (68) für das Fertigungsorganisationsprogramm (224) durch ein Eigenschaftenfeld als ungeprüft oder simulationsgeprüft erkennbar sind.

29. Fertigungseinrichtung nach Anspruch 28, **dadurch gekennzeichnet, dass** die CNC-Bearbeitungsprogrammkomplexe (68) für das Fertigungsorganisationsprogramm (224) durch das Eigenschaftenfeld als produktionsgeprüft erkennbar sind.

30. Fertigungseinrichtung nach einem der voranstehenden Ansprüche, **dadurch gekennzeichnet, dass** das Fertigungsorganisationssystem (220) die CNC-Bearbeitungsprogrammkomplexe (68) werkstückbezogen verwaltet.

31. Fertigungseinrichtung nach einem der voranstehenden Ansprüche, **dadurch gekennzeichnet, dass** der Bediensteuerung (60) des Simulationssystems eine Maschinensteuertafel (80) zugeordnet ist.

32. Fertigungseinrichtung nach Anspruch 31, **dadurch gekennzeichnet, dass** mittels der Maschinensteuertafel (80) die Arbeit des Bedienprogramms (70) über aufrufbare Funktionen (92, 102, 112, 122) steuerbar ist.

33. Fertigungseinrichtung nach Anspruch 32, **dadurch gekennzeichnet, dass** die Maschinensteuertafel (80) manuelle Eingabeelemente (88) für eine Aktivierung einzelner Funktionen (92, 102, 112, 122) des Bedienprogramms (70) aufweist.

34. Fertigungseinrichtung nach einem der Ansprüche 31 bis 33, **dadurch gekennzeichnet, dass** die Maschinensteuertafel (80) manuelle Eingabeelemente (88) zur Einwirkung auf den CNC-Bearbeitungsprogrammkomplex (68) aufweist.

35. Fertigungseinrichtung nach einem der Ansprüche 31 bis 34, **dadurch gekennzeichnet, dass** die Maschinensteuertafel (80) manuelle Eingabeelemente (88) zum Bedienen von Funktionen der Aktionssteuerung (10) aufweist.

36. Fertigungseinrichtung nach Anspruch 35, **dadurch gekennzeichnet, dass** die Maschinensteuertafel (80) manuelle Eingabeelemente (88) für Start/Stopp von mindestens einem Teileprogramm (20) in der Aktionssteuerung (10) umfasst.

37. Fertigungseinrichtung nach einem der Ansprüche 31 bis 36, **dadurch gekennzeichnet, dass** die Bediensteuerung (60) mit einem Anzeigefeld (90) der Maschinensteuertafel (80) gekoppelt ist, und dass die Bediensteuerung (60) von dem Bedienprogramm (70) zur Anzeige für eine Bedienungsperson vorgesehene Informationen auf dem Anzeigefeld (90) darstellt.

38. Fertigungseinrichtung nach einem der Ansprüche 31 bis 37, **dadurch gekennzeichnet, dass** die Maschinensteuertafel eine virtuelle auf einer Visualisierungseinheit (160, 40') dargestellte Maschinensteuertafel (80') ist.

39. Fertigungseinrichtung nach Anspruch 38, **dadurch gekennzeichnet, dass** die manuellen Eingabeelemente (88') der virtuellen Maschinensteuertafel (80') durch einen Cursor (162) der Visualisierungseinheit (160, 40') manuell betätigbar sind.

40. Fertigungseinrichtung nach einem der voranstehenden Ansprüche,
**dadurch gekennzeichnet, dass** die Programmverwaltungsfunktion (92) des Bedienprogramms (70) Teileprogramme (20) des CNC-Bearbeitungsprogrammkomplexes (68) werkstückbezogen verwaltet.

41. Fertigungseinrichtung nach einem der voranstehenden Ansprüche, **dadurch gekennzeichnet, dass** die Programmverwaltungsfunktion (92) des Bedienprogramms (70) Teileprogramme (20) des CNC-Bearbeitungsprogrammkomplexes (68) werkstückbezogen speichert.

42. Fertigungseinrichtung nach einem der voranstehenden Ansprüche, **dadurch gekennzeichnet, dass** die Programmverwaltungsfunktion (92) des Bedienprogramms (70) Teileprogramme (20) des CNC-Bearbeitungsprogrammkomplexes (68) werkstückbezogen sichert.

43. Fertigungseinrichtung nach einem der voranstehenden Ansprüche, **dadurch gekennzeichnet, dass** die Programmverwaltungsfunktion (92) des Bedienprogramms (70) Teileprogramme (20) des CNC-Bearbeitungsprogrammkomplexes (68) werkstückbezogen der Aktionssteuerung (10) übermittelt.

44. Fertigungseinrichtung nach einem der voranstehenden Ansprüche, **dadurch gekennzeichnet, dass** die Programmverwaltungsfunktion (92) des Bedienprogramms (70) Teileprogramme (20) des CNC-Bearbeitungsprogrammkomplexes (68) werkstückbezogen auf einzelne Kanäle (22) der Aktionssteuerung (10) verteilt und aktiviert.

45. Fertigungseinrichtung nach einem der voranstehenden Ansprüche, **dadurch gekennzeichnet, dass** das Bedienprogramm (70) eine Programmbearbeitungsfunktion (102) umfasst, mit welcher durch einen Zugriff zumindest auf Programmteile (20) des CNC-Bearbeitungsprogrammkomplexes (68) der CNC-Bearbeitungsprogrammkomplex (68) veränderbar ist.

46. Fertigungseinrichtung nach Anspruch 45, **dadurch gekennzeichnet, dass** die Programmbearbeitungsfunktion (102) einen Programmerstellungsmodus (104) umfasst.

47. Fertigungseinrichtung nach Anspruch 45 oder 46, **dadurch gekennzeichnet, dass** die Programmbearbeitungsfunktion (102) einen Eingabemodus (106) für Korrekturwerte umfasst.

48. Fertigungseinrichtung nach einem der Ansprüche 45 bis 47, **dadurch gekennzeichnet, dass** die Programmbearbeitungsfunktion (102) eine Programmänderung selbstständig in den CNC-Bearbeitungsprogrammkomplex (68) übernimmt.

49. Fertigungseinrichtung nach einem der Ansprüche 45 bis 48, **dadurch gekennzeichnet, dass** die Programmbearbeitungsfunktion (102) die in der Aktionssteuerung (10) vorhandenen Teileprogramme (20) selbstständig in die Bediensteuerung (60) zur Änderung zurücklädt.

50. Fertigungseinrichtung nach einem der Ansprüche 45 bis 49, **dadurch gekennzeichnet, dass** die Programmbearbeitungsfunktion (102) einen Eingabemodus (108) für Werkzeuge (WZ) umfasst.

51. Fertigungseinrichtung nach einem der Ansprüche 45 bis 50, **dadurch gekennzeichnet, dass** die Programmbearbeitungsfunktion (102) einen Eingabemodus (110) für Werkzeugkorrekturen umfasst.

52. Fertigungseinrichtung nach einem der voranstehenden Ansprüche, **dadurch gekennzeichnet, dass** das Bedienprogramm (70) eine Analysefunktion (112) umfasst.

53. Fertigungseinrichtung nach Anspruch 52, **dadurch gekennzeichnet, dass** in einem Identifikationsmodus (114) der Analysefunktion (112) ein aktuell in der Aktionssteuerung (10) bearbeiteter NC-Satz identifizierbar ist.

54. Fertigungseinrichtung nach Anspruch 52 oder 53, **dadurch gekennzeichnet, dass** in einem Anzeigemodus (116) der Analysefunktion (112) der mindestens eine zur Zeit aktive Programmbefehl anzeigbar ist.

55. Fertigungseinrichtung nach einem der Ansprüche 52 bis 54, **dadurch gekennzeichnet, dass** in einem Parameteranzeigemodus (118) der Analysefunktion (112) mindestens ein Parameter mindestens einer der virtuellen Bearbeitungseinheiten (46) anzeigbar ist.

56. Fertigungseinrichtung nach einem der voranstehenden Ansprüche, **dadurch gekennzeichnet, dass** das Bedienprogramm (70) dem Bedienprogramm der realen Werkzeugmaschine entspricht.

57. Fertigungseinrichtung nach Anspruch 56, **dadurch gekennzeichnet, dass** das Bedienprogramm (70) zur Kommunikation mit dem Steuerungsprogramm (18) mit einem Anpassprogramm (140) zusammenwirkt.

58. Fertigungseinrichtung nach einem der voranstehenden Ansprüche, **dadurch gekennzeichnet, dass** das Steuerungsprogramm (18) der Aktionssteuerung (10) ein werkzeugmaschinenfremdes Steuerungsprogramm ist.

59. Fertigungseinrichtung nach Anspruch 58, **dadurch gekennzeichnet, dass** das Anpassprogramm (140) das Bedienprogramm (70) an das werkzeugmaschinenfremde Steuerungsprogramm (18) anpasst.

60. Fertigungseinrichtung nach einem der Ansprüche 1 bis 59, **dadurch gekennzeichnet, dass** das Steuerungsprogramm (18) der Aktionssteuerung (10) das Kernsteuerungsprogramm (150) der realen Werkzeugmaschine zur Erzeugung der Steuerbefehle (24) umfasst.

61. Fertigungseinrichtung nach Anspruch 60, **dadurch gekennzeichnet, dass** die erste Datenverarbeitungseinheit (12) eine Programmumgebung (152) aufweist, auf welcher das Kernsteuerungsprogramm (150) der realen Werkzeugmaschine arbeitet und Steuerbefehle (24) erzeugt, die Steuerbefehlen der realen Werkzeugmaschine entsprechen.

62. Fertigungseinrichtung nach Anspruch 60 oder 61, **dadurch gekennzeichnet, dass** das Anpassprogramm (140') dem Kommunikationsprogramm der realen Bediensteuerung (60) der Werkzeugmaschine entspricht.

63. Fertigungseinrichtung nach einem der voranstehenden Ansprüche, **dadurch gekennzeichnet, dass** die erste Datenverarbeitungseinheit (12) und die zweite Datenverarbeitungseinheit (32) mit demselben Prozessor (64) arbeiten.

64. Fertigungseinrichtung nach einem der voranstehenden Ansprüche, **dadurch gekennzeichnet, dass** die erste, zweite und dritte Datenverarbeitungseinheit (12, 32, 62) mit demselben Prozessor (64) arbeiten.

65. Fertigungseinrichtung nach einem der voranstehenden Ansprüche, **dadurch gekennzeichnet, dass** die erste Datenverarbeitungseinheit (12) und/oder die zweite Datenverarbeitungseinheit (32) und/oder die dritte Datenverarbeitungseinheit (62) werkzeugmaschinenfremde Datenverarbeitungseinheiten sind.

66. Fertigungseinrichtung nach einem der voranstehenden Ansprüche, **dadurch gekennzeichnet, dass** die dritte Datenverarbeitungseinheit (62) den der Bediensteuerung (60) der realen Werkzeugmaschine zugeordneten Prozessor (64) einsetzt.

67. Fertigungseinrichtung nach einem der voranstehenden Ansprüche, **dadurch gekennzeichnet, dass** die zweite Datenverarbeitungseinheit (32) den der Bediensteuerung (60) der realen Werkzeugmaschine zugeordneten Prozessor (64) einsetzt.

68. Fertigungseinrichtung nach einem der voranstehenden Ansprüche, **dadurch gekennzeichnet, dass** die erste Datenverarbeitungseinheit (12) den der Bediensteuerung (60) der realen Werkzeugmaschine zugeordneten Prozessor (64) einsetzt.

69. Fertigungseinrichtung nach einem der voranstehenden Ansprüche, **dadurch gekennzeichnet, dass** die Visualisierungseinheit (40) für die Darstellung der virtuellen Bearbeitungseinheiten (46) und die Visualisierungseinheit (160) für die Darstellung der virtuellen Maschinensteuertafel (80') getrennte Einheiten sind.

70. Fertigungseinrichtung nach einem der voranstehenden Ansprüche, **dadurch gekennzeichnet, dass** die Visualisierungseinheit (40) für die Darstellung der virtuellen Bearbeitungseinheiten (46) und die Visualisierungseinheit für die Darstellung der virtuellen Maschinensteuertafel (80') identisch sind.

71. Fertigungseinrichtung nach Anspruch 70, **dadurch gekennzeichnet, dass** die Darstellung der Aktionen der virtuellen Bearbeitungseinheiten (46) und die Darstellung der virtuellen Maschinensteuertafel (80') zumindest teilweise überlagert erfolgt.

72. Verfahren zum Betreiben einer Fertigungseinrichtung für Werkstücke, umfassend
mindestens einen Fertigungsbereich (202, 204), in welchem mehrere mit einer Maschinensteuerung (212, 214) versehene Werkzeugmaschinen (206, 208) angeordnet sind, **dadurch gekennzeichnet, dass** ein Fertigungsorganisationssystem (220) mit einem Fertigungsorganisationsprogramm (224) mit den Maschinensteuerungen (212, 214) der Werkzeugmaschinen (206, 208) über einen Kommunikationspfad (234) kommuniziert, dass das Fertigungsorganisationsprogramm (224) die Bearbeitung von Werkstücken auf den Werkzeugmaschinen (206, 208) des mindestens einen Fertigungsbereichs (202, 204) organisiert, wobei von dem Fertigungsorganisationsprogramm (224) CNC-Bearbeitungsprogrammkomplexe (68) für die Bearbeitung von Werkstücken der mindestens einen Werkzeugmaschine (206, 208) zur Verfügung gestellt werden, dass zum Betrieb der Fertigungseinrichtung mindestens ein Verfahren zum Betreiben eines Simulationssystems (250,260) zur Verfügung steht, welches mit dem Fertigungsorganisationsprogramm (224) zusammenwirkt, dass das Verfahren zum Betreiben eines Simulationssystems Aktionen von Bearbeitungseinheiten einer der Werkzeugmaschinen, insbesondere von Aktionen bei der Bearbeitung eines Werkstücks, entsprechend einem CNC-Bearbeitungsprogrammkomplex (68) mittels mindestens einer ersten Visualisierungseinheit (40) in Form von Aktionen virtueller Bearbeitungseinheiten. (46) einer virtuellen Werkzeugmaschine (44), darstellt, dass bei dem Verfahren eine Aktionssteuerung (10) mit einem CNC-Sätze des CNC-Bearbeitungsprogrammkomplexes (68) verarbeitenden Steuerungsprogramm (18) Steuerbefehle (24) für Aktionen der virtuellen Bearbeitungseinheiten (46) ermittelt, dass bei dem Verfahren eine Visualisierungssteuerung (30) mit einem Visualisierungsprogramm (38) anhand von Konfigurationsdaten eines gespeicherten Maschinenmodells (48) und den von der Aktionssteuerung (10) ermittelten Steuerbefehlen (24) Aktionen der virtuellen Bearbeitungseinheiten (46) auf der ersten Visualisierungseinheit (40) darstellt, dass eine Bediensteuerung (60) mit einem Bedienprogramm (70) die Aktionssteuerung (10) betreibt und dass das Bedienprogramm (70) mit einer Programmverwaltungsfunktion (92) von dem gespeicherten CNC-Bearbeitungsprogrammkomplex (68) zur Ausführung desselben der Aktionssteuerung (10) zumindest Programmteile (20) desselben werkstückbezogen übergibt.

73. Verfahren nach Anspruch 72, **dadurch gekennzeichnet, dass** mehrere Fertigungsbereiche (202, 204) mit dem Fertigungsorganisationsprogramm (224) gekoppelt sind.

74. Verfahren nach Anspruch 72 oder 73, **dadurch gekennzeichnet, dass** das Fertigungsorganisationsprogramm (224) mit mehreren Simulationssystemen (250, 260) zusammenarbeitet.

75. Verfahren nach einem der Ansprüche 72 bis 74, **dadurch gekennzeichnet, dass** das Simulationssystem (250, 260) einem Fertigungsbereich (202, 204) zugeordnet wird.

76. Verfahren nach einem der Ansprüche 72 bis 75, **dadurch gekennzeichnet, dass** mehreren Fertigungsbereichen (202, 204) jeweils mindestens eines der Simulationssysteme (250, 260) nach einem der Ansprüche 1 und 31 bis 71 zugeordnet ist.

77. Verfahren nach einem der Ansprüche 72 bis 76, **dadurch gekennzeichnet dass** die Kommunikation zwischen dem Fertigungsorganisationsprogramm (224) und der mindestens einen Maschinensteuerung (212, 214) und zwischen dem Fertigungsorganisationssystem (220) und dem jeweiligen Simulationssystem (250, 260) im Wesentlichen identisch durchgeführt wird.

78. Verfahren nach einem der Ansprüche 72 bis 77, **dadurch gekennzeichnet, dass** von dem Fertigungsorganisationsprogramm (224) dem Simulationssystem (250, 260) CNC-Bearbeitungsprogrammkomplexe (68) für die Simulation von Aktionen von virtuellen Bearbeitungseinheiten (46) auf einer virtuellen Werkzeugmaschine (44) zur Verfügung gestellt werden.

79. Verfahren nach einem der Ansprüche 72 bis 78, **dadurch gekennzeichnet, dass** ein Organisationskommunikationsprogramm (240) zur Kommunikation mit der mindestens einen Maschinensteuerung (212, 214) verwendet wird.

80. Verfahren nach einem der Ansprüche 72 bis 79, **dadurch gekennzeichnet, dass** ein Organisationskommunikationsprogramm (240) zur Kommunikation mit dem Simulationssystem (250, 260) verwendet wird.

81. Verfahren nach Anspruch 79 oder 80, **dadurch gekennzeichnet, dass** das Organisationskommunikationsprogramm (240) zur Kommunikation mit der mindestens einen Maschinensteuerung (212, 214) im Wesentlichen identisch ist mit dem Organisationskommunikationsprogramm (240) zur Kommunikation mit dem mindestens einem Simulationssystem (250, 260).

82. Verfahren nach einem der Ansprüche 72 bis 81, **dadurch gekennzeichnet, dass** von der jeweiligen Maschinensteuerung (212, 214) ein Kommunikationsprogramm (242) zur Kommunikation mit dem Fertigungsorganisationsprogramm (224) verwendet wird.

83. Verfahren nach einem der Ansprüche 72 bis 82, **dadurch gekennzeichnet, dass** von dem Simulationssystem (250, 260) ein Kommunikationsprogramm (242) zur Kommunikation mit dem Fertigungsorganisationssystem (220) verwendet wird.

84. Verfahren nach Anspruch 82 oder 83, **dadurch gekennzeichnet, dass** das Kommunikationsprogramm (242) des jeweiligen Simulationssystems (250, 260) mit identischen Datenformaten und Datenspezifikationen arbeitet wie das Kommunikationsprogramm (242) der jeweiligen Maschinensteuerung (212, 214).

85. Verfahren nach Anspruch 84, **dadurch gekennzeichnet, dass** das Kommunikationsprogramm (242) des Simulationssystems (250, 260) im Wesentlichen identisch ist mit dem Kommunikationsprogramm (242) der jeweiligen Maschinensteuerung (212, 214).

86. Verfahren nach einem der Ansprüche 72 bis 85, **dadurch gekennzeichnet, dass** dem Fertigungsorganisationsprogramm (224) von den Maschinensteuerungen (212, 214) abgearbeitete CNC-Bearbeitungsprogrammkomplexe (68) übertragen werden.

87. Verfahren nach einem der Ansprüche 72 bis 86, **dadurch gekennzeichnet, dass** dem Fertigungsorganisationsprogramm (224) von dem jeweiligen Simulationssystem (250, 260) simulierte CNC-Bearbeitungsprogrammkomplexe (68) übertragen werden.

88. Verfahren nach Anspruch 86 oder 87, **dadurch gekennzeichnet, dass** von dem Fertigungsorganisationsprogramm (224) von dem jeweiligen Simulationssystem (250, 260) übertragene CNC-Bearbeitungsprogrammkomplexe (68) in derselben Weise verwaltet werden wie von der mindestens einen Maschinensteuerung (214, 216) übertragene CNC-Bearbeitungsprogrammkomplexe (68).

89. Verfahren nach einem der Ansprüche 72 bis 88, **dadurch gekennzeichnet, dass** dem Fertigungsorganisationsprogramm (224) von der mindestens einen Maschinensteuerung (212, 214) Rückmeldungen (272) hinsichtlich der Abarbeitung des jeweiligen CNC-Bearbeitungsprogrammkomplexes (68) übertragen werden.

90. Verfahren nach einem der Ansprüche 72 bis 89, **dadurch gekennzeichnet, dass** dem Fertigungsorganisationsprogramm (224) von dem jeweiligen Simulationssystem (250, 260) Rückmeldungen (272) hinsichtlich der Abarbeitung des jeweiligen CNC-Bearbeitungsprogrammkomplexes (68) übertragen werden.

91. Verfahren nach Anspruch 89 oder 90, **dadurch gekennzeichnet, dass** die Rückmeldungen (272) von der mindestens einen Maschinensteuerung (212, 214) und die Rückmeldungen von dem jeweiligen Simulationssystem (250, 260) eine im Wesentlichen identische Struktur aufweisen.

92. Verfahren nach einem der Ansprüche 72 bis 91, **dadurch gekennzeichnet, dass** von dem Fertigungsorganisationsprogramm (224) der mindestens einen Maschinensteuerung (212, 214) Steueranweisungen (270) übermittelt werden.

93. Verfahren nach einem der Ansprüche 72 bis 92, **dadurch gekennzeichnet, dass** von dem Fertigungsorganisationsprogramm (224) dem jeweiligen Simulationssystem (250, 260) Steueranweisungen (270) übermittelt werden.

94. Verfahren nach Anspruch 91 oder 92, **dadurch gekennzeichnet, dass** die Steueranweisungen (270) für die mindestens eine Maschinensteuerung (212, 214) und die Steueranweisungen (270) für das jeweilige Simulationssystem (250, 260) eine Im Wesentlichen identische Struktur aufweisen.

95. Verfahren nach einem der Ansprüche 72 bis 94, **dadurch gekennzeichnet, dass** die CNC-Bearbeitungsprogrammkomplexe (68) für das Fertigungsorganisationsprogramm (224) durch ein Eigenschaftenfeld als ungeprüft oder simulationsgeprüft erkannt werden.

96. Verfahren nach Anspruch 95, **dadurch gekennzeichnet, dass** die CNC-Bearbeitungsprogrammkomplexe (68) für das Fertigungsorganisationsprogramm (224) durch das Eigenschaftenfeld als produktionsgeprüft erkannt werden.

97. Verfahren nach einem der Ansprüche 72 bis 96, **dadurch gekennzeichnet, dass** von dem Fertigungsorganisationsprogramm (224) die CNC-Bearbeitungsprogrammkomplexe (68) werkstückbezogen verwaltet werden.

98. Verfahren nach einem der voranstehenden Ansprüche, **dadurch gekennzeichnet, dass** die Arbeit des Bedienprogramms (70) mittels einer Maschinensteuertafel (80) über aufrufbare Funktionen (92, 102, 112, 122) gesteuert wird.

99. Verfahren nach einem der voranstehenden Ansprüche, **dadurch gekennzeichnet, dass** einzelne Funktionen (92, 102, 112, 122) des Bedienprogramms (70) über manuelle Eingabeelemente (88) der Maschinensteuertafel (80) aktiviert werden.

100. Verfahren nach einem der voranstehenden Ansprüche, **dadurch gekennzeichnet, dass** über manuelle Eingabeelemente (88) eine Einwirkung auf den CNC-Bearbeitungsprogrammkomplex (68) erfolgt.

101. Verfahren nach einem der voranstehenden Ansprüche, **dadurch gekennzeichnet, dass** über manuelle Eingabeelemente (88) Funktionen der Aktionssteuerung (10) bedient werden.

102. Verfahren nach Anspruch 101, **dadurch gekennzeichnet, dass** über manuelle Eingabeelemente (88) ein Start/Stopp von mindestens einem Teileprogramm (20) in der Aktionssteuerung (10) erfolgt.

103. Verfahren nach einem der voranstehenden Ansprüche, **dadurch gekennzeichnet, dass** die Bediensteuerung (60) von dem Bedienprogramm (70) zur Anzeige für eine Bedienungsperson vorgesehene Informationen auf einem Anzeigefeld (90) der Maschinensteuertafel (80) darstellt.

104. Verfahren nach einem der voranstehenden Ansprüche, **dadurch gekennzeichnet, dass** die Maschinensteuertafel als virtuelle Maschinensteuertafel (80') auf einer Visualisierungseinheit (160, 40') dargestellt wird.

105. Verfahren nach Anspruch 104, **dadurch gekennzeichnet, dass** die manuellen Eingabeelemente (88') der virtuellen Maschinensteuertafel (80') durch einen Cursor (162) der Visualisierungseinheit (160, 40') manuell betätigt werden.

106. Verfahren nach einem der voranstehenden Ansprüche, **dadurch gekennzeichnet, dass** von der Programmverwaltungsfunktion (92) des Bedienprogramms (70) Teileprogramme (20) des CNC-Bearbeitungsprogrammkomplexes (68) werkstückbezogen verwaltet werden.

107. Verfahren nach einem der voranstehenden Ansprüche, **dadurch gekennzeichnet, dass** von der Programmverwaltungsfunktion (92) des Bedienprogramms (70) Teileprogramme (20) des CNC-Bearbeitungsprogrammkomplexes (68) werkstückbezogen gespeichert werden.

108. Verfahren nach einem der voranstehenden Ansprüche, **dadurch gekennzeichnet, dass** von der Programmverwaltungsfunktion (92) des Bedienprogramms (70) Teileprogramme (20) des CNC-Bearbeitungsprogrammkomplexes (68) werkstückbezogen gesichert werden.

109. Verfahren nach einem der voranstehenden Ansprüche, **dadurch gekennzeichnet, dass** von der Programmverwaltungsfunktion (92) des Bedienprogramms (70) Teileprogramme (20) des CNC-Bearbeitungsprogrammkomplexes (68) werkstückbezogen der Aktionssteuerung (10) übermittelt werden.

110. Verfahren nach einem der voranstehenden Ansprüche, **dadurch gekennzeichnet, dass** von der Programmverwaltungsfunktion (92) des Bedienprogramms (70) Teileprogramme (20) des CNC-Bearbeitungsprogrammkomplexes (68) werkstückbezogen auf einzelne Kanäle (22) der Aktionssteuerung (10) verteilt und aktiviert werden.

111. Verfahren nach einem der voranstehenden Ansprüche, **dadurch gekennzeichnet, dass** das Bedienprogramm (70) eine Programmbearbeitungsfunktion (102) umfasst, mit welcher durch einen Zugriff zumindest auf Programmteile (20) des CNC-Bearbeitungsprogrammkomplexes (68) der CNC-Bearbeitungsprogrammkomplex (68) verändert werden kann.

112. Verfahren nach Anspruch 111, **dadurch gekennzeichnet, dass** mit einem Programmerstellungsmodus (104) der Programmbearbeitungsfunktion (102) zumindest Programmteile (20) erstellt werden.

113. Verfahren nach Anspruch 111 oder 112, **dadurch gekennzeichnet, dass** mit einem Eingabemodus (106) der Programmbearbeitungsfunktion (102) Korrekturwerte eingegeben werden.

114. Verfahren nach einem der Ansprüche 111 bis 113, **dadurch gekennzeichnet, dass** von der Programmbearbeitungsfunktion (102) eine Programmänderung selbstständig in den CNC-Bearbeitungsprogrammkomplex (68) übernommen wird.

115. Verfahren nach einem der Ansprüche 111 bis 114, **dadurch gekennzeichnet, dass** von der Programmbearbeitungsfunktion (102) die in der Aktionssteuerung (10) vorhandenen Teileprogramme (20) selbstständig in die Bediensteuerung (60) zur Änderung zurückgeladen werden.

116. Verfahren nach einem der Ansprüche 111 bis 115, **dadurch gekennzeichnet, dass** mit einem Eingabemodus (108) der Programmbearbeitungsfunktion (102) eingegeben werden.

117. Verfahren nach einem der Ansprüche 111 bis 116, **dadurch gekennzeichnet, dass** mit einem Eingabemodus (110) der Programmbearbeitungsfunktion (102) Werkzeugkorrekturen vorgenommen werden.

118. Verfahren nach einem der voranstehenden Ansprüche, **dadurch gekennzeichnet, dass** mit einer Analysefunktion (112) des Bedienprogramms (70) eine Programmanalyse durchgeführt wird.

119. Verfahren nach Anspruch 118, **dadurch gekennzeichnet, dass** mit einem Identifikationsmodus (114) der Analysefunktion (112) ein aktuell in der Aktionssteuerung (10) bearbeiteter NC-Satz identifiziert wird.

120. Verfahren nach Anspruch 118 oder 119, **dadurch gekennzeichnet, dass** mit einem Anzeigemodus (116) der Analysefunktion (112) der mindestens eine zur Zeit aktive Programmbefehl angezeigt wird.

121. Verfahren nach einem der Ansprüche 118bis 120, **dadurch gekennzeichnet, dass** mit einem Parameteranzeigemodus (118) der Analysefunktion (112) mindestens ein Parameter mindestens einer der virtuellen Bearbeitungseinheiten (46) angezeigt wird.

122. Verfahren nach einem der voranstehenden Ansprüche, **dadurch gekennzeichnet, dass** das Bedienprogramm (70) dem Bedienprogramm der realen Werkzeugmaschine entspricht.

123. Verfahren nach Anspruch 122, **dadurch gekennzeichnet, dass** das Bedienprogramm (70) mit dem Steuerungsprogramm (18) über ein Anpassprogramm (140) kommuniziert.

124. Verfahren nach einem der voranstehenden Ansprüche, **dadurch gekennzeichnet, dass** das Steuerungsprogramm (18) der Aktionssteuerung (10) ein werkzeugmaschinenfremdes Steuerungsprogramm ist.

125. Verfahren nach einem der voranstehenden Ansprüche, **dadurch gekennzeichnet, dass** das Steuerungsprogramm (18) der Aktionssteuerung (10) mit dem Kernsteuerungsprogramm (150) der realen Werkzeugmaschine zur Erzeugung der Steuerbefehle (24) arbeitet.

126. Verfahren nach Anspruch 125, **dadurch gekennzeichnet, dass** das Steuerungsprogramm (18') eine Programmumgebung (152) umfasst, auf welcher das Kernsteuerungsprogramm (150) der realen Werkzeugmaschine arbeitet und Steuerbefehle (24) erzeugt, die Steuerbefehlen der realen Werkzeugmaschine entsprechen.

127. Verfahren nach einem der voranstehenden Ansprüche, **dadurch gekennzeichnet, dass** das Bedienprogramm (70) auf dem der Bediensteuerung (60) der realen Werkzeugmaschine zugeordneten Prozessor (64) läuft.

128. Verfahren nach einem der voranstehenden Ansprüche, **dadurch gekennzeichnet, dass** das Visualisierungsprogramm (38) auf dem der Bediensteuerung (60) der realen Werkzeugmaschine zugeordneten Prozessor (64) läuft.

129. Verfahren nach einem der voranstehenden Ansprüche, **dadurch gekennzeichnet, dass** das Steuerungsprogramm (18') auf dem der Bediensteuerung (60) der realen Werkzeugmaschine zugeordneten Prozessor (64) läuft.

130. Verfahren nach einem der voranstehenden Ansprüche, **dadurch gekennzeichnet, dass** Aktionen der virtuellen Bearbeitungseinheiten (46) und die virtuelle Maschinensteuertafel (80') zumindest teilweise überlagert dargestellt werden.

## Claims

1. A production facility for workpieces comprising
at least one production area (202, 204) in which a number of machine tools (206, 208) provided with a machine control (212, 214) are disposed,
a data processing unit (222), which is coupled with the machine controls (212, 214) of the machine tools (206, 208) via a communication path (234), and has a program (224), which provides, to the machine tools (206, 208), CNC machining program complexes (68) for the machining of workpieces,
**characterized in that** the data processing unit (222) is included in a production organization system (220), which organizes the machining of workpieces on the machine tools (206, 208) of the at least one production area (202, 204),
**in that** the program is a production organization program (224),
**in that** at least one simulation system (250, 260) is associated with the production facility, which simulation system is coupled with the production organization system (220),
**in that** the simulation system (250, 260) represents actions of machining units of one of the machine tools, in particular actions in the machining of a workpiece, in accordance with a CNC machining program complex (68) by means of at least one first visualization unit (40) in the form of actions of virtual machining units (46) of a virtual machine tool (44),
**in that** the simulation system (250, 260) comprises an action control (10), which has at least one first data processing unit (12), which establishes control commands (24) for actions of the virtual machining units (46) by a control program (18) processing CNC blocks of the CNC machining program complex (68),
**in that** the simulation system (250, 260) comprises a visualization control (30), which has at least one second data processing unit (32), which represents actions of the virtual machining units (46) on the first visualization unit (40) by a visualization program (38) on the basis of configuration data of a stored machine model (48) and the control commands (24) determined by the action control (10),
**in that** the simulation system comprises an operating control (60) with a third data processing unit (62), which operates the action control (10) by an operating program (70),
and **in that** the operating program (70) has a program management function (92), which transfers at least program parts (20) of the CNC machining program complex (68) in a workpiece-related manner from said CNC machining program complex (68) stored in a memory (66) of the third data processing unit (62) to the action control (10) for executing said program complex.

2. A production facility according to Claim 1, **characterized in that** the production facility has a number of production areas (202, 204), which are coupled with the production organization system (220).

3. A production facility according to Claim 1 or 2, **characterized in that** a number of simulation systems (250, 260) are associated with the production organization system (220).

4. A production facility according to any of Claims 1 to 3, **characterized in that** the simulation system (250, 260) is associated with one production area (202, 204).

5. A production facility according to any of the preceding claims, **characterized in that** at least one of the simulation systems (250, 260) is respectively associated with a number of production areas (202, 204).

6. A production facility according to any of the preceding claims, **characterized in that** the communication path (234) between the production organization system (220) and the at least one machine control (212, 214) and the communication path (234) between the production organization system (220) and the respective simulation system (250, 260) are identically formed.

7. A production facility according to any of the preceding claims, **characterized in that** the production organization system (220) provides the simulation system (250, 260) with CNC machining program complexes (68) for the simulation of actions of virtual machining units (46) on a virtual machine tool (44).

8. A production facility according to any of the preceding claims, **characterized in that** the production organization system (220) has an organization communication unit (230) with at least one communication interface (232) and **in that** the machine control (212, 214) is coupled with the at least one communication interface (232).

9. A production facility according to Claim 7, **characterized in that** the organization communication unit (230) has a further communication interface (232), with which the at least one simulation system (250, 260) is coupled.

10. A production facility according to Claim 9, **characterized in that** the communication interface (232) for the at least one simulation system (250, 260) and the at least one communication interface (232) for the at least one machine control (212, 214) are formed substantially identically.

11. A production facility according to any of the preceding claims, **characterized in that** the organization communication unit (230) has an organization communication program (240) for the communication with the at least one machine control (212, 214).

12. A production facility according to any of the preceding claims, **characterized in that** the organization communication unit (230) has an organization communication program (240) for the communication with the simulation system (250, 260).

13. A production facility according to Claim 11 or 12, **characterized in that** the organization communication program (240) for the communication with the at least one machine control (212, 214) is substantially identical to the organization communication program (240) for the communication with the at least one simulation system (250, 260).

14. A production facility according to any of the preceding claims, **characterized in that** a communication unit (236) with a communication program (242) for the communication with the production organization system (220) is associated with the respective machine control (212, 214).

15. A production facility according to any of the preceding claims, **characterized in that** a communication unit (236) with a communication program (242) for the communication with the production organization system (220) is associated with the simulation system (250, 260).

16. A production facility according to Claim 14 or 15, **characterized in that** the communication program (242) of the respective simulation system (250, 260) works with identical data formats and data specifications as the communication program (242) of the respective machine control (212, 214).

17. A production facility according to Claim 16, **characterized in that** the communication program (242) of the simulation system (250, 260) is substantially identical to the communication program (242) of the respective machine control (212, 214).

18. A production facility according to any of the preceding claims, **characterized in that** CNC machining program complexes (68) processed by the machine controls (212, 214) can be transferred to the production organization system (220).

19. A production facility according to any of the preceding claims, **characterized in that** CNC machining program complexes (68) simulated by the respective simulation system (250, 260) can be transferred to the production organization system (220).

20. A production facility according to Claim 18 or 19, **characterized in that** the production organization system (220) manages CNC machining program complexes (68) transferred from the respective simulation system (250, 260) in the same way as CNC machining program complexes (68) transferred from the at least one machine control (214, 216).

21. A production facility according to any of the preceding claims, **characterized in that** the production organization system (220) receives from the at least one machine control (212, 214) acknowledgements (272) regarding the processing of the respective CNC machining program complex (68) in said machine control.

22. A production facility according to any of the preceding claims, **characterized in that** the production organization system (220) receives from the respective simulation system (250, 260) acknowledgements (272) regarding the processing of the respective CNC machining program complex (68).

23. A production facility according to Claim 21 or 22, **characterized in that** the acknowledgements (272) from the at least one machine control (212, 214) and the acknowledgements from the respective simulation system (250, 260) have a substantially identical structure.

24. A production facility according to any of the preceding claims, **characterized in that** the production organization system (220) transmits control instructions (270) to the at least one machine control (212, 214).

25. A production facility according to any of the preceding claims, **characterized in that** the production organization system (220) transmits control instructions (270) to the respective simulation system (250, 260).

26. A production facility according to Claim 24 or 25, **characterized in that** the control instructions (270) for the at least one machine control (212, 214) and the control instructions (270) for the respective simulation system (250, 260) have a substantially identical structure.

27. A production facility according to any of the preceding claims, **characterized in that** the production organization system (220) has a data memory (226) for the CNC machining program complexes (68).

28. A production facility according to any of the preceding claims, **characterized in that** the CNC machining program complexes (68) are identifiable by a property field as untested or simulation-tested for the production organization program (224).

29. A production facility according to Claim 28, **characterized in that** the CNC machining program complexes (68) are identifiable by the property field as production-tested for the production organization program (224).

30. A production facility according to any of the preceding claims, **characterized in that** the production organization system (220) manages the CNC machining program complexes (68) in a workpiece-related manner.

31. A production facility according to any of the preceding claims, **characterized in that** a machine control panel (80) is associated with the operating control (60) of the simulation system.

32. A production facility according to Claim 31, **characterized in that**, by means of the machine control panel (80), the work of the operating program (70) can be controlled by way of callable functions (92, 102, 112, 122).

33. A production facility according to Claim 32, **characterized in that** the machine control panel (80) has manual input elements (88) for activating individual functions (92, 102, 112, 122) of the operating program (70).

34. A production facility according to any of Claims 31 to 33, **characterized in that** the machine control panel (80) has manual input elements (88) for influencing the CNC machining program complex (68).

35. A production facility according to any of Claims 31 to 34, **characterized in that** the machine control panel (80) has manual input elements (88) for operating functions of the action control (10).

36. A production facility according to Claim 35, **characterized in that** the machine control panel (80) comprises manual input elements (88) for starting/stopping at least one partial program (20) in the action control (10).

37. A production facility according to any of Claims 31 to 36, **characterized in that** the operating control (60) is coupled with a display area (90) of the machine control panel (80), and **in that** the operating control (60) presents on the display area (90) information provided by the operating program (70) that is intended to be indicated to an operator.

38. A production facility according to any of Claims 31 to 37, **characterized in that** the machine control panel is a virtual machine control panel (80') represented on a visualization unit (160, 40').

39. A production facility according to Claim 38, **characterized in that** the manual input elements (88') of the virtual machine control panel (80') can be manually actuated by a cursor (162) of the visualization unit (160, 40').

40. A production facility according to any of the preceding claims, **characterized in that** the program management function (92) of the operating program (70) manages partial programs (20) of the CNC machining program complex (68) in a workpiece-related manner.

41. A production facility according to any of the preceding claims, **characterized in that** the program management function (92) of the operating program (70) stores partial programs (20) of the CNC machining program complex (68) in a workpiece-related manner.

42. A production facility according to any of the preceding claims, **characterized in that** the program management function (92) of the operating program (70) saves partial programs (20) of the CNC machining program complex (68) in a workpiece-related manner.

43. A production facility according to any of the preceding claims, **characterized in that** the program management function (92) of the operating program (70) transmits partial programs (20) of the CNC machining program complex (68) to the action control (10) in a workpiece-related manner.

44. A production facility according to any of the preceding claims, **characterized in that** the program management function (92) of the operating program (70) distributes and activates in a workpiece-related manner partial programs (20) of the CNC machining program complex (68) on individual channels (22) of the action control (10).

45. A production facility according to any of the preceding claims, **characterized in that** the operating program (70) comprises a program processing function (102) by which the CNC machining program complex (68) can be modified by access at least to program parts (20) of the CNC machining program complex (68).

46. A production facility according to Claim 45, **characterized in that** the program processing function (102) comprises a program creation mode (104).

47. A production facility according to Claim 45 or 46, **characterized in that** the program processing function (102) comprises an input mode (106) for correction values.

48. A production facility according to any of Claims 45 to 47, **characterized in that** the program processing function (102) automatically takes over a program modification into the CNC machining program complex (68).

49. A production facility according to any of Claims 45 to 48, **characterized in that** the program processing function (102) automatically loads the partial programs (20) that are present in the action control (10) back into the operating control (60) for modification.

50. A production facility according to any of Claims 45 to 49, **characterized in that** the program processing function (102) comprises an input mode (108) for tools (WZ).

51. A production facility according to any of Claims 45 to 50, **characterized in that** the program processing function (102) comprises an input mode (110) for tool corrections.

52. A production facility according to any of the preceding claims, **characterized in that** the operating program (70) comprises an analysis function (112).

53. A production facility according to Claim 52, **characterized in that**, in an identification mode (114) of the analysis function (112), an NC block currently being processed in the action control (10) is identifiable.

54. A production facility according to Claim 52 or 53, **characterized in that**, in a display mode (116) of the analysis function (112), the at least one program command that is active at the time can be displayed.

55. A production facility according to any of Claims 52 to 54, **characterized in that**, in a parameter display mode (118) of the analysis function (112), at least one parameter of at least one of the virtual machining units (46) can be displayed.

56. A production facility according to any of the preceding claims, **characterized in that** the operating program (70) corresponds to the operating program of the actual machine tool.

57. A production facility according to Claim 56, **characterized in that**, for communication with the control program (18), the operating program (70) interacts with an adaptation program (140).

58. A production facility according to any of the preceding claims, **characterized in that** the control program (18) of the action control (10) is a control program non-specific to the machine tool.

59. A production facility according to Claim 58, **characterized in that** the adaptation program (140) adapts the operating program (70) to the control program (18) that is non-specific to the machine tool.

60. A production facility according to any of Claims 1 to 59, **characterized in that** the control program (18) of the action control (10) comprises the core control program (150) of the actual machine tool for producing the control commands (24).

61. A production facility according to Claim 60, **characterized in that** the first data processing unit (12) has a program environment (152), on which the core control program (150) of the actual machine tool works and produces control commands (24) which correspond to control commands of the actual machine tool.

62. A production facility according to Claim 60 or 61, **characterized in that** the adaptation program (140') corresponds to the communication program of the actual operating control (60) of the machine tool.

63. A production facility according to any of the preceding claims, **characterized in that** the first data processing unit (12) and the second data processing unit (32) work with the same processor (64).

64. A production facility according to any of the preceding claims, **characterized in that** the first, second and third data processing units (12, 32, 62) work with the same processor (64).

65. A production facility according to any of the preceding claims, **characterized in that** the first data processing unit (12) and/or the second data processing unit (32) and/or the third data processing unit (62) are data processing units that are non-specific to the machine tool.

66. A production facility according to any of the preceding claims, **characterized in that** the third data processing unit (62) uses the processor (64) associated with the operating control (60) of the actual machine tool.

67. A production facility according to any of the preceding claims, **characterized in that** the second data processing unit (32) uses the processor (64) associated with the operating control (60) of the actual machine tool.

68. A production facility according to any of the preceding claims, **characterized in that** the first data processing unit (12) uses the processor (64) associated with the operating control (60) of the actual machine tool.

69. A production facility according to any of the preceding claims, **characterized in that** the visualization unit (40) for representing the virtual machining units (46) and the visualization unit (160) for representing the virtual machine control panel (80') are separate units.

70. A production facility according to any of the preceding claims, **characterized in that** the visualization unit (40) for representing the virtual machining units (46) and the visualization unit for representing the virtual machine control panel (80') are identical.

71. A production facility according to Claim 70, **characterized in that** the representation of the actions of the virtual machining units (46) and the representation of the virtual machine control panel (80') takes place at least partially superposed.

72. A method for operating a production facility for workpieces, comprising
at least one production area (202, 204), in which a number of machine tools (206, 208) provided with a machine control (212, 214) are disposed,
**characterized in that** a production organization system (220) with a production organization program (224) communicates with the machine controls (212, 214) of the machine tools (206, 208) via a communication path (234),
**in that** the production organization program (224) organsizes the machining of workpieces on the machine tools (206, 208) of the at least one production area (202, 204), CNC machining program complexes (68) for the machining of workpieces being provided to the at least one machine tool (206, 208) by the production organization program (224), **in that** at least one method for operating a simulation system (250, 260) is available for operating the production facility and interacts with the production organization program (224),
**in that** the method for operating a simulation system represents actions of machining units of one of the machine tools, in particular actions in the machining of a workpiece, in accordance with a CNC machining program complex (68) by means of at least one first visualization unit (40) in the form of actions of virtual machining units (46) of a virtual machine tool (44),
**in that** in the method, an action control (10) establishes control commands (24) for actions of the virtual machining units (46) by a control program (18) processing CNC blocks of the CNC machining program complex (68),
**in that** in the method a visualization control (30) represents actions of the virtual machining units (46) on the first visualization unit (40) by a visualization program (38) on the basis of configuration data of a stored machine model (48) and the control commands (24) determined by the action control (10),
**in that** an operating control (60) uses an operating program (70) to operate the action control (10),
and **in that** the operating program (70) uses a program management function (92) to transfer at least program parts (20) of the CNC machining program complex (68) in a workpiece-related manner from said stored CNC machining program complex (68) to the action control (10) for executing said program complex.

73. A method according to Claim 72, **characterized in that** a number of production areas (202, 204) are coupled with the production organization program (224).

74. A method according to Claim 72 or 73, **characterized in that** the production organization program (224) works together with a number of simulation systems (250, 260).

75. A method according to any of Claims 72 to 74, **characterized in that** the simulation system (250, 260) is associated with one production area (202, 204).

76. A method according to any of Claims 72 to 75, **characterized in that** at least one of the simulation systems (250, 260) according to any of Claims 1 and 31 to 71 is respectively associated with a number of production areas (202, 204).

77. A method according to any of Claims 72 to 76, **characterized in that** the communication between the production organization program (224) and the at least one machine control (212, 214) and between the production organization system (220) and the respective simulation system (250, 260) is carried out substantially identically.

78. A method according to any of Claims 72 to 77, **characterized in that** CNC machining program complexes (68) for the simulation of actions of virtual machining units (46) on a virtual machine tool (44) are made available to the simulation system (250, 260) by the production organization program (224).

79. A method according to any of Claims 72 to 78, **characterized in that** an organization communication program (240) is used for the communication with the at least one machine control (212, 214).

80. A method according to any of Claims 72 to 79, **characterized in that** an organization communication program (240) is used for the communication with the simulation system (250, 260).

81. A method according to Claim 79 or 80, **characterized in that** the organization communication program (240) for the communication with the at least one machine control (212, 214) is substantially identical to the organization communication program (240) for the communication with the at least one simulation system (250, 260).

82. A method according to any of Claims 72 to 81, **characterized in that** a communication program (242) is used by the respective machine control (212, 214) for the communication with the production organization program (224).

83. A method according to any of Claims 72 to 82, **characterized in that** a communication program (242) is used by the simulation system (250, 260) for the communication with the production organization system (220).

84. A method according to Claim 82 or 83, **characterized in that** the communication program (242) of the respective simulation system (250, 260) works with identical data formats and data specifications as the communication program (242) of the respective machine control (212, 214).

85. A method according to Claim 84, **characterized in that** the communication program (242) of the simulation system (250, 260) is substantially identical to the communication program (242) of the respective machine control (212, 214).

86. A method according to any of Claims 72 to 85, **characterized in that** CNC machining program complexes (68) processed by the machine controls (212, 214) are transferred to the production organization program (224).

87. A method according to any of Claims 72 to 86, **characterized in that** CNC machining program complexes (68) simulated by the respective simulation system (250, 260) are transferred to the production organization program (224).

88. A method according to Claim 86 or 87, **characterized in that** CNC machining program complexes (68) transferred from the respective simulation system (250, 260) are managed by the production organization program (224) in the same way as CNC machining program complexes (68) transferred from the at least one machine control (214, 216).

89. A method according to any of Claims 72 to 88, **characterized in that** acknowledgements (272) regarding the processing of the respective CNC machining program complex (68) are transferred to the production organization program (224) from the at least one machine control (212, 214).

90. A method according to any of Claims 72 to 89, **characterized in that** acknowledgements (272) regarding the processing of the respective CNC machining program complex (68) are transferred to the production organization program (224) from the respective simulation system (250, 260).

91. A method according to Claim 89 or 90, **characterized in that** the acknowledgements (272) from the at least one machine control (212, 214) and the acknowledgements from the respective simulation system (250, 260) have a substantially identical structure.

92. A method according to any of Claims 72 to 91, **characterized in that** control instructions (270) are transmitted from the production organization program (224) to the at least one machine control (212, 214).

93. A method according to any of Claims 72 to 92, **characterized in that** control instructions (270) are transmitted from the production organization program (224) to the respective simulation system (250, 260).

94. A method according to Claim 91 or 92, **characterized in that** the control instructions (270) for the at least one machine control (212, 214) and the control instructions (270) for the respective simulation system (250, 260) have a substantially identical structure.

95. A method according to any of Claims 72 to 94, **characterized in that** the CNC machining program complexes (68) are identified by a property field as untested or simulation-tested for the production organization program (224).

96. A method according to Claim 95, **characterized in that** the CNC machining program complexes (68) are identified by the property field as production-tested for the production organization program (224).

97. A method according to any of Claims 72 to 96, **characterized in that** the CNC machining program complexes (68) are managed by the production organization program (224) in a workpiece-related manner.

98. A method according to any of the preceding claims, **characterized in that** the work of the operating program (70) is controlled by means of a machine control panel (80), by way of callable functions (92, 102, 112, 122).

99. A method according to any of the preceding claims, **characterized in that** individual functions (92, 102, 112, 122) of the operating program (70) are activated by means of manual input elements (88) of the machine control panel (80).

100. A method according to any of the preceding claims, **characterized in that** influencing of the CNC machining program complex (68) takes place by means of manual input elements (88).

101. A method according to any of the preceding claims, **characterized in that** functions of the action control (10) are operated by means of manual input elements (88).

102. A method according to any of the preceding claims, **characterized in that** starting/stopping of at least a partial program (20) in the action control (10) takes place by means of manual input elements (88).

103. A method according to any of the preceding claims, **characterized in that** the operating control (60) presents on a display area (90) of the machine control panel (80) information provided by the operating program (70) that is intended to be indicated to an operator.

104. A method according to any of the preceding claims, **characterized in that** the machine control panel is represented as a virtual machine control panel (80') on a visualization unit (160, 40').

105. A method according to Claim 104, **characterized in that** the manual input elements (88') of the virtual machine control panel (80') are manually actuated by a cursor (162) of the visualization unit (160, 40').

106. A method according to any of the preceding claims, **characterized in that** partial programs (20) of the CNC machining program complex (68) are managed in a workpiece-related manner by the program management function (92) of the operating program (70).

107. A method according to any of the preceding claims, **characterized in that** partial programs (20) of the CNC machining program complex (68) are stored in a workpiece-related manner by the program management function (92) of the operating program (70).

108. A method according to any of the preceding claims, **characterized in that** partial programs (20) of the CNC machining program complex (68) are saved in a workpiece-related manner by the program management function (92) of the operating program (70).

109. A method according to any of the preceding claims, **characterized in that** partial programs (20) of the CNC machining program complex (68) are transmitted to the action control (10) in a workpiece-related manner by the program management function (92) of the operating program (70).

110. A method according to any of the preceding claims, **characterized in that** partial programs (20) of the CNC machining program complex (68) are distributed and activated in a workpiece-related manner on individual channels (22) of the action control (10) by the program management function (92) of the operating program (70).

111. A method according to any of the preceding claims, **characterized in that** the operating program (70) comprises a program processing function (102) by which the CNC machining program complex (68) can be modified by access at least to program parts (20) of the CNC machining program complex (68).

112. A method according to Claim 111, **characterized in that**, with a program creation mode (104) of the program processing function (102), at least program parts (20) are created.

113. A method according to Claim 111 or 112, **characterized in that**, with an input mode (106) of the program processing function (102), correction values are input.

114. A method according to any of Claims 111 to 113, **characterized in that** a program modification is automatically taken over into the CNC machining program complex (68) by the program processing function (102).

115. A method according to any of Claims 111 to 114, **characterized in that** the partial programs (20) that are present in the action control (10) are automatically loaded by the program processing function (102) back into the operating control (60) for modification.

116. A method according to any of Claims 111 to 115, **characterized in that**, with an input mode (108) of the program processing function (102), inputs are made.

117. A method according to any of Claims 111 to 116, **characterized in that**, with an input mode (110) of the program processing function (102), tool corrections are performed.

118. A method according to any of the preceding claims, **characterized in that**, with an analysis function (112) of the operating program (70), a program analysis is carried out.

119. A method according to Claim 118, **characterized in that**, with an identification mode (114) of the analysis function (112), an NC block that is currently being processed in the action control (10) is identified.

120. A method according to Claim 118 or 119, **characterized in that**, with a display mode (116) of the analysis function (112), the at least one program command that is active at the time is displayed.

121. A method according to any of Claims 118 to 120, **characterized in that**, with a parameter display mode (118) of the analysis function (112), at least one parameter of at least one of the virtual machining units (46) is displayed.

122. A method according any of the preceding claims, **characterized in that** the operating program (70) corresponds to the operating program of the actual machine tool.

123. A method according to Claim 122, **characterized in that** the operating program (70) communicates with the control program (18) via an adaptation program (140).

124. A method according to any of the preceding claims, **characterized in that** the control program (18) of the action control (10) is a control program non-specific to the machine tool.

125. A method according any of the preceding claims, **characterized in that** the control program (18) of the action control (10) works with the core control program (150) of the actual machine tool for producing the control commands (24).

126. A method according to Claim 125, **characterized in that** the control program (18') comprises a program environment (152), on which the core control program (150) of the actual machine tool works and produces control commands (24) which correspond to control commands of the actual machine tool.

127. A method according to any of the preceding claims, **characterized in that** the operating program (70) runs on the processor (64) associated with the operating control (60) of the actual machine tool.

128. A method according to any of the preceding claims, **characterized in that** the visualization program (38) runs on the processor (64) associated with the operating control (60) of the actual machine tool.

129. A method according to any of the preceding claims, **characterized in that** the control program (18') runs on the processor (64) associated with the operating control (60) of the actual machine tool.

130. A method according to any of the preceding claims, **characterized in that** actions of the virtual machining units (46) and the virtual machine control panel (80') are represented at least partially superposed.

## Revendications

1. Dispositif de fabrication pour des pièces à usiner comprenant
au moins une zone de fabrication (202, 204), dans laquelle plusieurs machines-outils (206, 208) pourvues d'une commande de machine (212, 214) sont disposées,
une unité de traitement de données (222), qui est couplée aux commandes de machine (212, 214) des machines-outils (206, 208) par l'intermédiaire d'un chemin de communication (234), et comprenant un programme (224), qui fournit aux machines-outils (206, 208) des paquets d'usinage CNC (68) pour l'usinage de pièces à usiner, **caractérisé en ce que** l'unité de traitement de données (222) est comprise par un système d'organisation de fabrication (220), qui organise l'usinage de pièces à usiner sur les machines-outils (206, 208) de l'au moins une zone de fabrication (202, 204), **en ce que** le programme est un programme d'organisation de fabrication (224), **en ce qu'**au moins un système de simulation (250, 260) est associé au dispositif de fabrication, lequel système de simulation est couplé au système d'organisation de fabrication (220), **en ce que** le système de simulation (250, 260) représente des actions d'unités d'usinage d'une des machines-outils, en particulier des actions lors de l'usinage d'une pièce à usiner, conformément à un paquet d'usinage CNC (68) au moyen au moins d'une première unité de visualisation (40) sous la forme d'actions d'unités d'usinage (46) virtuelles d'une machine-outil (44) virtuelle, **en ce que** le système de simulation (250, 260) comprend une commande d'action (10), qui présente au moins une première unité de traitement de données (12), qui détermine, avec un programme de commande (18) traitant des blocs CNC du paquet d'usinage CNC (68), des ordres de commande (24) pour des actions des unités d'usinage (46) virtuelles, **en ce que** le système de simulation (250, 260) comprend une commande de visualisation (30), qui présente au moins une deuxième unité de traitement de données (32), qui représente sur la première unité de visualisation (40) avec un programme de visualisation (38) à l'aide de données de configuration d'un modèle de machine (48) mémorisé et des ordres de commande (24) déterminées par la commande d'action (10), des actions des unités d'usinage (46) virtuelles, **en ce que** le système de simulation comprend une commande d'utilisation (60) pourvue d'une troisième unité de traitement de données (62), qui exploite, avec un programme d'utilisation (70), la commande d'action (10), et **en ce que** le programme d'utilisation (70) présente une fonction d'administration de programme (92), qui transmet, par le paquet d'usinage CNC (68) mémorisé dans une mémoire (66) de la troisième unité de traitement de données (62), aux fins de la mise en oeuvre de ce dernier, à la commande d'action (10) au moins des parties de programme (20) en lien avec la pièce à usiner.

2. Dispositif de fabrication selon la revendication 1, **caractérisé en ce que** le dispositif de fabrication présente plusieurs zones de fabrication (202, 204), qui sont couplées au système d'organisation de fabrication (220).

3. Dispositif de fabrication selon la revendication 1 ou 2, **caractérisé en ce que** plusieurs systèmes de simulation (250, 260) sont associés au système d'organisation de fabrication (220).

4. Dispositif de fabrication selon l'une quelconque des revendications 1 à 3, **caractérisé en ce que** le système de simulation (250, 260) est associé à une zone de fabrication (202, 204).

5. Dispositif de fabrication selon l'une quelconque des revendications précédentes, **caractérisé en ce que** respectivement au moins un des systèmes de simulation (250, 260) selon l'une quelconque des revendications précédentes est associé à plusieurs zones de fabrication (202, 204).

6. Dispositif de fabrication selon l'une quelconque des revendications précédentes, **caractérisé en ce que** le chemin de communication (234) entre le système d'organisation de fabrication (220) et l'au moins une commande de machine (212, 214) et le chemin de communication (234) entre le système d'organisation de fabrication (220) et le système de simulation (250, 260) respectif sont configurés de manière identique.

7. Dispositif de fabrication selon l'une quelconque des revendications précédentes, **caractérisé en ce que** le système d'organisation de fabrication (220) fournit au système de simulation (250, 260) des paquets d'usinage CNC (68) pour la simulation d'actions d'unités d'usinage (46) virtuelles sur une machine-outil (44) virtuelle.

8. Dispositif de fabrication selon l'une quelconque des revendications, **caractérisé en ce que** le système d'organisation de fabrication (220) présente une unité de communication d'organisation (230) pourvue au moins d'une interface de communication (232), et **en ce que** la commande de machine (212, 214) est couplée à l'au moins une interface de communication (232).

9. Dispositif de fabrication selon la revendication 7, **caractérisé en ce que** l'unité de communication d'organisation (230) présente une autre interface de communication (232), à laquelle l'au moins un système de simulation (250, 260) est couplé.

10. Dispositif de fabrication selon la revendication 9, **caractérisé en ce que** l'interface de communication (232) pour l'au moins un système de simulation (250, 260) et l'au moins une interface de communication (232) pour l'au moins une commande de machine (212, 214) sont configurées essentiellement de manière identique.

11. Dispositif de fabrication selon l'une quelconque des revendications précédentes, **caractérisé en ce que** l'unité de communication d'organisation (230) présente un programme de communication d'organisation (240) servant à la communication avec l'au moins une commande de machine (212, 214).

12. Dispositif de fabrication selon l'une quelconque des revendications précédentes, **caractérisé en ce que** l'unité de communication d'organisation (230) présente un programme de communication d'organisation (240) servant à la communication avec le système de simulation (250, 260).

13. Dispositif de fabrication selon la revendication 11 ou 12, **caractérisé en ce que** le programme de communication d'organisation (240) servant à la communication avec l'au moins une commande de machine (212, 214) est essentiellement identique au programme de communication d'organisation (240) servant à la communication avec l'au moins un système de simulation (250, 260).

14. Dispositif de fabrication selon l'une quelconque des revendications précédentes, **caractérisé en ce qu'**une unité de communication (236) comprenant un programme de communication (242) servant à la communication avec le système d'organisation de fabrication (220) est associée à la commande de machine (212, 214) respective.

15. Dispositif de fabrication selon l'une quelconque des revendications précédentes, **caractérisé en ce qu'**une unité de communication (236) comprenant un programme de communication (242) servant à la communication avec le système d'organisation de fabrication (220) est associée au système de simulation (250, 260).

16. Dispositif de fabrication selon la revendication 14 ou 15, **caractérisé en ce que** le programme de communication (242) du système de simulation (250, 260) respectif fonctionne avec des formats de données et des spécifications de données identiques à celles du programme de communication (242) de la commande de machine (212, 214) respective.

17. Dispositif de fabrication selon la revendication 16, **caractérisé en ce que** le programme de communication (242) du système de simulation (250, 260) est essentiellement identique au programme de communication (242) de la commande de machine (212, 214) respective.

18. Dispositif de fabrication selon l'une quelconque des revendications précédentes, **caractérisé en ce que** des paquets d'usinage CNC (68) exécutés par les commandes de machine (212, 214) peuvent être transmis sur le système d'organisation de fabrication (220).

19. Dispositif de fabrication selon l'une quelconque des revendications précédentes, **caractérisé en ce que** des paquets d'usinage CNC (68) simulés par le système de simulation (250, 260) respectif peuvent être transmis sur le système d'organisation de fabrication (220).

20. Dispositif de fabrication selon la revendication 18 ou 19, **caractérisé en ce que** le système d'organisation de fabrication (220) administre des paquets d'usinage CNC (68) transmis par le système de simulation (250, 260) respectif de la même manière que des paquets d'usinage CNC (68) transmis par l'au moins une commande de machine (214, 216).

21. Dispositif de fabrication selon l'une quelconque des revendications précédentes, **caractérisé en ce que** le système d'organisation de fabrication (220) reçoit de l'au moins une commande de machine (212, 214) des retours d'information (272) concernant le traitement du paquet d'usinage CNC (68) respectif dans ladite commande de machine.

22. Dispositif de fabrication selon l'une quelconque des revendications précédentes, **caractérisé en ce que** le système d'organisation de fabrication (220) reçoit du système de simulation (250, 260) respectif des retours d'information (272) concernant le traitement du paquet d'usinage CNC (68) respectif.

23. Dispositif de fabrication selon la revendication 21 ou 22, **caractérisé en ce que** les retours d'information (272) de l'au moins une commande de machine (212, 214) et les retours d'information du système de simulation (250, 260) respectif présentent une structure essentiellement identique.

24. Dispositif de fabrication selon l'une quelconque des revendications précédentes, **caractérisé en ce que** le système d'organisation de fabrication (220) de l'au moins une commande de machine (212, 214) transmet des instructions de commande (270).

25. Dispositif de fabrication selon l'une quelconque des revendications précédentes, **caractérisé en ce que** le système d'organisation de production (220) transmet au système de simulation (250, 260) respectif des instructions de commande (270).

26. Dispositif de fabrication selon la revendication 24 ou 25, **caractérisé en ce que** les instructions de commande (270) pour l'au moins une commande de machine (212, 214) et les instructions de commande (270) pour le système de simulation (250, 260) respectif présentent une structure essentiellement identique.

27. Dispositif de fabrication selon l'une quelconque des revendications précédentes, **caractérisé en ce que** le système d'organisation de fabrication (220) présente une mémoire de données (226) pour les paquets d'usinage CNC (68).

28. Dispositif de fabrication selon l'une quelconque des revendications précédentes, **caractérisé en ce que** les paquets d'usinage CNC (68) pour le programme d'organisation de fabrication (224) sont identifiables par un champ de propriétés comme étant non contrôlés ou contrôlés par simulation.

29. Dispositif de fabrication selon la revendication 28, **caractérisé en ce que** les paquets d'usinage CNC (68) pour le programme d'organisation de fabrication (224) sont identifiables par le champ de propriétés comme étant à production contrôlée.

30. Dispositif de fabrication selon l'une quelconque des revendications précédentes, **caractérisé en ce que** le système d'organisation de fabrication (220) administre les paquets d'usinage CNC (68) en lien avec les pièces à usiner.

31. Dispositif de fabrication selon l'une quelconque des revendications précédentes, **caractérisé en ce qu'**un panneau de commande de machine (80) est associé à la commande d'utilisation (60) du système de simulation.

32. Dispositif de fabrication selon la revendication 31, **caractérisé en ce que** le fonctionnement du programme d'utilisation (70) peut être commandé par l'intermédiaire de fonctions (92, 102, 112, 122) pouvant être appelées au moyen du panneau de commande de machine (80).

33. Dispositif de fabrication selon la revendication 32, **caractérisé en ce que** le panneau de commande de machine (80) présente des éléments de saisie (88) manuelle pour une activation de diverses fonctions (92, 102, 112, 122) du programme d'utilisation (70).

34. Dispositif de fabrication selon l'une quelconque des revendications 31 à 33, **caractérisé en ce que** le panneau de commande de machine (80) présente des éléments de saisie (88) manuelle servant à agir sur le paquet d'usinage CNC (68).

35. Dispositif de fabrication selon l'une quelconque des revendications 31 à 34, **caractérisé en ce que** le panneau de commande de machine (80) présente des éléments de saisie (88) manuelle servant à utiliser des fonctions de la commande d'action (10).

36. Dispositif de fabrication selon la revendication 35, **caractérisé en ce que** le panneau de commande de machine (80) comprend des éléments de saisie (88) manuelle pour le démarrage/l'arrêt d'au moins un programme partiel (20) dans la commande d'action (10).

37. Dispositif de fabrication selon l'une quelconque des revendications 31 à 36, **caractérisé en ce que** la commande d'utilisation (60) est couplée à un champ d'affichage (90) du panneau de commande de machine (80), et **en ce que** la commande d'utilisation (60) du programme d'utilisation (70) représente sur le champ d'affichage (90) des informations prévues aux fins de l'affichage pour un opérateur.

38. Dispositif de fabrication selon l'une quelconque des revendications 31 à 37, **caractérisé en ce que** le panneau de commande de machine est un panneau de commande de machine (80') virtuel représenté sur une unité de visualisation (160, 40').

39. Dispositif de fabrication selon la revendication 38, **caractérisé en ce que** les éléments de saisie (88') manuelle du panneau de commande de machine (80') virtuel peuvent être actionnés manuellement par un curseur (162) de l'unité de visualisation (160, 40').

40. Dispositif de fabrication selon l'une quelconque des revendications précédentes, **caractérisé en ce que** la fonction d'administration de programme (92) du programme d'utilisation (70) administre en lien avec les pièces à usiner des programmes partiels (20) du paquet d'usinage CNC (68).

41. Dispositif de fabrication selon l'une quelconque des revendications précédentes, **caractérisé en ce que** la fonction d'administration de programme (92) du programme d'utilisation (70) mémorise en lien avec les pièces à usiner des programmes partiels (20) du paquet d'usinage CNC (68).

42. Dispositif de fabrication selon l'une quelconque des revendications précédentes, **caractérisé en ce que** la fonction d'administration de programme (92) du programme d'utilisation (70) protège en lien avec les pièces à usiner des programmes partiels (20) du paquet d'usinage CNC (68).

43. Dispositif de fabrication selon l'une quelconque des revendications précédentes, **caractérisé en ce que** la fonction d'administration de programme (92) du programme d'utilisation (70) transmet des programmes partiels (20) du paquet d'usinage CNC (68) à la commande d'action (10) en lien avec les pièces à usiner.

44. Dispositif de fabrication selon l'une quelconque des revendications précédentes, **caractérisé en ce que** la fonction d'administration de programme (92) du programme d'utilisation (70) répartit sur divers canaux (22) de la commande d'action (10) et active en lien avec les pièces à usiner des programmes partiels (20) du paquet d'usinage CNC (68).

45. Dispositif de fabrication selon l'une quelconque des revendications précédentes, **caractérisé en ce que** le programme d'utilisation (70) comprend une fonction d'usinage de programme (102), à l'aide de laquelle le paquet d'usinage CNC (68) peut être modifié en accédant au moins à des parties de programme (20) du paquet d'usinage CNC (68).

46. Dispositif de fabrication selon la revendication 45, **caractérisé en ce que** la fonction d'usinage de programme (102) comprend un mode de création de programme (104).

47. Dispositif de fabrication selon la revendication 45 ou 46, **caractérisé en ce que** la fonction d'usinage de programme (102) comprend un mode de saisie (106) pour des valeurs de correction.

48. Dispositif de fabrication selon l'une quelconque des revendications 45 à 47, **caractérisé en ce que** la fonction d'usinage de programme (102) prend en charge la modification de programme en toute autonomie dans le paquet d'usinage CNC (68).

49. Dispositif de fabrication selon l'une quelconque des revendications 45 à 48, **caractérisé en ce que** la fonction d'usinage de programme (102) recharge les programmes partiels (20) présents dans la commande d'action (10) en toute autonomie dans la commande d'utilisation (60) aux fins de la modification.

50. Dispositif de fabrication selon l'une quelconque des revendications 45 à 49, **caractérisé en ce que** la fonction d'usinage de programme (102) comprend un mode de saisie (108) pour des outils (WZ).

51. Dispositif de fabrication selon l'une quelconque des revendications 45 à 50, **caractérisé en ce que** la fonction d'usinage de programme (102) comprend un mode de saisie (110) pour des corrections d'outil.

52. Dispositif de fabrication selon l'une quelconque des revendications précédentes, **caractérisé en ce que** le programme d'utilisation (70) comprend une fonction d'analyse (112).

53. Dispositif de fabrication selon la revendication 52, **caractérisé en ce qu'**un bloc NC usiné instantanément dans la commande d'action (10) peut être identifié dans un mode d'identification (114) de la fonction d'analyse (112).

54. Dispositif de fabrication selon la revendication 52 ou 53, **caractérisé en ce que** l'au moins un ordre de programme actif au moment t peut être affiché dans un mode d'affichage (116) de la fonction d'analyse (112).

55. Dispositif de fabrication selon l'une quelconque des revendications 52 à 54, **caractérisé en ce qu'**au moins un paramètre au moins d'une des unités d'usinage (46) virtuelles peut être affiché dans un mode d'affichage de paramètre (118) de la fonction d'analyse (112).

56. Dispositif de fabrication selon l'une quelconque des revendications précédentes, **caractérisé en ce que** le programme d'utilisation (70) correspond au programme d'utilisation de la machine-outil réelle.

57. Dispositif de fabrication selon la revendication 56, **caractérisé en ce que** le programme d'utilisation (70) servant à la communication avec le programme de commande (18) interagit avec un programme d'adaptation (140).

58. Dispositif de fabrication selon l'une quelconque des revendications précédentes, **caractérisé en ce que** le programme de commande (18) de la commande d'action (10) est un programme de commande étranger à la machine-outil.

59. Dispositif de fabrication selon la revendication 58, **caractérisé en ce que** le programme d'adaptation (140) adapte le programme d'utilisation (70) au programme de commande (18) étranger à la machine-outil.

60. Dispositif de fabrication selon l'une quelconque des revendications 1 à 59, **caractérisé en ce que** le programme de commande (18) de la commande d'action (10) comprend le programme de commande centrale (150) de la machine-outil afin de générer des ordres de commande (24).

61. Dispositif de fabrication selon la revendication 60, **caractérisé en ce que** la première unité de traitement de données (12) présente un environnement de programme (152), sur lequel le programme de commande centrale (150) de la machine-outil réelle fonctionne et génère des ordres de commande (24), qui correspondent aux ordres de commande de la machine-outil réelle.

62. Dispositif de fabrication selon la revendication 60 ou 61, **caractérisé en ce que** le programme d'adaptation (140') correspond au programme de communication de la commande d'utilisation (60) réelle de la machine-outil.

63. Dispositif de fabrication selon l'une quelconque des revendications précédentes, **caractérisé en ce que** la première unité de traitement de données (12) et la deuxième unité de traitement de données (32) fonctionnent avec le même processeur (64).

64. Dispositif de fabrication selon l'une quelconque des revendications précédentes, **caractérisé en ce que** la première, la deuxième et la troisième unité de traitement de données (12, 32, 62) fonctionnent avec le même processeur (64).

65. Dispositif de fabrication selon l'une quelconque des revendications précédentes, **caractérisé en ce que** la première unité de traitement de données (12) et/ou la deuxième unité de traitement de données (32) et/ou la troisième unité de traitement de données (62) sont des unités de traitement de données étrangères à la machine-outil.

66. Dispositif de fabrication selon l'une quelconque des revendications précédentes, **caractérisé en ce que** la troisième unité de traitement de données (62) utilise le processeur (64) associé à la commande d'utilisation (60) de la machine-outil réelle.

67. Dispositif de fabrication selon l'une quelconque des revendications précédentes, **caractérisé en ce que** la deuxième unité de traitement de données (32) utilise le processeur (64) associé à la commande d'utilisation (60) de la machine-outil réelle.

68. Dispositif de fabrication selon l'une quelconque des revendications précédentes, **caractérisé en ce que** la première unité de traitement de données (12) utilise le processeur (64) associé à la commande d'utilisation (60) de la machine-outil réelle.

69. Dispositif de fabrication selon l'une quelconque des revendications précédentes, **caractérisé en ce que** l'unité de visualisation (40) pour la représentation des unités d'usinage (46) virtuelles et l'unité de visualisation (160) pour la représentation du panneau de commande de machine (80') virtuel sont des unités séparées.

70. Dispositif de fabrication selon l'une quelconque des revendications précédentes, **caractérisé en ce que** l'unité de visualisation (40) pour la représentation des unités d'usinage (46) virtuelles et l'unité de visualisation pour la représentation du panneau de commande de machine (80') virtuel sont identiques.

71. Dispositif de fabrication selon la revendication 70, **caractérisé en ce que** la représentation des actions des unités d'usinage (46) virtuelles et la représentation du panneau de commande de machine (80') virtuel se font au moins en partie de manière superposée.

72. Procédé de fonctionnement d'un dispositif de fabrication pour des pièces à usiner, comprenant
au moins une zone de fabrication (202, 204), dans laquelle plusieurs machines-outils (206, 208) pourvues d'une commande de machine (212, 214) sont disposées, **caractérisé en ce qu'**un système d'organisation de fabrication (220) avec un programme d'organisation de fabrication (224) communique avec les commandes de machine (212, 214) des machines-outils (206, 208) par l'intermédiaire d'un chemin de communication (234), **en ce que** le programme d'organisation de fabrication (224) organise l'usinage de pièces à usiner sur les machines-outils (206, 208) de l'au moins une zone de fabrication (202, 204), des paquets d'usinage CNC (68) pour l'usinage de pièces à usiner étant fournis par le programme d'organisation de fabrication (224) à l'au moins une machine-outil (206, 208), **en ce qu'**est fourni, afin de faire fonctionner le dispositif de fabrication, au moins un procédé servant à faire fonctionner un système de simulation (250, 260), lequel interagit avec le programme d'organisation de fabrication (224), **en ce que** le procédé servant à faire fonctionner un système de simulation représente des actions d'unités d'usinage d'une des machines-outils, en particulier d'actions lors de l'usinage d'une pièce à usiner, conformément à un paquet d'usinage CNC (68) au moyen au moins d'une première unité de visualisation (40) sous la forme d'actions d'unités d'usinage (46) virtuelles d'une machine-outil (44) virtuelle, **en ce que** lors du procédé une commande d'action (10) détermine, avec un programme de commande (18) traitant des blocs CNC du paquet d'usinage CNC (68), des ordres de commande (24) pour des actions des unités d'usinage (46) virtuelles, **en ce que** lors du procédé, une commande de visualisation (30) représente, avec un programme de visualisation (38) à l'aide de données de configuration d'un modèle de machine (48) mémorisé et des ordres de commande (24) déterminés par la commande d'action (10), des actions des unités d'usinage (46) virtuelles sur la première unité de visualisation (40), **en ce qu'**une commande d'utilisation (60) comprenant un programme d'utilisation (70) fait fonctionner la commande d'action (10), et **en ce que** le programme d'utilisation (70) comprenant une fonction d'administration de programme (92) du paquet d'usinage CNC (68) mémorisé transmet, aux fins de la mise en oeuvre de ce dernier, à la commande d'action (10) au moins des parties de programme (20) de ce dernier en lien avec les pièces à usiner.

73. Procédé selon la revendication 72, **caractérisé en ce que** plusieurs zones de fabrication (202, 204) sont couplées au programme d'organisation de fabrication (224).

74. Procédé selon la revendication 72 ou 73, **caractérisé en ce que** le programme d'organisation de fabrication (224) coopère avec plusieurs systèmes de simulation (250, 260).

75. Procédé selon l'une quelconque des revendications 72 à 74, **caractérisé en ce que** le système de simulation (250, 260) est associé à une zone de fabrication (202, 204).

76. Procédé selon l'une quelconque des revendications 72 à 75, **caractérisé en ce que** respectivement au moins un des systèmes de simulation (250, 260) selon l'une quelconque des revendications 1 et 31 à 71 est associé à plusieurs zones de fabrication (202, 204).

77. Procédé selon l'une quelconque des revendications 72 à 76, **caractérisé en ce que** la communication entre le programme d'organisation de fabrication (224) et l'au moins une commande de machine (212, 214) et la communication entre le système d'organisation de fabrication (220) et le système de simulation (250, 260) respectif sont mises en oeuvre essentiellement de manière identique.

78. Procédé selon l'une quelconque des revendications 72 à 77, **caractérisé en ce que** des paquets d'usinage CNC (68) pour la simulation d'actions d'unités d'usinage (46) virtuelles sur une machine-outil (44) virtuelle sont fournis au système de simulation (250, 260) par le programme d'organisation de fabrication (224).

79. Procédé selon l'une quelconque des revendications 72 à 78, **caractérisé en ce qu'**un programme de communication d'organisation (240) est utilisé aux fins de la communication avec l'au moins une commande de machine (212, 214).

80. Procédé selon l'une quelconque des revendications 72 à 79, **caractérisé en ce qu'**un programme de communication d'organisation (240) est utilisé aux fins de la communication avec le système de simulation (250, 260).

81. Procédé selon la revendication 79 ou 80, **caractérisé en ce que** le programme de communication d'organisation (240) servant à la communication avec l'au moins une commande de machine (212, 214) est essentiellement identique au programme de communication d'organisation (240) servant à la communication avec l'au moins un système de simulation (250, 260).

82. Procédé selon l'une quelconque des revendications 72 à 81, **caractérisé en ce qu'**un programme de communication (242) servant à la communication avec le programme d'organisation de fabrication (224) est utilisé par la commande de machine (212, 214) respective.

83. Procédé selon l'une quelconque des revendications 72 à 82, **caractérisé en ce qu'**un programme de communication (242) servant à la communication avec le système d'organisation de fabrication (220) est utilisé par le système de simulation (250, 260).

84. Procédé selon la revendication 82 ou 83, **caractérisé en ce que** le programme de communication (242) du système de simulation (250, 260) respectif fonctionne avec des formats de données et des spécifications de données identiques à ceux du programme de communication (242) de la commande de machine (212, 214) respective.

85. Procédé selon la revendication 84, **caractérisé en ce que** le programme de communication (242) du système de simulation (250, 260) est essentiellement identique au programme de communication (242) de la commande de machine (212, 214) respective.

86. Procédé selon l'une quelconque des revendications 72 à 85, **caractérisé en ce que** des paquets d'usinage CNC (68) exécutés par les commandes de machine (212, 214) sont transmis au programme d'organisation de fabrication (224).

87. Procédé selon l'une quelconque des revendications 72 à 86, **caractérisé en ce que** des paquets d'usinage CNC (68) simulés par le système de simulation (250, 260) respectif sont transférés au programme de fabrication (224).

88. Procédé selon la revendication 86 ou 87, **caractérisé en ce que** des paquets d'usinage CNC (68) transmis par le système de simulation (250, 260) respectif sont administrés par le programme d'organisation de fabrication (224) de la même manière que des paquets d'usinage CNC (68) transmis par l'au moins une commande de machine (214, 216).

89. Procédé selon l'une quelconque des revendications 72 à 88, **caractérisé en ce que** des retours d'information (272) concernant l'exécution du paquet d'usinage CNC (68) respectif sont transférés par l'au moins une commande de machine (212, 214) au programme d'organisation de fabrication (224).

90. Procédé selon l'une quelconque des revendications 72 à 89, **caractérisé en ce que** des retours d'information (272) concernant l'exécution du paquet d'usinage CNC (68) respectif sont transférés par le système de simulation (250, 260) respectif au programme d'organisation de fabrication (224).

91. Procédé selon la revendication 89 ou 90, **caractérisé en ce que** les retours d'information (272) de l'au moins une commande de machine (212, 214) et les retours d'information du système de simulation (250, 260) respectif présentent une structure essentiellement identique.

92. Procédé selon l'une quelconque des revendications 72 à 91, **caractérisé en ce que** des instructions de commande (270) sont transmises par le programme d'organisation de fabrication (224) de l'au moins une commande de machine (212, 214).

93. Procédé selon l'une quelconque des revendications 72 à 92, **caractérisé en ce que** des instructions de commande (270) sont transmises par le programme d'organisation de fabrication (224) au système de simulation (250, 260) respectif.

94. Procédé selon la revendication 91 ou 92, **caractérisé en ce que** les instructions de commande (270) pour l'au moins une commande de machine (212, 214) et les instructions de commande (270) pour le système de simulation (250, 260) respectif présentent une structure essentiellement identique.

95. Procédé selon l'une quelconque des revendications 72 à 94, **caractérisé en ce que** les paquets d'usinage CNC (68) pour le programme d'organisation de fabrication (224) sont identifiés par un champ de propriétés comme étant non contrôlés ou contrôlés par simulation.

96. Procédé selon la revendication 95, **caractérisé en ce que** les paquets d'usinage CNC (68) pour le programme d'organisation de fabrication (224) sont identifiés par le champ de propriétés comme étant à production contrôlée.

97. Procédé selon l'une quelconque des revendications 72 à 96, **caractérisé en ce que** les paquets d'usinage CNC (68) sont administrés en lien avec les pièces à usiner par le programme d'organisation de fabrication (224).

98. Procédé selon l'une quelconque des revendications précédentes, **caractérisé en ce que** le fonctionnement du programme d'utilisation (70) est commandé par l'intermédiaire de fonctions (92, 102, 112, 122) pouvant être appelées au moyen d'un panneau de commande de machine (80).

99. Procédé selon l'une quelconque des revendications précédentes, **caractérisé en ce que** diverses fonctions (92, 102, 112, 122) du programme d'utilisation (70) sont activées par l'intermédiaire d'éléments de saisie (88) manuelle du panneau de commande de machine (80).

100. Procédé selon l'une quelconque des revendications précédentes, **caractérisé en ce qu'**un effet sur le paquet d'usinage CNC (68) se fait par l'intermédiaire d'éléments de saisie (88) manuelle.

101. Procédé selon l'une quelconque des revendications précédentes, **caractérisé en ce que** des fonctions de la commande d'action (10) sont utilisées par l'intermédiaire d'éléments de saisie (88) manuelle.

102. Procédé selon la revendication 101, **caractérisé en ce qu'**un démarrage/arrêt d'au moins un programme partiel (20) se fait dans la commande d'action (10) par l'intermédiaire d'éléments de saisie (88) manuelle.

103. Procédé selon l'une quelconque des revendications précédentes, **caractérisé en ce que** la commande d'utilisation (60) du programme d'utilisation (70) représente sur un champ d'affichage (90) du panneau de commande de machine (80) des informations destinées à l'affichage pour un opérateur.

104. Procédé selon l'une quelconque des revendications précédentes, **caractérisé en ce que** le panneau de commande de machine est représenté en tant que panneau de commande de machine (80') virtuel sur une unité de visualisation (160, 40').

105. Procédé selon la revendication 104, **caractérisé en ce que** les éléments de saisie (88') manuelle du panneau de commande de machine (80') virtuel sont actionnés manuellement par un curseur (162) de l'unité de visualisation (160, 40').

106. Procédé selon l'une quelconque des revendications précédentes, **caractérisé en ce que** des programmes partiels (20) du paquet d'usinage CNC (68) sont administrés en lien avec les pièces à usiner par la fonction d'administration de programme (92) du programme d'utilisation (70).

107. Procédé selon l'une quelconque des revendications précédentes, **caractérisé en ce que** des programmes partiels (20) du paquet d'usinage CNC (68) sont mémorisés en lien avec les pièces à usiner par la fonction d'administration de programme (92) du programme d'utilisation (70).

108. Procédé selon l'une quelconque des revendications précédentes, **caractérisé en ce que** des programmes partiels (20) du paquet d'usinage CNC (68) sont protégés en lien avec les pièces à usiner par la fonction d'administration de programme (92) du programme d'utilisation (70).

109. Procédé selon l'une quelconque des revendications précédentes, **caractérisé en ce que** des programmes partiels (20) du paquet d'usinage CNC (68) sont transmis en lien avec les pièces à usiner à la commande d'action (10) par la fonction d'administration de programme (92) du programme d'utilisation (70).

110. Procédé selon l'une quelconque des revendications précédentes, **caractérisé en ce que** des programmes partiels (20) du paquet d'usinage CNC (68) sont répartis sur divers canaux (22) de la commande d'action (10) et sont activés, en lien avec les pièces à usiner, par la fonction d'administration de programme (92) du programme d'utilisation (70).

111. Procédé selon l'une quelconque des revendications précédentes, **caractérisé en ce que** le programme d'utilisation (70) comprend une fonction d'usinage de programme (102), à l'aide de laquelle le paquet d'usinage CNC (68) peut être modifié par un accès au moins à des parties de programme (20) du paquet d'usinage CNC (68).

112. Procédé selon la revendication 111, **caractérisé en ce qu'**au moins des parties de programme (20) sont créées avec un mode de création de programme (104) de la fonction d'usinage de programme (102).

113. Procédé selon la revendication 111 ou 112, **caractérisé en ce que** des valeurs de correction sont saisies avec un mode de saisie (106) de la fonction d'usinage de programme (102).

114. Procédé selon l'une quelconque des revendications 111 à 113, **caractérisé en ce qu'**une modification de programme est entreprise en toute autonomie dans le paquet d'usinage CNC (68) par la fonction d'usinage de programme (102).

115. Procédé selon l'une quelconque des revendications 111 à 114, **caractérisé en ce que** les programmes partiels (20) présents dans la commande d'action (10) sont rechargés en toute autonomie dans la commande d'utilisation (60) aux fins de la modification par la fonction d'usinage de programme (102).

116. Procédé selon l'une quelconque des revendications 111 à 115, **caractérisé en ce que** la saisie est effectuée avec un mode de saisie (108) de la fonction d'usinage de programme (102).

117. Procédé selon l'une quelconque des revendications 111 à 116, **caractérisé en ce que** des corrections d'outil sont effectuées avec un mode de saisie (110) de la fonction d'usinage de programme (102).

118. Procédé selon l'une quelconque des revendications précédentes, **caractérisé en ce qu'**une analyse de programme est effectuée avec une fonction d'analyse (112) du programme d'utilisation (70).

119. Procédé selon la revendication 118, **caractérisé en ce qu'**un bloc NC usiné de manière instantanée dans la commande d'action (10) est identifié avec un mode d'identification (114) de la fonction d'analyse (112).

120. Procédé selon la revendication 118 ou 119, **caractérisé en ce que** l'au moins un ordre de programme actif au moment t est affiché avec un mode d'affichage (116) de la fonction d'analyse (112).

121. Procédé selon l'une quelconque des revendications 118 à 120, **caractérisé en ce qu'**au moins un paramètre au moins d'une des unités de traitement (46) virtuelles est affiché avec un mode d'affichage de paramètre (118) de la fonction d'analyse (112).

122. Procédé selon l'une quelconque des revendications précédentes, **caractérisé en ce que** le programme d'utilisation (70) correspond au programme d'utilisation de la machine-outil réelle.

123. Procédé selon la revendication 122, **caractérisé en ce que** le programme d'utilisation (70) communique avec le programme de commande (18) par l'intermédiaire d'un programme d'adaptation (140).

124. Procédé selon l'une quelconque des revendications précédentes, **caractérisé en ce que** le programme de commande (18) de la commande d'action (10) est un programme de commande étranger à la machine-outil.

125. Procédé selon l'une quelconque des revendications précédentes, **caractérisé en ce que** le programme de commande (18) de la commande d'action (10) fonctionne avec le programme de commande centrale (150) de la machine-outil réelle servant à générer des ordres de commande (24).

126. Procédé selon la revendication 125, **caractérisé en ce que** le programme de commande (18') comprend un environnement de programme (152), sur lequel le programme de commande centrale (150) de la machine-outil réelle fonctionne et génère des ordres de commande (24), qui correspondent aux ordres de commande de la machine-outil réelle.

127. Procédé selon l'une quelconque des revendications précédentes, **caractérisé en ce que** le programme de commande (70) s'exécute sur le processeur (64) associé à la commande d'utilisation (60) de la machine-outil réelle.

128. Procédé selon l'une quelconque des revendications précédentes, **caractérisé en ce que** le programme de visualisation (38) s'exécute sur le processeur (64) associé à la commande d'utilisation (60) de la machine-outil réelle.

129. Procédé selon l'une quelconque des revendications précédentes, **caractérisé en ce que** le programme de commande (18') s'exécute sur le processeur (64) associé à la commande d'utilisation (60) de la machine-outil réelle.

130. Procédé selon l'une quelconque des revendications précédentes, **caractérisé en ce que** des actions des unités d'usinage (46) virtuelles et le panneau de commande de machine (80') virtuel sont représentés au moins en partie de manière superposée.
